# EUROPÄISCHE PATENTANMELDUNG

(11) **EP 4 431 208 A1**
(43) Veröffentlichungstag der Anmeldung: **18.09.2024**
(21) Anmeldenummer: 23178564.3
(22) Anmeldetag: 11.06.2023
(51) Int. Cl.: B22F 12/30, B29C 64/245, B33Y 30/00, B22F 12/33, B22F 12/88, B29C 64/379, B33Y 80/00

(54) **WERKSTÜCKTRÄGER SOWIE VORRICHTUNG ZUR HERSTELLUNG VON DREIDIMENSIONALEN SIEBDRUCKWERKSTÜCKEN**

(30) Priorität: 11.03.2023 EP 23161355; 11.03.2023 EP 23161356; 11.03.2023 EP 23161357; 11.03.2023 DE 202023101178 U; 11.03.2023 DE 202023101179 U; 11.03.2023 DE 202023101180 U
(71) Anmelder: Exentis Knowledge GmbH, 5608 Stetten AG (CH)
(72) Erfinder: Reichenbach, Michael, 79183 Waldkirch (DE); Bürklin, Uwe, 79312 Emmendingen (DE)
(74) Vertreter: Wenzel Nemetzade Warthmüller Patentanwälte Part mbB

(57) **Zusammenfassung**

Werkstückträger (10), insbesondere für die Herstellung dreidimensionaler Siebdruckwerkstücke, mit wenigstens einem Druckbett (12), das eine zu bedruckende Druckfläche (14) aufweist, und mit einer das Druckbett tragenden und gesondert von dem Druckbett ausgebildeten Tragstruktur (16), wobei die Tragstruktur einen Tragboden (18) und zumindest einen Anschlag (20) für das Druckbett aufweist, wobei das Druckbett auf dem Tragboden angeordnet ist und wobei das Druckbett in der auf dem Tragboden angeordneten Stellung in zumindest einer seitlichen Richtung an dem Anschlag zur Anlage bringbar ist..

## Beschreibung

Die vorliegende Erfindung betrifft einen Werkstückträger, insbesondere für die Herstellung von dreidimensionalen Siebdruckwerkstücken. Ebenso betrifft die vorliegende Erfindung eine Tragstruktur für einen solchen Werkstückträger sowie ein Förderfahrzeug mit einem solchen Werkstückträger. Schließlich betrifft die Erfindung auch eine Vorrichtung zur Herstellung von dreidimensionalen Siebdruckwerkstücken mit einem solchen Werkstückträger. Die vorliegende Erfindung betrifft ebenfalls ein Verfahren zur Herstellung eines dreidimensionalen Siebdruckwerkstücks, die Verwendung eines Werkstückträgers sowie ein pharmazeutisches Erzeugnis, hergestellt unter Verwendung eines solchen Werkstückträgers.

Für die Herstellung von dreidimensionalen Siebdruckwerkstücken werden in bekannter Weise Werkstückträger verwendet. Beispielsweise aus dem Stand der Technik in der Druckschrift EP 3725523 A1 ist eine Vorrichtung zur Herstellung von dreidimensionalen Siebdruckwerkstücken bekannt, in der eine Mehrzahl von Werkstückträgern zwischen einer Druckeinrichtung und weiteren Stationen der Vorrichtung bewegt werden. Auf den Werkstückträgern können in mehreren Druckvorgängen Siebdruckwerkstücke schichtweise aufgebaut werden, nämlich durch den Druck mehrerer Schichten im Wege des dreidimensionalen Siebdrucks.

Die zu druckenden Werkstücke kommen im Zuge der Fertigung somit in Kontakt mit dem jeweiligen Werkstückträger beziehungsweise der jeweiligen Druckfläche des Werkstückträgers. Aus diesem Grund kann das Erfordernis bestehen, für den Werkstückträger einen geeigneten Werkstoff auszuwählen beziehungsweise die nähere Ausgestaltung des Werkstückträgers im Hinblick auf die jeweils herzustellenden Werkstücke beziehungsweise zu druckenden Materialien vorzunehmen.

Hierdurch kann sich ein verhältnismäßig hoher Kostenaufwand für die Herstellung der jeweiligen Werkstückträger ergeben. Zudem ist die Einsatzflexibilität derart angepasst hergestellter Werkstückträger begrenzt. Die Nutzung für andere Einsatzbedingungen beziehungsweise für die Herstellung von Siebdruckwerkstücken aus anderen Materialen kann - wenn überhaupt - nur eingeschränkt erfolgen.

Schließlich kann die Ausgestaltung oder Anpassung des Werkstückträgers im Hinblick auf das jeweils herzustellende Siebdruckwerkstück beziehungsweise an den jeweils zu druckenden Werkstoff des Siebdruckwerkstücks nachteilige Auswirkungen auf prozesstechnische Abläufe beim dreidimensionalen Siebdruck mit sich bringen. Je nach ausgewähltem Werkstoff für den Werkstückträger kann dieser eine nur eingeschränkte Stabilität aufweisen und somit kann eine Handhabung nur unter größerem Aufwand vorgenommen werden.

Vor dem oben dargelegten Hintergrund bestand die Aufgabe der vorliegenden Erfindung darin, einen Werkstückträger anzugeben, der mit verringertem Kostenaufwand herstellbar ist, eine geeignete Anpassbarkeit beziehungsweise Ausgestaltung für die jeweils zu erzeugenden Siebdruckwerkstücke ermöglicht und ein hohes Maß an Einsatzflexibilität und Handhabbarkeit sicherstellt.

Ebenso bestand die Aufgabe darin, eine Tragstruktur für einen solchen Werkstückträger, ein Förderfahrzeug mit einem Werkstückträger sowie auch eine Vorrichtung zur Herstellung von dreidimensionalen Siebdruckwerkstücken anzugeben. Schließlich bestand die Aufgabe auch darin, ein Verfahren zur Herstellung eines dreidimensionalen Siebdruckwerkstücks, die Verwendung eines Werkstückträgers sowie ein pharmazeutisches Erzeugnis anzugeben.

In Bezug auf den Werkstückträger ist diese Aufgabe durch den Gegenstand des Anspruchs 1 gelöst worden. Eine Tragstruktur für einen solchen Werkstückträger ist in Anspruch 12 angegeben. Eine Vorrichtung zur Herstellung von dreidimensionalen Siebdruckwerkstücken ist Gegenstand von Anspruch 13. Ein Verfahren zu Herstellung eines dreidimensionalen Siebdruckwerkstücks ist Gegenstand von Anspruch 14. Ein pharmazeutisches Erzeugnis ist in Anspruch 15 angegeben. Ferner wird nachfolgend ein erfindungsgemäßes Förderfahrzeug sowie auch eine erfindungsgemäße Verwendung eines Werkstückträgers erläutert. Vorteilhafte Ausgestaltungen sind Gegenstand der abhängigen Ansprüche und werden ebenfalls nachfolgend erläutert.

Ein Werkstückträger, insbesondere für die Herstellung dreidimensionaler Siebdruckwerkstücke, ist ausgestattet mit wenigstens einem Druckbett, das eine zu bedruckende Druckfläche aufweist, und mit einer das Druckbett tragenden und gesondert von dem Druckbett ausgebildeten Tragstruktur. Erfindungsgemäß weist die Tragstruktur einen Tragboden und zumindest einen Anschlag für das Druckbett auf, wobei das Druckbett auf dem Tragboden angeordnet ist und wobei das Druckbett in der auf dem Tragboden angeordneten Stellung in zumindest einer seitlichen Richtung an dem Anschlag zur Anlage bringbar ist.

Bei dem Druckbett und der Tragstruktur handelt es sich erfindungsgemäß also um voneinander gesonderte beziehungsweise unabhängige Komponenten. Auf diese Weise kann das Druckbett, welches eine zu bedruckende Druckfläche aufweist, besonders im Hinblick auf die jeweils zu herzustellenden Siebdruckwerkstücke gefertigt sein. Insbesondere kann die Materialauswahl des Druckbetts im Hinblick auf die jeweils herzustellenden Siebdruckwerkstücke vorgenommen werden.

Erfindungsgemäß kann das Druckbett in erster Linie aus einem Werkstoff hergestellt sein, der sich für das spätere Bedrucken mit den jeweiligen Druckwerkstoffen oder Druckpasten im Wege des dreidimensionalen Siebdrucks besonders eignet. Mithin kann die Materialauswahl des Druckbetts unter Berücksichtigung der jeweils zu fertigenden Siebdruckwerkstücke beziehungsweise des jeweiligen Materials der zu fertigenden Siebdruckwerkstücke erfolgen. Gleichzeitig lässt sich das Druckbett mit einer verhältnismäßig einfachen Formgebung realisieren, sodass der fertigungstechnische Aufwand für das Druckbett geringgehalten werden kann.

Demgegenüber kann die Tragstruktur vornehmlich im Hinblick auf das Halten beziehungsweise Tragen des Druckbetts ausgebildet sein. Es besteht die Möglichkeit, die Tragstruktur unabhängig von dem Druckbett und damit besonders kostengünstig und gleichzeitig robust herzustellen. Insbesondere kann die Fertigung der Tragstruktur frei von Material- oder Werkstoffanforderungen erfolgen, die durch die jeweils zu fertigenden Siebdruckwerkstücke vorgegeben sein können. Es ergibt sich hierdurch eine insgesamt höhere Flexibilität in dem Gesamtaufbau des Werkstückträgers. Bei einer robusten Konzeption der Tragstruktur ergeben sich zudem vereinfachte Handhabungsmöglichkeiten für den gesamten Werkstückträger. Eine verringerte Gefahr von Beschädigungen ist die Folge.

Durch die gesonderte Ausbildung des Druckbetts sowie der Tragstruktur kann ferner mit verhältnismäßig geringem Aufwand ein Austausch des jeweiligen Druckbetts erfolgen, insbesondere im Hinblick auf sich ändernde Fertigungsbedingungen. Es ergibt sich auf diese Weise eine vorteilhafte nachträgliche Anpassbarkeit des Werkstückträgers. Die Einsatzflexibilität kann auf diese Weise weiter verbessert werden.

Zudem kann bei einer gesonderten Ausbildung des Druckbetts eine Reinigung desselben mit nur geringem Aufwand bewerkstelligt werden, ohne dass der gesamte Werkstückträger beziehungsweise zusätzlich auch die Tragstruktur des Werkstückträgers einer Reinigung zugeführt werden muss.

Schließlich wird durch die erfindungsgemäße Ausgestaltung der Tragstruktur mit zumindest einem Anschlag für das Druckbett sichergestellt, dass das Druckbett mit nur geringem Aufwand in einer präzisen vordefinierten Lage auf der Tragstruktur angeordnet werden kann. Die präzise Positionierung des Druckbetts auf der Tragstruktur wird durch Vorsehen zumindest eines Anschlags mit einem besonders geringen Handhabungsaufwand sichergestellt. Es ergibt sich hiermit eine besonders hohe Betriebssicherheit im Einsatz des jeweiligen Werkstückträgers.

Unter dreidimensionalem Siebdruck kann vorliegend in besonders bevorzugter Weise ein additives Fertigungsverfahren verstanden werden, bei dem eine pulverbasierte Suspension mithilfe eines Rakels durch eine feste Druckmaske auf ein Substrat übertragen und getrocknet wird. Diese Vorgehensweise kann mehrmals wiederholt werden, bis die jeweils gewünschte Bauteilhöhe oder Bauteilform erreicht ist. In einem abschließenden Prozessschritt kann das so erzeugte Bauteil gesintert werden. Hierdurch kann ein Siebdruckwerkstück entstehen.

Ebenso kann unter dreidimensionalem Siebdruck vorliegend in besonders bevorzugter Weise ein additives Fertigungsverfahren verstanden werden, bei dem eine pulverbasierte Suspension mithilfe eines Rakels durch eine feste Druckmaske auf ein Substrat übertragen und getrocknet wird, wobei bereits durch einen einmaligen Druck die jeweils gewünschte Bauteilhöhe oder Bauteilform erreicht wird. In einem abschließenden Prozessschritt kann ein auf diese Weise erzeugtes Bauteil gesintert werden und ein Siebdruckwerkstück entstehen. Soweit vorliegend von mehreren Druckvorgängen die Rede ist, kann anstelle dessen bereits ein Druckvorgang ausreichend und geeignet sein.

Unter Siebdruckwerkstück kann vorliegend in bevorzugter Weise ein Werkstück beziehungsweise ein dreidimensionales Druckerzeugnis verstanden werden, das einem Sinterschritt zu unterziehen ist, beziehungsweise unterzogen worden ist. Dies betrifft insbesondere Werkstücke aus einem Metall, einer Keramik, einem Glasmaterial und/oder einem Kunststoffmaterial. Insbesondere kommen hierzu Legierungen aus Stahl, Nickel, Kupfer, Titan und/oder Keramiklegierungen in Betracht.

Druckerzeugnisse aus Kunststoffmaterialien können durch die Bezeichnung "dreidimensionales Siebdruckwerkstück" ausgeschlossen oder mitumfasst sein. Insbesondere besteht auch die Möglichkeit, gedruckte Werkstücklagen aus Kunststoffmaterial einem Sinterschritt zu unterziehen.

Unter Siebdruckwerkstück kann vorliegend ebenfalls ein Werkstück beziehungsweise ein dreidimensionales Druckerzeugnis verstanden werden, das frei von einem Sinterschritt hergestellt worden ist beziehungsweise frei von einem Sinterschritt fertigstellbar ist oder fertiggestellt wird. Mithin kann eine abschließende Aushärtung von Druckschichten auch frei von Sinterschritten erfolgen. Die Aushärtung eines Siebdruckwerkstücks kann in vorteilhafter Weise auch durch UV-Härtung und/oder durch eine Polymerisationsreaktion und/oder durch Trocknung, insbesondere durch Konvektionstrocknung, erfolgen. Eine derartige Aushärtung kann insbesondere dann bevorzugt vorgenommen werden, wenn eine abschließende Aushärtung von Druckschichten frei von Sinterschritten erfolgen soll.

Bei einem Siebdruckwerkstück im Sinne der vorliegenden Erfindung kann es sich ferner um ein pharmazeutisches Erzeugnis und/oder um ein biologisches Erzeugnis handeln. Solche Siebdruckwerkstücke können unter anderem aus pharmazeutischen Pulvermaterialien und/oder Pulvergemischen und/oder Granulaten und/oder aus biologischen Materialien hergestellt sein. Insbesondere können pharmazeutische Erzeugnisse und/oder biologische Erzeugnisse frei von Sinterschritten fertiggestellt beziehungsweise für die jeweilige Anwendung ausreichend ausgehärtet sein.

Siebdruckwerkstücke hergestellt aus pharmazeutischen Pulvermaterialien und/oder Pulvergemischen und/oder Granulaten können Arzneistoffe, Wirkstoffe, Hilfsstoffe, insbesondere Füllmittel und/oder Bindemittel und/oder Sprengmittel und/oder Gleitmittel, aufweisen.

Gemäß der vorliegenden Lehre kann ein Werksstückträger, insbesondere die Druckfläche des Druckbetts, für das unmittelbare Bedrucken vorgesehen und/oder ausgebildet sein. Ein Werkstückträger beziehungsweise das Druckbett eines solchen Werkstückträgers kann mithin als unmittelbare Druckunterlage beziehungsweise zur Bereitstellung einer zu bedruckenden Druckfläche vorgesehen und/oder innerhalb einer nachfolgend beschriebenen Vorrichtung zur Herstellung von dreidimensionalen Siebdruckwerkstücken, insbesondere einer 3D-Siebdruckanlage, angeordnet oder anordenbar sein.

Bei einem Siebdruckwerkstück kann es sich gemäß der vorliegenden Erfindung um ein Werkstück handeln, das durch dreidimensionalen Siebdruck in einem oder in mehreren Druckvorgängen auf dem Werkstückträger aufgebaut wird. Dabei handelt es sich bei dem Siebdruckwerkstück insbesondere um ein Werkstück, welches nach Abschluss des Druckvorgangs und/oder nach Abschluss eines sich an den Druckvorgang anschließenden Sintervorgangs wieder von dem Werkstückträger, insbesondere von dem Druckbett des Werkstückträgers, lösbar ist, insbesondere zerstörungsfrei lösbar ist.

Zwischen etwaigen Druckvorgängen für ein Siebdruckwerkstück kann der jeweilige Werkstückträger von dem Drucktisch beziehungsweise von der Drucktischplatte einer Vorrichtung zur Herstellung von dreidimensionalen Siebdruckwerkstücken, insbesondere einer 3D-Siebdruckanlage, gelöst werden beziehungsweise von dieser lösbar sein. Die einzelnen Schichten eines Siebdruckwerkstücks - bei mehrschichtigem Aufbau - können zwischen zwei aufeinanderfolgenden Druckvorgängen in einer von dem jeweiligen Drucktisch beziehungsweise von der Drucktischplatte der Vorrichtung entfernten Stellung getrocknet werden.

Gemäß einer bevorzugten Ausgestaltung der vorliegenden Erfindung kann der Werkstückträger für die Produktion unter Reinraumbedingungen ausgebildet und/oder eingerichtet sein. Insbesondere kann der Werkstückträger und/oder die Vorrichtung für die Produktion unter Reinraumbedingungen gemäß den Reinraumklassen A, B, C und/oder D nach EU-GMP ausgebildet und/oder eingerichtet sein.

Weiter bevorzugt kann ein erfindungsgemäßer Werkstückträger zur Herstellung von Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen Forschung ausgebildet und/oder eingerichtet sein.

Ebenso kann ein erfindungsgemäßer Werkstückträger zur Herstellung von Siebdruckwerkstücken für den Einsatz und/die Anwendung als medizinische und/oder pharmazeutische Produkte, Implantate und/oder sterile Produkte und/oder Medikamente und/oder für den Einsatz und/die Anwendung als Tabletten zur Wirkstoffverabreichung ausgebildet und/oder eingerichtet sein.

Gemäß einer bevorzugten Ausgestaltung des Werkstückträgers kann das Druckbett an der Tragstruktur befestigt sein. Das Druckbett kann insbesondere in der auf dem Tragboden angeordneten und an der Tragstruktur befestigten Stellung in einer seitlichen Richtung an dem zumindest einen Anschlag der Tragstruktur anliegen. Durch seine solche Ausgestaltung kann die Gefahr verringert werden, dass sich das Druckbett unbeabsichtigt von der Tragstruktur löst. Es ergibt sich eine insgesamt hohe Positionssicherheit für das Druckbett auf der Tragstruktur.

Eine Befestigung des Druckbetts an der Tragstruktur kann in vorteilhafter Weise dazu ausgebildet und/oder vorgesehen sein, zumindest während eines Druckvorgangs für ein Siebdruckwerkstück und/oder zwischen etwaigen Druckvorgängen für ein Siebdruckwerkstück aufrechterhalten zu bleiben. Weiter bevorzugt kann eine Befestigung des Druckbetts an der Tragstruktur in vorteilhafter Weise dazu ausgebildet und/oder vorgesehen sein, während sämtlicher Druckvorgänge und/oder zwischen sämtlichen Druckvorgängen für ein Siebdruckwerkstück aufrechterhalten zu bleiben. Im Zuge der Fertigung von Siebdruckwerkstücken innerhalb einer 3D-Siebdruchankalge kann der Werkstückträger mithin als bauliche Einheit gehandhabt und innerhalb der jeweiligen Anlage entsprechend befördert und/oder positioniert werden.

Gemäß einer weiter bevorzugten Ausgestaltung kann die Tragstruktur eine Mehrzahl von Anschlägen für das Druckbett aufweisen. Das Druckbett kann in der auf dem Tragboden angeordneten Stellung in mehreren seitlichen Richtungen an mehreren Anschlägen zur Anlage bringbar sein. Es kann auf diese Weise in mehreren seitlichen Richtungen eine hohe Positionsgenauigkeit mit nur geringem Handhabungsaufwand sichergestellt werden.

Unter seitlicher Richtung kann erfindungsgemäß insbesondere eine Richtung verstanden werden, die sich parallel zu einer durch die zu bedruckende Druckfläche gebildete Ebene erstreckt. Entlang einer solchen Ebene kann das Druckbett in besonders bevorzugter Weise in mehreren seitlichen Richtungen an mehreren beziehungsweise unterschiedlichen Anschlägen zur Anlage bringbar sein. Die Positionierung des Druckbetts entlang der durch die Druckfläche gebildete Ebene kann somit mit besonders hoher Genauigkeit und Handhabungssicherheit erfolgen.

Gemäß einer weiter bevorzugten Ausgestaltung können mehrere Anschläge der Tragstruktur durch einen einzigen Formkörper gebildet sein. Dies kann mit verhältnismäßig geringem Fertigungsaufwand bewerkstelligt werden. Zudem kann die Ausgestaltung durch einen einzigen Formkörper mit einem besonders robusten Aufbau umgesetzt werden.

Gemäß einer weiter bevorzugten Ausgestaltung kann der Anschlag als Seitenbegrenzung für das Druckbett ausgebildet sein. Eine Mehrzahl von Anschlägen können mehrere Seitenbegrenzungen für unterschiedliche Seiten des Druckbetts bilden. Durch eine Seitenbegrenzung kann das Druckbett mit besonders hoher Sicherheit beziehungsweise genauer Ausrichtung zur Anlage gebracht und damit in der seitlichen Position festgelegt werden.

Es kann besonders von Vorteil sein, wenn der zumindest eine Anschlag zur flächigen Anlage des Druckbetts in einer seitlichen Richtung ausgebildet ist, insbesondere an einer Anlagefläche des Anschlags. Hierzu kann an dem Druckbett in vorteilhafter Weise eine korrespondierend ausgebildete Seitenfläche oder ein korrespondierend ausgebildeter Seitenflächenabschnitt vorgesehen sein. Ein unerwünschtes Verkippen oder die Einnahme unerwünscht verdrehter Stellungen des Druckbetts relativ zur Tragstruktur lässt sich auf diese Weise mit besonders hoher Sicherheit vermeiden. Es ist ferner möglich, dass mehrere Anschläge zur flächigen Anlage des Druckbetts in einer seitlichen Richtung vorgesehen sind, wodurch die Positioniersicherheit weiter verbessert werden kann.

Ebenso ist es möglich, dass der Anschlag zur punktuellen Anlage des Druckbetts in einer seitlichen Richtung ausgebildet ist. Ein solcher Anschlag lässt sich mit nur geringem Aufwand bereitstellen. Es ist ferner möglich, dass mehrere Anschläge zur punktuellen Anlage des Druckbetts in einer seitlichen Richtung vorgesehen sind. Mithin kann bei einer solchen Ausgestaltung das Druckbett in einer seitlichen Richtung an mehreren Anschlägen punktuell zur Anlage gebracht werden. Auch durch eine solche Ausgestaltung lässt sich eine hohe Positioniersicherheit und Positioniergenauigkeit für das Druckbett erzielen. Die Ausgestaltung des Anschlags für die punktuelle Anlage des Druckbetts eignet sich beispielsweise auch bei grö-ßeren Fertigungstoleranzen des Druckbetts. Unabhängig von der Fertigungsgenauigkeit der Seitenflächen des Druckbetts kann eine instabile beziehungsweise kippelnde Anlageposition des Druckbetts an den Anschlägen dadurch verhindert werden.

Gemäß einer weiter bevorzugten Ausgestaltung kann zwischen einem Seitenflächenabschnitt des Druckbetts und der Tragstruktur ein Freistellungsabschnitt ausgebildet sein. Entlang eines solches Freistellungsabschnitts gelangt die Seitenflächenabschnitt des Druckbetts nicht in Kontakt mit einem Anschlag oder einer sonstigen Kontaktfläche der Tragstruktur. Ein solcher Freistellungsabschnitt kann sich insbesondere zwischen zwei Anschlägen erstrecken, die einer Seitenfläche des Druckbetts zugeordnet sind. Ein Freistellungsabschnitt kann insbesondere als Spalt zwischen einer Seitenfläche des Druckbett und der Tragstruktur ausgebildet sein. Durch einen solchen Freistellungsabschnitt können Fertigungstoleranzen des Druckbetts und/oder der Tragstruktur in geeigneter Weise ausgeglichen werden. Ein instabile beziehungsweise kippelnde Anlageposition des Druckbetts an den Anschlägen kann auch auf diese Weise geeignet verhindert werden.

Gemäß einer weiter bevorzugten Ausgestaltung kann sich der Anschlag relativ zum Tragboden entlang einer Dickenrichtung beziehungsweise Höhenrichtung der Tragstruktur und/oder entlang einer Dickenrichtung beziehungsweise Höhenrichtung des Druckbetts erstrecken. Bei einer Dickenrichtung beziehungsweise Höhenrichtung kann es sich um eine Richtung handeln, die mit einer seitlichen Richtung einen Winkel einschließt, insbesondere einen rechten Winkel. In einer auf dem Tragboden angeordneten Stellung des Druckbetts kann auf diese Weise mit nur geringem konstruktivem Aufwand ein Anschlag zur seitlichen Anlage des Druckbetts geschaffen werden.

In weiter bevorzugter Weise kann die Höhe des Anschlags relativ zum Tragboden in einer Dickenrichtung der Tragstruktur und/oder in einer Dickenrichtung des Druckbetts kleiner oder gleich der Dicke des Druckbetts bemessen sein. Es lässt sich hierdurch vermeiden, dass der jeweilige Anschlag relativ zum Druckbett in Dickenrichtung beziehungsweise Höhenrichtung übersteht. Beeinträchtigungen während des Druckens in einer Druckeinrichtung einer 3D-Siebdruckanlage, insbesondere Kollisionen zwischen einem Drucksieb oder Druckrakel und dem jeweiligen Anschlag des Werkstückträgers, lassen sich hierdurch vermeiden.

Besonders bevorzugt kann die Druckfläche des Druckbetts bündig mit einer Oberseite des zumindest einen Anschlags ausgerichtet sein. Weiter bevorzugt kann die Druckfläche des Druckbetts bündig mit Flächenabschnitten der Oberseite der Tragstruktur ausgerichtet sein.

Als bündige Ausrichtung kann hier verstanden werden, dass das Druckbett auf derselben Höhe oder im Wesentlichen auf derselben Höhe abschließt wie die Oberseite des zumindest einen Anschlags beziehungsweise auf derselben Höhe oder im Wesentlichen auf derselben Höhe abschließt wie Flächenabschnitte der Oberseite der Tragstruktur.

Für den Werkstückträger lässt sich damit eine insgesamt ebene oder im Wesentlichen ebene Oberfläche beziehungsweise eine Oberfläche frei oder im Wesentlichen frei von Vorsprüngen in Dickenrichtung beziehungsweise Höhenrichtung schaffen. Durch eine derart bündige Ausrichtung ohne Vorsprünge oder im Wesentlichen ohne Vorsprünge auf der Oberseite des Werkstückträgers können Beeinträchtigungen während des Druckens in einer Druckeinrichtung einer 3D-Siebdruckanlage besonders sicher vermieden werden.

Mithin kann vorliegend als bündige Ausrichtung auch eine nur im Wesentlichen bündige Ausrichtung verstanden werden, insbesondere eine Ausrichtung im Wesentlichen ohne Vorsprünge und/oder mit einer im Wesentlichen ebenen Oberfläche des Werkstückträgers. Eine im Wesentlichen bündige Ausrichtung kann bereits dann vorliegen, wenn Beeinträchtigungen während des Druckens in einer Druckeinrichtung einer 3D-Siebdruckanlage, insbesondere Beeinträchtigungen einer Druckrakelbewegung durch die Oberseite des Werkstückträgers, vermieden werden können.

Gemäß einer weiter bevorzugten Ausgestaltung kann der Anschlag als Formkörper und/oder Formkörperabschnitt ausgebildet sein, der sich relativ zum Tragboden entlang einer Dickenrichtung der Tragstruktur und/oder entlang einer Dickenrichtung des Druckbetts erstreckt. Der Anschlag kann durch einen Stift und/oder Blockabschnitt auf einer Oberseite der Tragstruktur gebildet sein. Ein solcher Stift oder Blockabschnitt auf einer Oberseite der Tragstruktur kann beispielsweise nachträglich aufgebracht und/oder befestigt sein. Ein Formkörper oder Formkörperabschnitt kann beispielsweise einstückig mit dem Tragboden der Tragstruktur ausgebildet sein, wodurch sich für die Tragstruktur eine besonders robuste Ausgestaltung ergibt.

Gemäß einer weiter bevorzugten Ausgestaltung kann die Tragstruktur eine Einlegekavität für das Druckbett aufweisen. Dabei kann das Druckbett zumindest abschnittweise in der Einlegekavität eingelassen sein. Die Positionierung des Druckbetts in einer solchen Einlegekavität lässt sich mit nur geringem Handhabungsaufwand bewerkstelligen, insbesondere mit einer geringen Gefahr von manuellen Bedienfehlern. Gleichzeitig gewährleistet eine Einlegekavität ein hohes Maß an Positionssicherheit für das Druckbett relativ zur Tragstruktur.

Es kann weiter von Vorteil sein, wenn das Druckbett vollständig in einer Einlegekavität eingelassen ist. Ebenso kann gemäß einer bevorzugten Ausgestaltung die Druckfläche des Druckbetts bündig mit Flächenabschnitten der Oberseite der Tragstruktur ausgerichtet sein, welche die Einlegekavität umgeben. Auf diese Weise können relativ zu dem Druckbett vorstehende Abschnitte in Dickenrichtung beziehungsweise Höhenrichtung vermieden werden. Beeinträchtigungen des Druckprozesses beziehungsweise geometrische Kollisionen mit dem jeweiligen Drucksieb und/oder Druckrakel einer Druckeinrichtung können hierdurch vermieden werden.

Gemäß einer weiter bevorzugten Ausgestaltung kann die Einlegekavität zumindest abschnittsweise durch den Tragboden und/oder durch ein oder mehrere Seitenwände und/oder durch den zumindest einen Anschlag oder mehrere Anschläge begrenzt sein. Eine solche Einlegekavität kann mithin bei einem einfachen konstruktiven Aufbau die Position des Druckbetts in mehreren Dimensionen festlegen beziehungsweise begrenzen.

Gemäß einer weiter bevorzugten Ausgestaltung kann der Anschlag durch eine beziehungsweise an einer Seitenwand der Einlegekavität gebildet sein. Insbesondere kann der Anschlag durch einen Seitenwandabschnitt der Einlegekavität und/oder durch einen Seitenvorsprung einer Seitenwand der Einlegekavität gebildet sein. Ein Seitenvorsprung einer Seitenwand kann gegenüber angrenzenden Seitenwandabschnitten der Einlegekavität seitlich in Richtung des Druckbetts vorstehen und somit einen Anschlag beziehungsweise eine Anlagefläche für das Druckbett bilden.

Zwischen dem Druckbett und zumindest einer Seitenwand der Einlegekavität kann ein Freistellungsabschnitt ausgebildet sein. Ein Freistellungsabschnitt kann sich dabei zwischen zwei Seitenvorsprüngen einer Seitenwand der Einlegekavität erstrecken.

Ferner kann jeweils ein Anschlag durch jeweils eine Seitenwand der Einlegekavität oder mehrere Anschläge können durch dieselbe Seitenwand der Einlegekavität gebildet sein. Benachbarte und/oder gegenüberliegende Seitenwände der Einlegekavität können mithin unterschiedliche Anschläge bilden. Auf diese Weise lässt sich ein Druckbett beispielsweise an zwei Seitenwänden einer Einlegekavität beziehungsweise an Seitenvorsprüngen unterschiedlicher Seitenwände der Einlegekavität zur Anlage bringen und ist damit in einer auf dem Tragboden angeordneten Stellung entlang mehrerer Richtungen in der Position festgelegt. Die Gefahr von Fehlpositionierungen des Druckbetts relativ zur Tragstruktur lässt sich hierdurch vermeiden oder auf ein geringes Maß reduzieren.

Weiter bevorzugt kann die Tragstruktur genau drei Anschläge zur seitlichen Anlage des Druckbetts aufweisen. Insbesondere kann die Tragstruktur genau drei als Seitenvorsprünge einer oder mehrerer Seitenwände der Einlegekavität ausgebildete Anschläge aufweisen. Dabei können bevorzugt zwei Seitenvorsprünge an derselben Seitenwand der Einlegekavität und ein weiterer Seitenvorsprung an einer benachbarten beziehungsweise angrenzenden Seitenwand der Einlegekavität ausgebildet sein. Dies ermöglicht eine stabile Anlage des Druckbetts an drei definierten Stellen beziehungsweise drei Seitenflächenabschnitten des Druckbetts und damit eine sichere Positionierung relativ zur Tragstruktur.

Gemäß einer weiter bevorzugten Ausgestaltung kann die Tragstruktur einen Rahmenabschnitt aufweisen, der mit dem Tragboden verbunden ist. Dabei kann der Rahmenabschnitt bevorzugt eine größere Dicke aufweisen als der Tragboden. Der Anschlag kann an dem Rahmenabschnitt ausgebildet und/oder angeordnet sein. Es ergibt sich hierdurch eine besonders einfache und robuste konstruktive Ausgestaltung der Tragstruktur. Zudem kann durch einen solchen Rahmenabschnitt eine besonders geeignete Einfassung in seitlichen Richtungen für das Druckbett bereitgestellt werden.

Gemäß einer weiter bevorzugten Ausgestaltung kann die Einlegekavität zumindest abschnittsweise durch den Rahmenabschnitt und den Tragboden begrenzt sein. Die Seitenwände der Einlegekavität beziehungsweise auch die Anschläge oder die als Seitenvorsprünge der Seitenwände ausgebildeten Anschläge können dabei an dem Rahmenabschnitt ausgebildet sein. Durch einen Rahmenabschnitt wird mithin ein hohes Maß an Stabilität für die Tragstruktur gewährleistet und gleichzeitig können die Seitenwände der Einlegekavität mit nur geringem Fertigungsaufwand an dem Rahmenabschnitt ausgebildet werden. Der Rahmenabschnitt und/oder die Seitenwände können die Einlegekavität bevorzugt umlaufend, insbesondere vollständig umlaufend, und/oder ringsherum seitlich umgeben.

Gemäß einer weiter bevorzugten Ausgestaltung können der Rahmenabschnitt und der Tragboden einstückig miteinander verbunden ausgebildet sein. Ebenso ist es möglich, dass der Tragboden gesondert von dem Rahmenabschnitt ausgebildet und an diesem befestigt ist, wobei der Tragboden bevorzugt schwimmend lagernd an dem Rahmenabschnitt befestigt sein kann. Eine solche schwimmende Lagerung kann insbesondere zum Ausgleich von temperaturbedingtem Ausdehnungsverhalten des Tragboden relativ zum Rahmenabschnitt vorgesehen sein. Demgegenüber kann eine einstückige Ausbildung des Rahmenabschnitts und des Tragbodens zu einer besonders stabilen Gesamtkonstruktion beitragen.

Gemäß einer weiter bevorzugten Ausgestaltung kann das Druckbett zumindest abschnittsweise aus einem Werkstoff gebildet sein, der sich von einem Werkstoff der Tragstruktur unterscheidet. Zusätzlich oder alternativ kann das Druckbett zumindest abschnittsweise aus einem Werkstoff mit einer Beschaffenheit und/oder Zusammensetzung gebildet sein, die sich unterscheidet von der Beschaffenheit und/oder Zusammensetzung eines Werkstoffs der Tragstruktur.

Mithin kann sowohl das Druckbett als auch die Tragstruktur im Hinblick auf die jeweils zu erfüllende Funktion als Teil des Werkstückträgers werkstoffseitig beziehungsweise materialseitig gezielt konzipiert beziehungsweise beschaffen sein.

Der Werkstoff beziehungsweise die Beschaffenheit und/oder die Zusammensetzung des Werkstoffs des Druckbetts kann zur Bereitstellung einer für den jeweiligen Druckprozess optimierten Druckfläche gewählt sein. Der Werkstoff beziehungsweise die Beschaffenheit und/oder die Zusammensetzung des Werkstoffs der Tragstruktur kann demgegenüber zur Erzielung hoher Stabilitätsanforderungen und kostengünstiger Fertigung gewählt sein. Eine Unterteilung des Werkstückträgers in Tragstruktur und Druckbett ermöglicht es mithin, durch unterschiedliche Werkstoffauswahl für das Druckbett und die Tragstruktur zu einer funktionalen Unterteilung und damit zu einem hohen Maß an funktionaler Effizienz beizutragen.

Gemäß einer weiter bevorzugten Ausgestaltung kann die Tragstruktur zumindest abschnittsweise aus einem Metallwerkstoff, insbesondere aus einem Leichtmetallwerkstoff, gebildet sein. In besonders bevorzugter Weise kann die Tragstruktur zumindest abschnittsweise aus einem Aluminiumwerkstoff und/oder aus einem Titanwerkstoff und/oder aus einem Stahlwerkstoff gebildet sein. Derartige Metallwerkstoffe weisen ein hohes Maß an Festigkeit auf und lassen sich mit verhältnismäßig geringem Aufwand verarbeiten, sodass die Fertigung einer entsprechend erzeugten Tragstruktur mit geringem Kostenaufwand ermöglicht wird. Ein Leichtmetallwerkstoff, beispielsweise ein Aluminiumwerkstoff, gewährleistet zudem ein nur geringes Gewicht der Tragstruktur, wodurch die Handhabung während der Produktion vereinfacht wird.

Es kann weiter von Vorteil sein, wenn der Tragboden zumindest abschnittsweise aus einem Stahlblech gebildet ist. Ferner ist es möglich, dass der Tragboden zumindest abschnittsweise aus einem Leichtmetallwerkstoff, insbesondere aus einem Aluminiumwerkstoff und/oder aus einem Titanwerkstoff, gebildet ist. Ein derartiger Tragboden weist bei verhältnismäßig geringem Gewicht ein ausreichend hohes Maß an Festigkeit auf und gewährleistet somit eine sichere Aufnahme des Druckbetts während der Produktion dreidimensionaler Siebdruckwerkstücke.

Gemäß einer weiter bevorzugten Ausgestaltung des Werkstückträgers kann der Tragboden zumindest abschnittsweise aus einem Werkstoff gebildet sein, der sich von einem Werkstoff zumindest eines weiteren Abschnitts der Tragstruktur, insbesondere von einem Werkstoff des Rahmenabschnitts der Tragstruktur, unterscheidet. Für die unterschiedlichen Abschnitte oder Teile der Tragstruktur lassen sich somit jeweils die gewünschten Materialeigenschaften gezielt einstellen.

Beispielsweise kann der Tragboden aus einem Werkstoff höherer Festigkeit erzeugt sein, sodass selbst bei einer geringen Dicke des Tragbodens eine ausreichen hohe Stabilität gewährleistet werden kann. Demgegenüber kann ein Rahmenabschnitt größerer Dicke beispielsweise aus einem Leichtmetallwerkstoff gefertigt werden, sodass ein insgesamt verhältnismäßig geringes Gewicht der Tragstruktur bei gleichzeitig hohen Stabilitätsanforderungen gewährleistet werden kann.

Gemäß einer weiter bevorzugten Ausgestaltung können zumindest ein Abschnitt des Tragbodens und zumindest ein weiterer Abschnitt der Tragstruktur, insbesondere der Rahmenabschnitt der Tragstruktur, aus einem identischen Werkstoff gebildet sein. Der Tragboden und der Rahmenabschnitt können bevorzugt vollständig aus einem identischen Werkstoff gebildet sein. Die Wahl von identischen Werkstoffen für unterschiedliche Abschnitte der Tragstruktur kann zu einer vereinfachten Fertigung beziehungsweise auch zu einem insgesamt vereinfachten konstruktiven Aufbau beitragen.

Das Druckbett kann zumindest abschnittsweise aus einem Titanwerkstoff und/oder aus einem Glaswerkstoff und/oder aus einem Stahlwerkstoff, insbesondere einem Stahlblech und/oder aus einem magnetischen Stahl, und/oder aus einem Aluminiumwerkstoff gebildet sein. Zusätzlich oder alternativ kann das Druckbett aus einem keramischen Werkstoff und/oder aus einem gesinterten Werkstoff gebildet sein. Durch einen Titanwerkstoff oder Glaswerkstoff oder auch durch einen keramischen Werkstoff kann die Gefahr von Reaktionen mit dem Werkstoff eines herzustellenden Siebdruckwerkstücks auf ein geringes Maß verringert werden. Der Einsatz eines Stahlwerkstoffs für das Druckbett kann eine hohe Langlebigkeit des Druckbetts gewährleisten. Zudem kann bei einem magnetischen Stahlwerkstoff mit nur einfachen Mitteln eine magnetische Fixierung des Druckbetts an der Tragstruktur bewerkstelligt werden.

Gemäß einer weiter bevorzugten Ausgestaltung können die Tragstruktur und das Druckbett gemeinsam ein Gesamtgewicht von weniger als 10 kg, bevorzugt von weniger als 8 kg, weiter bevorzugt von weniger als 7 kg, weiter bevorzugt von weniger als 6 kg, weiter bevorzugt von weniger als 5 kg, weiter bevorzugt von weniger als 4,5 kg, weiter bevorzugt von weniger als 4 kg, weiter bevorzugt von weniger als 3,5 kg, weiter bevorzugt von weniger als 3 kg, weiter bevorzugt von weniger als 2 kg oder 2 kg aufweisen. Die Tragstruktur und das Druckbett in gemeinsamer Anordnung lassen sich bei einer solchen Begrenzung des Gewichts mit einem nur geringen Aufwand handhaben. Insbesondere kommt bei einer solchen Gewichtsbegrenzung neben der automatisierten Handhabung auch eine manuelle Handhabung durch das jeweilige Bedienpersonal in Betracht, sodass sich für den Einsatz während der Herstellung von dreidimensionalen Siebdruckwerkstücken ein hohes Maß an Flexibilität ergibt.

In noch weiter bevorzugter Ausgestaltung können die Tragstruktur und/oder ein Rahmenabschnitt der Tragstruktur und/oder die gemeinsame Anordnung des Druckbetts sowie des Tragbodens eine maximale Dicke von weniger als 10 mm, bevorzugt von weniger als 8 mm, weiter bevorzugt von weniger als 7 mm, weiter bevorzugt von weniger als 6 mm, weiter bevorzugt von weniger als 5 mm, weiter bevorzugt von weniger als 4 mm oder etwa 4 mm, aufweisen. Ebenso kann die Tragstruktur und/oder ein Rahmenabschnitt der Tragstruktur und/oder die gemeinsame Anordnung des Druckbetts sowie des Tragbodens eine maximale Dicke von weniger als 3 mm oder etwa 3 mm, weiter bevorzugt von weniger als 2 mm oder etwa 2 mm, aufweisen. Bei einer solchen maximalen Dicke kann der Werkstückträger besonders gut gegriffen werden, sowohl im Zuge einer manuellen Handhabung als auch durch automatisierte Handhabung. Ebenso kann mit einer solchen maximalen Dicke vermieden werden, dass ein Werkstückträger auf einem Drucktisch beziehungsweise innerhalb der jeweiligen Druckeinrichtung einer 3D-Siebdruckanlage zu stark aufträgt. Eine spezifische Anpassung der Druckkinematik in Abhängigkeit des jeweiligen Werkstückträgers lässt sich hierdurch vermeiden oder auf ein geringes Maß reduzieren.

Gemäß einer weiter bevorzugten Ausgestaltung kann die Tragstruktur und/oder ein Rahmenabschnitt der Tragstruktur und/oder die gemeinsame Anordnung des Druckbetts sowie des Tragbodens eine Dicke von mehr als 0,5 mm, bevorzugt von mehr als 1 mm, weiter bevorzugt von mehr als 1,5 mm, weiter bevorzugt von mehr als 2 mm, weiter bevorzugt von mehr als 2,5 mm, weiter bevorzugt von mehr als 3 mm, weiter bevorzugt von mehr als 3,5 mm, weiter bevorzugt von mehr als 4 mm, weiter bevorzugt von mehr als 4,5 mm, noch weiter bevorzugt von mehr als 5 mm, aufweisen. Hierdurch wird eine ausreichende Stabilität des Werkstückträgers beziehungsweise eine ausreichende Gesamtstabilität des Werkstückträgers begünstigt. Gleichzeitig kann bei derartigen Dickendimensionierungen eine gute und sichere Handhabung des Werkstückträgers gewährleistet werden.

Gemäß einer weiter bevorzugten Ausgestaltung kann die Tragstruktur und/oder ein Rahmenabschnitt der Tragstruktur und/oder die gemeinsame Anordnung des Druckbetts sowie des Tragbodens eine Dicke von 0,5 mm bis 10 mm, insbesondere eine Dicke 0,8 mm bis 8 mm, weiter bevorzugt von 1 mm bis 6 mm, noch weiter bevorzugt eine Dicke von 1 mm bis 5 mm, noch weiter bevorzugt eine Dicke von 1 mm bis 4 mm, noch weiter bevorzugt eine Dicke von 1 mm bis 3 mm, noch weiter bevorzugt eine Dicke von 1,5 mm bis 2,5 mm, insbesondere von etwa 2 mm aufweisen. Bei einer solchen Dicke kann einerseits ein ausreichend robuster Gesamtaufbau sichergestellt werden. Gleichzeitig kann hierdurch eine gute Handhabbarkeit des Werkstückträgers sowie auch eine geeignete Fixierung innerhalb einer Druckeinrichtung beziehungsweise innerhalb eines Förderfahrzeugs einer 3D-Siebdruckanlage vorgenommen werden. Die jeweils gewünschte Positionierung des Werkstückträgers innerhalb einer 3D-Siebdruckanlage kann bei derartigen Abmessungen mit einem verhältnismäßig geringen Aufwand erfolgen.

Gemäß einer weiter bevorzugten Ausgestaltung kann das Druckbett eine Dicke von mehr als 0,5 mm, bevorzugt von mehr als 1 mm, weiter bevorzugt von mehr als 1,5 mm, weiter bevorzugt von mehr als 2 mm, weiter bevorzugt von mehr als 2,5 mm, weiter bevorzugt von mehr als 3 mm, weiter bevorzugt von mehr als 3,5 mm, weiter bevorzugt von mehr als 4 mm, weiter bevorzugt von mehr als 4,5 mm, noch weiter bevorzugt von mehr als 5 mm, aufweisen. Bei einer solchen Mindestdicke kann in vorteilhafter Weise ein hohes Maß an Formstabilität des Druckbetts sichergestellt werden. Unerwünschte Verformungen, die beispielsweise eine unebene Druckoberfläche zur Folge habe könnten, lassen sich bei einer ausreichend großen Dicke des Druckbetts vermeiden. Zudem wird bei einer derartigen Mindestdicke eine beschädigungsfreie Entfernung beziehungsweise Entnahme des Druckbetts von der Tragstruktur begünstigt. Dies gilt ebenso für den Vorgang der Positionierung des Druckbetts auf der Tragstruktur beziehungsweise für die Fixierung des Druckbetts an der Tragstruktur oder innerhalb der jeweiligen Einlegekavität.

Gemäß einer weiter bevorzugten Ausgestaltung kann das Druckbett eine Dicke von weniger als 10 mm, bevorzugt von weniger als 8 mm, weiter bevorzugt von weniger als 7 mm, weiter bevorzugt von weniger als 6 mm, weiter bevorzugt von weniger als 5 mm, weiter bevorzugt von weniger als 4 mm oder etwa 4 mm, weiter bevorzugt von weniger als 3 mm oder etwa 3 mm, noch weiter bevorzugt von weniger als 2 mm oder etwa 2 mm, aufweisen. Das Gewicht des Druckbetts lässt sich bei einer solchen Dicke in geeigneter Weise begrenzen, sodass sich gute Handhabungseigenschaften ergeben. Gleichzeitig kann bei einer solchen Dicke auch die Höhe des Anschlags relativ zum Tragboden der Tragstruktur begrenzt sein, sodass eine insgesamt verhältnismäßig geringe Dicke des Werkstückträgers erzielt werden kann. Eine voranstehend erwähnte Maximaldicke des Druckbetts trägt insgesamt zu einer begrenzten Dicke des Werkstückträgers beziehungsweise der gemeinsamen Anordnung von Tragstruktur und Druckbett bei.

Gemäß einer weiter bevorzugten Ausgestaltung kann die Tragstruktur und/oder die Einlegekavität und/oder der Tragboden und/oder der Rahmenabschnitt der Tragstruktur und/oder das Druckbett in einer Draufsicht eine rechteckige, insbesondere quadratische, Formgebung aufweisen. Das Druckbett kann insbesondere als Druckbettplatte ausgebildet sein. Bei einer solchen Formgebung kann einerseits eine besonders vorteilhafte Fixierung innerhalb eines Förderfahrzeugs einer 3D-Siebdruckanlage erfolgen. Gleichzeitig kann bei einer rechteckigen, insbesondere quadratischen, Formgebung im Hinblick auf die jeweiligen geometrischen Ausgestaltungen des jeweils für den Druck einzusetzenden Drucksiebs beziehungsweise des Drucktisches ein hohes Maß an Flächennutzung auf dem Druckbett sichergestellt werden.

Übliche Drucksiebe beziehungsweise Drucktischplatten weisen ebenfalls eine rechteckige, insbesondere quadratische, Formgebung auf. Eine korrespondierende Formgebung des Druckbetts und/oder des Tragbodens, der Einlegekavität beziehungsweise auch der Tragstruktur insgesamt können im Betrieb zu einer guten Flächennutzung des Druckbetts beziehungsweise der durch das Druckbett gebildeten Druckfläche beitragen.

Gemäß einer weiter bevorzugten Ausgestaltung kann die Tragstruktur eine Seitenkantenlänge oder mehrere Seitenkantenlängen von mindestens 50 mm, bevorzugt von mindestens 100 mm, bevorzugt von mindestens 150 mm, bevorzugt von mindestens 200 mm, bevorzugt von mindestens 250 mm, bevorzugt von mindestens 300 mm, bevorzugt von mindestens 350 mm, bevorzugt von mindestens 400 mm, bevorzugt von mindestens 450 mm, weiter bevorzugt von mindestens 475 mm, aufweisen. Durch eine derart dimensionierte Tragstruktur kann darauf ein verhältnismäßig großes Druckbett positioniert werden, sodass sich auch eine verhältnismäßig große Druckfläche ergeben kann.

Noch weiter bevorzugt kann die Tragstruktur eine Seitenkantenlänge oder mehrere Seitenkantenlängen von bis zu 1000 mm, bevorzugt von bis zu 900 mm, bevorzugt von bis zu 800 mm, bevorzugt von bis zu 700 mm, bevorzugt von bis zu 600 mm, bevorzugt von bis zu 550 mm, weiter bevorzugt von bis zu 525 mm, noch weiter bevorzugt von bis zu 500 mm, noch weiter bevorzugt von bis zu 450 mm, noch weiter bevorzugt von bis zu 400 mm, noch weiter bevorzugt von bis 300 mm, aufweisen. Eine derart bemessene Tragstruktur ermöglicht eine insgesamt kompakte und stabile Konstruktion sowie auch eine gute Handhabbarkeit des jeweiligen Werkstückträgers bei der Positionierung in oder auf einer Druckeinrichtung beziehungsweise einem Drucktisch einer 3D-Siebdruckanlage oder auch auf einem Förderfahrzeug einer 3D-Siebdruckanlage. Dies gilt ebenfalls für die Entnahme eines Werkstückträgers mit einer derart bemessenen Tragstruktur aus einer jeweiligen Stellung oder Position innerhalb einer 3D-Siebdruckanlage.

In noch weiter bevorzugter Weise kann das Druckbett eine Seitenkantenlänge oder mehrere Seitenkantenlängen von mindestens 25 mm, von mindestens 50 mm, bevorzugt von mindestens 100 mm, bevorzugt von mindestens 150 mm, bevorzugt von mindestens 200 mm, bevorzugt von mindestens 150 mm, bevorzugt von mindestens 300 mm, weiter bevorzugt von mindestens 350 mm, noch weiter bevorzugt von mindestens 400 mm, noch weiter bevorzugt von mindestens 450 mm, noch weiter bevorzugt von mindestens 500 mm, aufweisen. Bei einer derartigen Dimensionierung des Druckbetts kann eine ausreichend große Druckfläche für das Bedrucken mit dreidimensionalen Siebdruckwerkstücken bereitgestellt werden.

Weiter bevorzugt kann das Druckbett eine Seitenkantenlänge oder mehrere Seitenkantenlängen von bis zu 900 mm, bevorzugt von bis zu 800 mm, bevorzugt von bis zu 700 mm, bevorzugt von bis zu 600 mm, noch weiter bevorzugt von bis zu 500 mm, noch weiter bevorzugt von bis zu 400 mm, noch weiter bevorzugt von bis zu 300 mm, noch weiter bevorzugt von bis zu 200 mm, noch weiter bevorzugt von bis zu 100 mm, noch weiter bevorzugt von bis zu 75 mm, noch weiter bevorzugt von bis zu 50 mm, aufweisen. Ein solches Druckbett kann einerseits eine ausreichend große Druckfläche für das Bedrucken mit dreidimensionalen Siebdruckwerkstücken bereitstellen. Gleichzeitig kann bei einer solchen Begrenzung der Dimensionierung eine gute Handhabbarkeit des Druckbetts gewährleistet werden. Zudem kann bei einer solchen Dimensionierung auch eine Begrenzung der Seitenkantenlänge der Tragstruktur, welche das Druckbett trägt, erfolgen, sodass sich ein insgesamt robuster und kompakter Aufbau des gesamten Werkstückträgers ergibt.

Es kann weiter von Vorteil sein, wenn die Tragstruktur als Fräsbauteil ausgebildet ist und/oder zumindest abschnittsweise durch fräsende Fertigung erzeugt ist. Hierdurch kann der Tragstruktur eine verhältnismäßig komplexe Formgebung verliehen werden, bei gleichzeitig geringem fertigungstechnischem Aufwand. Zudem kann durch fräsende Fertigung beziehungsweise durch Ausbildung als Fräsbauteil eine ausreichende Stabilität der Tragstruktur gewährleistet werden.

In weiter bevorzugter Weise kann das Druckbett zerstörungsfrei und/oder werkzeugfrei von der Tragstruktur lösbar sein. Das Druckbett kann ferner zerstörungsfrei und/oder werkzeugfrei, insbesondere ausschließlich durch manuelle Handhabung und/oder Betätigung, aus der Einlegekavität der Tragstruktur heraus entfernbar beziehungsweise entnehmbar sein. Hierdurch kann ein einfacher Austausch des Druckbetts beziehungsweise die Entnahme des Druckbetts zwecks Durchführung einer Reinigung erfolgen. Im Falle einer Beschädigung kann das Druckbett auf diese Weise einfach ausgetauscht und durch ein neues Druckbett ersetzt werden. Ebenso können durch eine solche Ausgestaltung mit nur geringem Aufwand unterschiedliche Druckbetten für unterschiedliche Einsatzbedingungen auf der Tragstruktur angeordnet oder in der Einlegekavität eingesetzt werden. Mithin besteht die Möglichkeit, eine Tragstruktur abwechselnd mit unterschiedlichen Druckbetten zu verwenden, wodurch sich insgesamt eine materialschonende beziehungsweise ressourcenschonende Betriebsweise erzielen lässt. Bei einer solchen Ausgestaltung ist es nicht erforderlich, für jedes Druckbett auch eine eigene Tragstruktur vorzusehen, sodass jedenfalls an der Anzahl von Tragstrukturen im betrieblichen Einsatz Einsparungen vorgenommen werden können.

Gemäß einer noch weiter bevorzugten Ausgestaltung kann die Tragstruktur eine Griffmulde aufweisen, über die eine Seitenfläche des Druckbetts in einer in der Einlegekavität positionierten Stellung manuell kontaktierbar ist. Die Griffmulde kann insbesondere dazu dimensioniert sein, dass eine Bedienperson zumindest durch einen Finger eine seitliche Kontaktierung des Druckbetts in einer in der Einlegekavität positionierten Stellung des Druckbetts vornehmen kann. Eine solche Griffmulde vereinfacht damit die manuelle Handhabung des Druckbetts, insbesondere zum Einlegen oder Entfernen des Druckbetts in die oder aus der Einlegekavität. Eine Griffmulde kann in vorteilhafter Weise als Einbuchtung in einer Seitenwand der Einlegekavität ausgebildet sein.

Gemäß einer noch weiter bevorzugten Ausgestaltung kann das Druckbett schwimmend lagern an der Tragstruktur und/oder innerhalb der Einlegekavität befestigt sein, insbesondere zum Ausgleich von temperaturbedingtem Ausdehnungsverhalten relativ zur Tragstruktur. Insbesondere beim Einsatz unterschiedlicher Materialien für das Druckbett und die Tragstruktur können unerwünschte Spannungszustände oder Verklemmungen des Druckbetts an der Tragstruktur beziehungsweise innerhalb der Einlegekavität vermieden werden. Durch eine schwimmende Lagerung kann ein geeigneter Ausgleich erfolgen. Eine schwimmende Lagerung des Druckbetts an der Tragstruktur und/oder innerhalb der Einlegekavität kann eine Beweglichkeit beziehungsweise Ausdehnung des Druckbetts relativ zur Tragstruktur in zumindest einer seitlichen Richtung oder auch in mehreren seitlichen Richtungen ermöglichen.

Es ist ebenso möglich, dass das Druckbett spielfrei oder im Wesentlichen spielfrei lagernd an der Tragstruktur und/oder innerhalb der Einlegekavität befestigt ist. Eine spielfreie oder im Wesentlichen spielfreie Lagerung des Druckbetts an der Tragstruktur und/oder innerhalb der Einlegekavität kann eine Bewegung des Druckbetts relativ zur Tragstruktur in zumindest einer seitlichen Richtung oder in mehreren seitlichen Richtungen verhindern oder die Beweglichkeit auf ein geringes Maß reduzieren. Die Lage des Druckbetts relativ zur Tragstruktur kann auf diese Weise in der jeweiligen Richtung beziehungsweise Orientierung fest vorgegeben werden. Die Gefahr unerwünschter Fehlpositionierungen des Druckbetts relativ zur Tragstruktur lässt sich hierdurch verringern.

Nach einer noch weiter bevorzugten Ausgestaltung kann das Druckbett kraftschlüssig und/oder formschlüssig und/oder stoffschlüssig an der Tragstruktur und/oder innerhalb der Einlegekavität befestigt sein. Eine solche Befestigung kann in besonders vorteilhafter Weise in einer in seitlicher Richtung an zumindest an einem Anschlag oder an mehreren Anschlägen anliegenden Stellung erfolgt sein. Durch eine kraftschlüssige und/oder formschlüssige und/oder stoffschlüssige Befestigung kann ein insgesamt hohes Maß an Befestigungssicherheit für das Druckbett an der Tragstruktur und/oder innerhalb der Einlegekavität gewährleistet werden. Die Gefahr eines unerwünschten Loslösens des Druckbetts von der Tragstruktur lässt sich hierdurch verringern.

Das Druckbett kann in besonders vorteilhafter Weise magnetisch an der Tragstruktur und/oder innerhalb der Einlegekavität befestigt sein. Das Druckbett kann durch zumindest eine Magnetfolie und/oder durch zumindest eines Neodym-Magneten an der Tragstruktur und/oder innerhalb der Einlegekavität befestigt sein. Durch eine magnetische Fixierung lässt sich einerseits ein hohes Maß an Befestigungssicherheit erzielen. Gleichzeitig kann eine magnetische Befestigung eine einfache und gleichzeitig zerstörungsfreie Entnahme des Druckbetts von der Tragstruktur oder aus der Einlegekavität heraus gewährleisten.

Weiter bevorzugt kann zumindest ein Magnet, insbesondere eine Magnetfolie und/oder ein Neodym-Magnet, an dem Druckbett befestigt sein. Bevorzugt kann ein solcher Magnet an einer dem Tragboden zugewandten Unterseite des Druckbetts festgeklebt und/oder innerhalb des Druckbetts eingelassen sein. Dies kann mit verhältnismäßig geringem Aufwand bewerkstelligt werden und ermöglicht die magnetische Befestigung des Druckbetts auch an anderen geeigneten Tragstrukturen, die entweder ihrerseits einen magnetischen Werkstoff oder zumindest einen korrespondierenden Magneten aufweisen.

Zusätzlich oder alternativ kann zumindest ein Magnet, insbesondere eine Magnetfolie und/oder ein Neodym-Magnet, an dem Tragboden der Tragstruktur befestigt und/oder in dem Tragboden eingelassen und/oder festgeklebt sein. Durch eine solche Ausgestaltung lässt sich ein Druckbett, das zumindest teilweise aus einem magnetischen Material besteht oder seinerseits mit zumindest einem Magneten ausgestattet ist, einfach und mit hoher Sicherheit an der Tragstruktur fixieren. Die Positionierung eines Magneten an dem Tragboden und/oder eingelassen in dem Tragboden und/oder festgeklebt in dem Tragboden ist besonders platzsparend und gewährleistet ein hohes Maß an Befestigungssicherheit.

Zusätzlich oder alternativ kann das Druckbett an der Tragstruktur und/oder innerhalb der Einlegekavität festgeklebt sein, bevorzugt durch ein Klebeband oder durch mehrere Klebebandabschnitte. Eine solche Ausgestaltung ist einfach im Aufbau und kostengünstig bereitzustellen. Zudem kann auch durch eine solche Klebeverbindung ein hohes Maß an Befestigungssicherheit und gleichzeitig eine einfache Austauschbarkeit des Druckbetts beziehungsweise eine Entnahme des Druckbetts von der jeweiligen Tragstruktur oder aus der Einlegekavität gewährleistet werden.

In besonders bevorzugter Weise kann das Klebeband zwischen dem Druckbett und dem Tragboden festgeklebt sein. Zusätzlich oder alternativ kann das Druckbett an der Tragstruktur durch Klebeband festgeklebt sein, das auf einer von dem Tragboden abgewandten Oberseite des Druckbetts überlappend auf dem Druckbett und der Tragstruktur festgeklebt ist. Eine solche Art der Befestigung lässt sich mit nur geringem manuellem Aufwand bewerkstelligen und ist besonders kostengünstig.

Gemäß einer weiteren bevorzugten Ausgestaltung kann das Druckbett durch wenigstens eine Federvorrichtung an der Tragstruktur und/oder innerhalb der Einlegekavität festgeklemmt sein. Insbesondere kann das Druckbett durch wenigstens eine Federvorrichtung gegen zumindest eine Seitenwand beziehungsweise einen Seitenwandabschnitt der Einlegekavität und/oder gegen einen Seitenvorsprung einer Seitenwand der Einlegekavität geklemmt und/oder gespannt sein. Durch ein solches Festklemmen beziehungsweise Einspannen des Druckbetts kann dessen Position innerhalb der Tragstruktur oder auf der Tragstruktur besonders gut eingehalten beziehungsweise dauerhaft aufrechterhalten werden. Dabei kann durch eine Federvorrichtung das Druckbett im Allgemeinen gegen zumindest einen Anschlag geklemmt und/oder gespannt sein. Die Stellung des Druckbetts in einer an dem Anschlag anliegenden Stellung kann durch die Federvorrichtung mithin besonders sicher aufrechterhalten werden.

In weiter bevorzugter Weise kann das Druckbett durch eine Mehrzahl von Federvorrichtungen an der Tragstruktur und/oder innerhalb der Einlegekavität festgeklemmt sein. Insbesondere kann das Druckbett durch eine Mehrzahl von Federvorrichtungen seitlich gegen mehrere Anschläge beziehungsweise mehrere Seitenwände der Einlegekavität und/oder gegen einen Seitenvorsprung oder gegen mehrere Seitenvorsprünge einer Seitenwand oder gegen mehrerer Seitenwände der Einlegekavität geklemmt und/oder gespannt sein. Die Federvorrichtungen können mithin zu einer besonders hohen Positionsgenauigkeit des Druckbetts relativ zur Tragstruktur beitragen.

Die zumindest eine Federvorrichtung kann in bevorzugter Weise seitlich auf das Druckbett wirken, insbesondere auf zumindest eine Seitenfläche des Druckbetts, die zwischen der dem Tragboden abgewandten Oberseite und der dem Tragboden zugewandten Unterseite des Druckbetts verläuft. Es lässt sich somit eine Krafteinwirkung in seitlicher Richtung auf das Druckbett erzielen.

Ferner können mehrere Federvorrichtungen seitlich auf das Druckbett wirken, insbesondere auf mehrere zueinander angrenzenden Seitenflächen des Druckbetts, die zwischen der dem Tragboden abgewandten Oberseite und der dem Tragboden zugewandten Unterseite des Druckbetts verlaufen. Hierdurch können durch die Federvorrichtungen seitliche Krafteinwirkungen in unterschiedlichen seitlichen Richtungen auf das Druckbett realisiert werden. Die Anlage des Druckbetts an dem jeweiligen Anschlag der Tragstruktur lässt sich hierdurch einfach erzielen und im Betrieb aufrechterhalten.

In noch weiter bevorzugter Weise kann in einer Draufsicht auf das Druckbett eine Spannkraft der Federvorrichtung diagonal auf das Druckbett wirken und/oder diagonal durch das Druckbett verlaufen. Ebenso ist es möglich, dass in einer Draufsicht auf das Druckbett eine Spannkraft der Federvorrichtung im Allgemeinen schräg auf das Druckbett wirkt und/oder schräg durch das Druckbett verläuft, insbesondere unter einem Winkel von mehr als 90° oder weniger als 90° relativ zu einer Seitenkante beziehungsweise Seitenfläche des Druckbetts. Auf diese Weise kann durch eine einzelne Federvorrichtung eine seitliche Anlage des Druckbetts an zwei Anschlägen beziehungsweise an zwei Seitenwänden oder zwei oder mehr Seitenwandabschnitten oder Seitenvorsprüngen einer oder mehrerer Seitenwände der Einlegekavität bewerkstelligt werden. Die Gefahr von Bedienfehlern lässt sich hierdurch auf ein geringes Maß reduzieren.

Noch weiter bevorzugt kann die zumindest eine Federvorrichtung seitlich auf einen Eckbereich und/oder eine Eckfläche des Druckbetts wirken. Bei einem Eckbereich kann es sich um einen an eine Ecke angrenzenden Bereich handeln. Dementsprechend kann es sich bei einer Eckfläche um eine an eine Ecke angrenzende Fläche handeln. Durch eine solche Ausgestaltung lässt sich auf besonders sichere Weise eine diagonal durch das Druckbett verlaufende beziehungsweise in einer Draufsicht auf das Druckbett schräg auf das Druckbett wirkende Federkraft aufbringen.

Die zumindest eine Federvorrichtung kann noch weiter bevorzugt eine Aussparung für die kontaktfreie und/oder belastungsfreie Aufnahme einer Ecke und/oder Kante, insbesondere einer Eckkante oder Kante eines Eckbereichs, des Druckbetts aufweisen. Unter Eckkante beziehungsweise Kante eines Eckbereichs soll hier eine Kante verstanden werden, durch die zwei Seitenflächen, welche zwischen einer Oberseite des Druckbetts und einer Unterseite des Druckbetts verlaufen, zueinander begrenzt werden. Eine Eckkante beziehungsweise Kante eines Eckbereichs verbindet mithin zwei benachbarte Ecken, nämlich eine Ecke auf einer Oberseite mit einer Ecke auf einer Unterseite des Druckbetts. Durch eine Aussparung für die kontaktfreie und/oder belastungsfreie Aufnahme einer Ecke und/oder Kante des Druckbetts können Belastungsspitzen sowohl im Werkstoff des Druckbetts als auch an den Kontaktflächen der Federvorrichtung vermieden werden, sodass unerwünschte Materialbeanspruchungen vollständig verhindert oder auf ein geringes Maß reduziert werden können.

In weiter bevorzugter Weise kann das Druckbett zumindest einen abgeflachten oder abgerundeten Eckbereich oder zumindest eine abgeflachte oder abgerundete Eckkante aufweisen, insbesondere mehrere abgeflachte oder abgerundete Eckbereiche beziehungsweise mehrere abgeflachte oder abgerundete Eckkanten. Mithin kann zumindest eine Kante eines Eckbereichs und/oder einer Eckkante des Druckbetts abgeflacht oder abgerundet ausgebildet sein. Durch eine derart abgeflachte oder abgerundete Ausgestaltung eines Eckbereichs beziehungsweise einer Kante eines Eckbereichs und/oder einer Eckkante können hohe Flächenpressungen und damit einhergehende Materialbeeinträchtigungen in Eckbereichen beziehungsweise Kantenbereichen des Druckbetts vermieden werden. Die Gefahr von Beschädigungen des Druckbetts im Zuge der Handhabung beziehungsweise der Positionierung und/oder Festklemmung an der Tragstruktur lässt sich dadurch verringern.

Die Federvorrichtung kann in weiter bevorzugter Weise zur Aufnahme eines abgeflachten und/oder abgerundeten Eckbereichs und/oder einer abgeflachten und/oder abgerundeten Eckkante des Druckbetts ausgebildet sein. Insbesondere kann die Federvorrichtung eine zum abgeflachten und/oder abgerundeten Eckbereich und/oder zu einer abgeflachten und/oder abgerundeten Eckkante korrespondierend geformte Kontaktfläche aufweisen. Die Kontaktierung des Druckbetts durch eine solche Federvorrichtung zwecks Festklemmens beziehungsweise zwecks Einspannens des Druckbetts geht bei einer solchen Ausgestaltung mit einer nur geringen Gefahr hoher Flächenpressungen einher. Mithin besteht somit ein nur geringes Risiko von Beschädigungen des Druckbetts und/oder der Federvorrichtung.

Gemäß einer noch weiter bevorzugten Ausgestaltung des Werkstückträgers kann die Tragstruktur für die Anordnung beziehungsweise Aufnahme einer Mehrzahl von Druckbetten ausgestaltet sein. Bevorzugt können an der Tragstruktur im Allgemeinen mehrere voneinander gesondert ausgebildete Druckbetten angeordnet und/oder befestigt sein, insbesondere auf jeweils einem Tragboden oder auf einem gemeinsamen Tragboden. Die Tragstruktur kann in weiter bevorzugter Weise für mehrere Druckbetten jeweils zumindest einen Anschlag aufweisen, an dem das jeweilige Druckbett in einer auf dem jeweiligen Tragboden angeordneten Stellung in zumindest einer seitlichen Richtung zur Anlage bringbar ist.

Durch eine solche Ausgestaltung kann die Einsatzflexibilität des jeweiligen Werkstückträgers insgesamt weiter verbessert werden. Anstelle eines verhältnismäßig großen Druckbetts können mehrere verhältnismäßig kleine Druckbetten vorgesehen werden, die unabhängig voneinander austauschbar beziehungsweise an der Tragstruktur befestigbar sein können. Im Falle einer Beschädigung kann es beispielsweise ausreichend sein, nur ein Druckbett auszutauschen. Ebenso kann die Handhabung von mehreren kleinen Druckbetten besonders einfach bewerkstelligt werden, insbesondere mit einer verringerten Gefahr von Beschädigungen.

In noch weiter bevorzugter Ausgestaltung kann die Tragstruktur mehrere Einlegekavitäten für mehrere Druckbetten aufweisen, wobei in jeder Einlegekavität bevorzugt ein Druckbett zumindest abschnittsweise eingelassen und/oder befestigt ist. Jedes Druckbett kann innerhalb der Einlegekavität an zumindest einem Anschlag, insbesondere an zumindest einer Seitenwand beziehungsweise an einem Seitenwandabschnitt und/oder Seitenvorsprung einer Seitenwand der Einlegekavität in einer seitlichen Richtung zur Anlage bringbar sein. Dies erlaubt eine sichere und genaue Positionierung einer Mehrzahl von Druckbett relativ zur Tragstruktur.

In noch weiter bevorzugter Weise kann jedes Druckbett durch mindestens eine Federvorrichtung einer Tragstruktur und/oder innerhalb der jeweiligen Einlegekavität festgeklemmt sein, insbesondere seitlich gegen mehrere Seitenwände beziehungsweise gegen mehrere Seitenwandabschnitte und/oder gegen mehrere Seitenvorsprünge einer Seitenwand oder mehreren Seitenwände der jeweiligen Einlegekavität geklemmt und/oder gespannt sein. Mithin kann jedes Druckbett in zumindest einer seitlichen Richtung an einem als Seitenwand der jeweiligen Einlegekavität ausgebildeten Anschlag zur Anlage bringbar sein. Für mehrere Druckbetten ergibt sich auf diese Weise eine hohe Befestigungssicherheit und Positioniergenauigkeit.

Nach einer weiter bevorzugten Ausgestaltung kann die Federvorrichtung werkzeugbasiert spannbar und/oder lösbar sein. Soweit mehrere Federvorrichtungen vorgesehen sind, können auch mehrere Federvorrichtungen werkzeugbasiert spannbar und/oder lösbar sein. Das Festspannen kann werkzeugbasiert mit hoher Sicherheit und verhältnismäßig hohen Spannkräften erfolgen. Demgegenüber ist ein unerwünschtes Lösen beziehungsweise ein versehentliches Lösen unwahrscheinlich.

Die zumindest eine Federvorrichtung und/oder die mehreren Federvorrichtungen können alternativ auch werkzeugfrei spannbar und/oder lösbar sein. Hierdurch lässt sich das Spannen und/oder Lösen mit einem nur geringen Handhabungsaufwand und durch das Bedienpersonal ohne Zuhilfenahme weiterer Betriebsmittel bewerkstelligen.

Gemäß einer noch weiter bevorzugten Ausgestaltung kann das Druckbett durch wenigstens eine Niederhaltevorrichtung an der Tragstruktur und/oder innerhalb der Einlegekavität niedergehalten und/oder festgeklemmt sein. Dabei kann die Niederhaltevorrichtung bevorzugt an der Tragstruktur festgeschraubt sein. Zusätzlich oder alternativ kann die Niederhaltevorrichtung in einen korrespondierend zur Niederhaltevorrichtung geformten Formabschnitt des Druckbett eingreifen. Hierdurch lässt sich eine besonders hohe Befestigungssicherheit für das Druckbett an der Tragstruktur und/oder innerhalb der Einlegekavität gewährleisten.

Gleichzeitig kann das Eingreifen der Niederhaltevorrichtung in einen Formabschnitt des Druckbetts eine verhältnismäßig ebene Oberseite des Werkstückträgers gewährleisten. Es kann dadurch mithin vermieden werden, dass die Niederhaltevorrichtung relativ zum Druckbett in Dickenrichtung beziehungsweise Höhenrichtung vorsteht. Ebenso kann die Niederhaltevorrichtung in einem korrespondierend geformten Formabschnitt der Tragstruktur eingreifen beziehungsweise in einem solchen Formabschnitt eingebettet sein. Somit kann auch ein Überstehen der Niederhaltevorrichtung relativ zur Oberseite der Tragstruktur an den das Druckbett umgebenden Abschnitten vermieden werden.

Die Niederhaltevorrichtung kann in bevorzugter Weise als Niederhaltescheibe ausgebildet sein. Eine solche Niederhaltescheibe kann kostengünstig bereitgestellt werden und gewährleistet ein hohes Maß an Funktionssicherheit.

Die Niederhaltevorrichtung kann weiter bevorzugt ein Loslager bilden. Mithin kann bei einer solchen Ausgestaltung die Niederhaltevorrichtung ausschließlich eine Niederhaltefunktion bereitstellen und gleichzeitig eine seitliche Bewegung des Druckbetts relativ zur Niederhaltevorrichtung und/oder relativ zur Tragstruktur ermöglichen, beispielsweise zum Ausgleich einer temperaturbedingten Ausdehnung.

Zusätzlich zu einem als Loslager ausgebildeten Niederhalter kann das Druckbett auch noch an der Tragstruktur durch ein Festlager befestigt sein. Ein solches Festlager kann beispielsweise durch eine Schraubverbindung erzeugt sein, insbesondere durch mehrere Schraubverbindungen. Hierzu kann zumindest eine Schraube durch eine Öffnung des Druckbetts ragen und in dem Tragboden der Tragstruktur eingeschraubt sein. Ebenso können mehrere Schraubverbindungen vorgesehen sein. Im Bereich eines solchen Festlagers können mithin auch seitliche Bewegungen des Druckbetts relativ zur Tragstruktur blockiert sein.

Allgemein kann eine Befestigung des Druckbetts an der Tragstruktur und/oder in der Einlegekavität durch eine Fest-Loslager-Anordnung realisiert sein. Es kann sich dabei um eine Fest-Loslager-Anordnung in seitlichen Richtungen des Druckbetts relativ zur Tragstruktur handeln.

Die Niederhaltevorrichtung kann in noch weiter bevorzugter Weise als Eingriffsnut für das Druckbett ausgebildet sein. Eine solche Eingriffsnut kann beispielsweise in einer Seitenwand der Einlegekavität eingebracht sein. Das Druckbett kann eine zu der Eingriffsnut korrespondierende Formgebung aufweisen, insbesondere kann das Druckbett einen Eingriffsabschnitt aufweisen, der in die Eingriffsnut einführbar ist. Ein solcher Eingriffsabschnitt kann dünner ausgebildet sein als die übrigen Abschnitte des Druckbetts. Auf diese Weise kann einen ebene Gesamtoberfläche des Werkstückträgers sichergestellt werden, insbesondere ohne Vorsprünge auf der Oberseite des Werkstückträgers.

Noch weiter bevorzugt kann der Tragboden zumindest eine durchgehende Saugöffnung, insbesondere eine Mehrzahl von Ansaugöffnungen, zur Beaufschlagung des Druckbetts mit einem Unterdruck auf und/oder für das unterseitige Ansaugen des Druckbetts für die temporäre Fixierung innerhalb einer Druckeinrichtung einer 3D-Siebdruckanlage aufweisen. Mithin kann über derartige Ansaugöffnungen an der Unterseite des Druckbetts beziehungsweise an der der Tragstruktur zugewandten Seite des Druckbetts ein Unterdruck erzeugt werden, durch den das Druckbett in der jeweiligen Stellung fixiert wird.

Eine solche Fixierung durch Unterdruck erfolgt kann nicht nur relativ zur Tragstruktur, sondern auch relativ zu der jeweiligen Druckeinrichtung der 3D-Siebdruckanlage erfolgen. In einer derart fixierten Stellung kann in besonders vorteilhafter Weise auf dem Druckbett Material im Wege des dreidimensionalen Siebdrucks aufgetragen beziehungsweise aufgedruckt werden, insbesondere ohne Gefahr, dass das Druckbett durch einen Druckvorgang verrutscht oder eine unerwünschte beziehungsweise ungenaue Position einnimmt.

Gemäß einer weiter bevorzugten Ausgestaltung kann das Druckbett und/oder die Position und/oder Ausrichtung beziehungsweise allgemein die Lage des Druckbetts ausgehend von einer von dem Druckbett abgewandten Seite der Tragstruktur optisch erfassbar sein. Hierdurch kann von einer oberseitigen Lageerfassung des Druckbetts abgesehen werden und auch von einer Unterseite der Tragstruktur kann ein Rückschluss auf die Position und/oder Ausrichtung beziehungsweise auf die Lage des Druckbetts im Allgemeinen gezogen werden. Dies erlaubt einen flexibleren Einsatz des Werkstückträgers, insbesondere auch in 3D-Siebdruckanlagen, die keine oberseitige Lageerfassung für den Werkstückträger beziehungsweise für das Druckbett eines Werkstückträgers aufweisen.

Durch eine unterseitige Lageerfassung des Druckbetts, ausgehend von einer von dem Druckbett abgewandten Seite der Tragstruktur, lässt sich dennoch ein präziser Druck mehrerer Schichten aufeinander erzielen, um schließlich das jeweilige dreidimensionale Siebdruckwerkstück herzustellen. Bei einem vereinfachten Aufbau einer 3D-Siebdruckanlage beziehungsweise einer Druckeinrichtung mit lediglich unterseitiger Lageerfassung eines Druckbetts kann ein insgesamt hohes Maß an Fertigungsgenauigkeit erreicht werden.

Die einzelnen Schichten eines Siebdruckwerkstücks lassen sich durch eine solche Lageerfassung des Druckbetts mit hoher Präzision aufeinander drucken. Dies gilt insbesondere für die mehrfache und nacheinander folgende Anordnung des Werkstückträgers innerhalb einer Druckeinrichtung zur Durchführung aufeinander folgender Druckschritte.

Gemäß einer weiter bevorzugten Ausgestaltung kann die Tragstruktur zumindest einen Sichtbereich aufweisen. Die Position und/oder Ausrichtung des Druckbetts kann zumindest durch den Sichtbereich der Tragstruktur hindurch optisch erfassbar sein. Ein solcher Sichtbereich lässt sich einfach bereitstellen und ermöglicht eine sichere optische Erfassung des Druckbetts und dementsprechend auch eine genaue Positions- und Ausrichtungseinstellung.

Ein Sichtbereich kann in besonders vorteilhafter Weise durch eine Sichtöffnung gebildet sein. Eine solche Sichtöffnung lässt sich nur mit geringem Aufwand in der Tragstruktur vorsehen. Eine Sichtöffnung kann insbesondere durch eine Materialaussparung gebildet werden.

Weiter bevorzugt kann der Sichtbereich zumindest abschnittsweise aus einem transparenten und/oder transluzenten Werkstoff gebildet sein. Beispielsweise kann die Tragstruktur eine Aussparung aufweisen, in der ein transparenter und/oder transluzenter Werkstoff eingesetzt ist. Durch einen transparenten und/oder transluzenten Werkstoff kann eine sichere optische Erfassung erfolgen. Gleichzeitig ermöglicht ein solcher Sichtbereich aus einem transparenten und/oder transluzenten Werkstoff, dass das jeweilige Druckbett vollflächig aufliegen kann.

Bei einem transparenten Werkstoff handelt es sich um ein Material, dass von einfallender elektromagnetischer Strahlung eines mehr oder weniger breiten Frequenzspektrums nahezu vollständig durchdringen wird, also kaum reflektiert und kaum absorbiert wird. Insbesondere kann ein transparenter Werkstoff transparent oder durchsichtig sein, wenn man Dahinterliegendes klar erkennen kann, das Material also für Strahlung des sichtbaren Spektrums durchlässig oder weitgehend durchlässig ist, insbesondere ohne oder fast ohne Lichtstreuung.

Unter einem transluzenten Werkstoff soll hier ein Material verstanden werden, das partiell beziehungsweise teilweise lichtdurchlässig ist. Transluzente Werkstoffe können auftreffendes Licht daher nicht nur direkt an ihrer Oberfläche reflektieren, sondern teils erst, nachdem es in die Materie eingedrungen ist. Es kann mithin durch transluzente Werkstoffe eine Volumenstreuung erfolgen.

In weiter bevorzugter Weise kann die Tragstruktur angrenzend an den Sichtbereich zumindest abschnittsweise durch einen lichtundurchlässigen Werkstoff gebildet sein. Bei der optischen Erfassung kann auf diese Weise eine einfache Differenzierung des zumindest einen Sichtbereichs von einem angrenzenden und damit für die optische Erfassung des Druckbetts nicht relevanten Bereich erfolgen.

In noch weiter bevorzugter Ausgestaltung kann die Tragstruktur eine Mehrzahl voneinander unabhängig ausgebildeter Sichtbereiche aufweisen. Dabei kann die Tragstruktur weiter bevorzugt zwischen unterschiedlichen Sichtbereichen zumindest abschnittsweise aus einem lichtundurchlässigen Werkstoff ausgebildet sein. Die Erfassungssicherheit und Erfassungsgenauigkeit lassen sich auf diese Weise weiter verbessern.

Zumindest eine Ecke und/oder Kante und/oder ein Konturabschnitt des Druckbetts kann durch einen Sichtbereich der Tragstruktur hindurch optisch erfassbar sein. Eine Ecke und/oder Kante und/oder ein Konturabschnitt kann durch einen Sichtbereich verhältnismäßig gut erkannt werden. Durch eine solche Ausgestaltung kann die Position und/oder Ausrichtung des Druckbetts beziehungsweise dessen Lage im Allgemeinen mit hoher Sicherheit erfasst und dementsprechend eine Ausrichtung entweder des Druckbetts beziehungsweise des Werkstückträgers samt Druckbett und/oder des jeweils zu verwendenden Drucksiebs erfolgen.

Weiter bevorzugt kann der zumindest eine Sichtbereich der Tragstruktur in Draufsicht durch einen Eckbereich und/oder Kantenbereich und/oder Konturabschnitt des Druckbetts abschnittsweise überdeckt sein. Durch eine abschnittsweise Überdeckung lässt sich der jeweilige Abschnitt des Druckbetts mit hoher Sicherheit erkennen. Die abschnittsweise Überdeckung schafft für die optische Erfassung einen Kontrast zu Abschnitten des Sichtbereichs, die nicht überdeckt sind.

Weiter bevorzugt kann zumindest ein Sichtbereich der Tragstruktur beziehungsweise eine Sichtöffnung der Tragstruktur zumindest abschnittsweise in dem Rahmenabschnitt und/oder zumindest abschnittsweise in dem Tragboden der Tragstruktur ausgebildet sein. Auf diese Weise kann eine abschnittsweise Überdeckung der Sichtöffnung beziehungsweise des Sichtbereichs besonders gut optisch erfasst werden.

Gemäß einer noch weiter bevorzugten Ausgestaltung kann der Tragboden gesondert von dem Rahmenabschnitt ausgebildet sein und das Druckbett kann in Draufsicht den Tragboden überdecken und/oder den Tragboden überstehend abdecken. Durch eine gesonderte Ausbildung des Tragbodens und des Rahmenabschnitts ergibt sich eine größere Fertigungsflexibilität für den Werkstückträger. Gleichzeitig kann es durch eine überdeckende Anordnung des Druckbetts auf dem Tragboden eine gute optische Erkennbarkeit für das Druckbett ausgehend von der dem Druckbett abgewandten Seite der Tragstruktur ergeben.

Noch weiter bevorzugt kann die Tragstruktur und/oder der Rahmenabschnitt und/oder das Druckbett des Werkstückträgers mit wenigstens einer Markierung zur Lageerfassung, insbesondere einer Mehrzahl von Markierungen zur Lageerfassung, versehen sein. Über eine solche Markierung kann die Position und/oder Ausrichtung der Tragstruktur und/oder des Druckbetts des Werkstückträgers detektierbar sein. Durch die optische Erfassung einer Markierung kann die Produktionssicherheit beim schichtweisen Aufbau im Wege des dreidimensionalen Siebdrucks verbessert werden. Die Gefahr fehlerhafter Positionierungen des Druckbetts bei einem nachfolgenden Druckvorgang lässt sich auf diese Weise weiter verringern.

Eine hier in Rede stehende Markierung kann als optisch detektierbare Markierung und/oder Referenzbohrung und/oder Passermarke ausgebildet sein. Eine solche Markierung lässt sich mit nur geringem apparativem Aufwand und hoher Sicherheit optisch erfassen.

Ferner kann die zumindest eine Markierung bevorzugt gesondert von den Ecken und/oder Kanten der Tragstruktur und/oder des Druckbetts ausgebildet sein. Eine Erfassung über eine solche Markierung kann zusätzlich oder alternativ zur optischen Erfassung eines Eckbereichs und/oder Kantenbereichs und/oder Konturabschnitts des Druckbetts erfolgen. Die Möglichkeiten der Lageerfassung der Tragstruktur beziehungsweise des Druckbetts lassen sich auf diese Weise weiter verbessern oder eine redundante und damit besonders sichere Erfassung lässt sich hierdurch bewerkstelligen.

In weiter bevorzugter Weise kann zumindest eine Markierung des Druckbetts ausgehend von einer von dem Druckbett abgewandten Seite der Tragstruktur optisch erfassbar sein. Hierzu kann zumindest eine Markierung des Druckbetts auf einer der Tragstruktur zugewandten Seite des Druckbetts angeordnet sein. Zusätzlich oder alternativ kann zumindest eine Markierung der Tragstruktur auf einer von dem Druckbett abgewandten Seite angeordnet sein. Mithin kann eine solche Markierung auch über eine unterseitige Lageerfassungseinrichtung detektiert werden und damit zu einer insgesamt hohen Lageerfassungsgenauigkeit bei einfachem konstruktivem Aufbau beitragen.

Weiterhin kann in bevorzugter Weise zumindest eine Markierung des Druckbetts auf einem Sichtbereich der Tragstruktur angeordnet sein und/oder durch den Sichtbereich der Tragstruktur optisch erfassbar sein. Mithin kann die ungefähre Position der Markierung durch Anordnung auf oder oberhalb des Sichtbereichs der Tragstruktur vorgegeben oder vordefiniert sein. Durch den Sichtbereich hindurch kann dann eine zuverlässige optische Erfassung der jeweiligen Markierung von einer ausgehend von Unterseite der Tragstruktur beziehungsweise des Druckbetts erfolgen.

Gemäß einer noch weiter bevorzugten Ausgestaltung kann die Tragstruktur zumindest abschnittsweise oder vollständig aus einem transparenten und/oder transluzenten Werkstoff gebildet sein, insbesondere aus einem Glas- und/oder Kunststoffwerkstoff. Die Position und/oder Ausrichtung des Druckbetts kann zumindest durch einen transparenten und/oder transluzenten Abschnitt der Tragstruktur hindurch optisch erfassbar sein. Die jeweilige Markierung kann bei einer solchen Ausgestaltung unterseitig durch den transparenten und/oder transluzenten Abschnitt der Tragstruktur geschützt, jedoch dennoch optisch erfasst werden.

Gemäß einer weiter bevorzugten Ausgestaltung kann zumindest eine Markierung eines Drucksiebs durch einen Sichtbereich und/oder durch eine Sichtöffnung der Tragstruktur optisch erfassbar sein. Ebenso kann im Allgemeinen eine Markierung eines Drucksiebs durch die Tragstruktur optisch erfassbar sein. Beispielsweise kann eine optische Erfassbarkeit der Markierung eines Drucksiebs durch die Tragstruktur auch unabhängig von einem speziell ausgebildeten Sichtbereich möglich sein. Dies ist beispielsweise dann möglich, wenn die Tragstruktur zumindest abschnittsweise oder vollständig aus einem transparenten und/oder transluzenten Werkstoff gebildet ist.

Nach einer bevorzugten Ausgestaltung kann das Druckbett eine unlösbare Beschichtung aufweisen, insbesondere eine die Druckoberfläche bildende Beschichtung. Das Druckbett selbst kann mithin eine Trägerschicht und eine auf der Trägerschicht aufgetragene Beschichtung aufweisen, wobei die Oberfläche der Beschichtung die Druckoberfläche für das Bedrucken im Wege des dreidimensionalen Siebdrucks bilden kann.

Eine solche Beschichtung kann insbesondere im Hinblick auf die jeweils herzustellenden dreidimensionalen Siebdruckwerkstücke ausgewählt sein. Eine Beschichtung kann dazu beitragen, dass das jeweils zu druckende Material nicht mit dem Druckbett reagiert beziehungsweise Kontaminationen der Siebdruckwerkstücke entstehen. Zudem kann eine Beschichtung sicherstellen, dass sich die gedruckten Werkstücke anschließend gut von dem Druckbett entfernen lassen.

Gemäß einer weiter bevorzugten Ausgestaltung kann zwischen dem Druckbett und der Tragstruktur eine Trennschicht, insbesondere eine als Isolierschicht ausgebildete Trennschicht, angeordnet sein. Eine Trennschicht kann zur Vermeidung und/oder zur Verringerung der Wärmeübertragung zwischen dem Druckbett und der Tragstruktur angeordnet und/oder ausgebildet sein. Es kann auf diese Weise vermieden werden, dass sich die in die Tragstruktur eingebrachte Wärmeenergie nachträglich auf das Druckbett überträgt, wodurch anschließende Druckprozesse beeinträchtigt werden könnten. Insbesondere kann durch ein zu stark erhitztes Druckbett die Gefahr entstehen, dass sich bereits aufgedruckte und getrocknete Druckschichten wieder verflüssigen beziehungsweise eine ungenaue Form einnehmen.

Eine hier in Rede stehende Trennschicht kann zwischen dem Druckbett und der Tragstruktur fixiert sein. Die Trennschicht kann unabhängig von dem Druckbett an der Tragstruktur fixiert sein. Ebenso ist es möglich, dass die Trennschicht unabhängig von der Tragstruktur an dem Druckbett fixiert ist. Eine sichere Positionierung zwischen dem Druckbett und der Tragstruktur kann auf diese Weise aufrechterhalten werden.

Gemäß einer weiter bevorzugten Ausgestaltung kann die Trennschicht lose zwischen dem Druckbett und der Tragstruktur angeordnet sein. Ebenso kann eine solche Trennschicht durch eine Sandwich-Anordnung zwischen dem Druckbett und der Tragstruktur fixiert sein. Es kann bei einer solchen Ausgestaltung davon abgesehen werden, dass die Trennschicht unmittelbar an der Tragstruktur beziehungsweise dem Druckbett fixiert ist, sondern die jeweilige Fixierung ergibt sich vielmehr durch die jeweilige Sandwich-Anordnung. Auch auf diese Weise kann eine sichere Positionierung der Trennschicht zwischen dem Druckbett und der Tragstruktur aufrechterhalten werden.

Die Trennschicht kann in besonders bevorzugter Weise als flexible Matte und/oder flexible Folie ausgebildet sein. Dies ermöglicht eine einfache Handhabung und gute Positionierbarkeit zwischen dem Druckbett und der Tragstruktur.

Die Trennschicht kann ferner zumindest abschnittsweise oder vollständig aus einem Kunststoffmaterial, insbesondere aus einem Polyestermaterial, bestehen. Ein solcher Werkstoff ist kostengünstig in der Anschaffung und kann gute Isolationseigenschaften sicherstellen.

Es ist ebenso möglich, dass die Trennschicht zumindest abschnittsweise oder vollständig aus einem Keramikwerkstoff besteht. Ein solcher Keramikwerkstoff weist eine sehr hohe Hitzebeständigkeit auf und eignet sich damit für einen dauerhaften oder zumindest langlebigen Einsatz.

In noch weiter bevorzugter Weise kann die Trennschicht aus einem hitzestabilisierten und/oder hochtemperaturbeständigen Werkstoff gebildet sein, insbesondere mit einer Temperaturbeständigkeit bis zu 100 °C, bevorzugt bis zu 150 °C, bevorzugt bis zu 200 °C, weiter bevorzugt von bis zu 250 °C. Hierdurch lässt sich eine hohe Betriebssicherheit erzielen, auch bei verhältnismäßig hohen Trocknungstemperaturen für die jeweiligen dreidimensionalen Siebdruckwerkstücke, die auf dem Druckbett schichtweise zu erzeugen sind.

Nach einer weiter bevorzugten Ausgestaltung kann das Druckbett eine größere Dicke aufweisen als die Trennschicht, insbesondere eine um mindestens 10 %, bevorzugt mindestens 20 %, bevorzugt mindestens 30 %, bevorzugt mindestens 40 %, bevorzugt mindestens 50 % größere Dicke als die Trennschicht. Die Trennschicht kann damit verhältnismäßig dünn ausgebildet werden. Damit kann ein zu starkes Auftragen in der Dicke der gesamten Anordnung aus Tragstruktur, Druckbett und Trennschicht vermieden werden. Es lässt sich damit auch bei Anordnung einer Trennschicht ein insgesamt kompakter Aufbau realisieren.

Gemäß einer noch weiter bevorzugten Ausgestaltung kann der Tragboden des Werkstückträgers Unterbrechungen und/oder Öffnungen aufweisen. Das Druckbett würde bei einer solchen Ausgestaltung nicht vollflächig aufliegen. Durch eine derart verringerte Kontaktfläche zwischen dem Druckbett und dem Tragboden kann ein Wärmeeintrag von dem Tragboden auf das Druckbett verringert werden.

Weiter bevorzugt kann der Tragboden Stützstege für die abschnittsweise Stützung des Druckbetts aufweisen. Durch derartige Stützstege kann eine gezielte Lagerung des Druckbetts an vordefinierten Stellen beziehungsweise entlang vordefinierter Abschnitte erfolgen. Gleichzeitig kann durch solche Stützstege die Kontaktfläche zwischen dem Tragboden und dem Druckbett klein gehalten werden. Ferner können Stützstege zur Verbesserung der strukturellen Steifigkeit des Tragbodens und/oder der gesamten Tragstruktur beitragen.

Weiter bevorzugt kann zwischen dem Tragboden und dem Druckbett und/oder auf einer dem Tragboden zugewandten Unterseite des Druckbetts zumindest abschnittsweise ein Freiraum ausgebildet sein, insbesondere ein sich zwischen Stützstegen und/oder zwischen zumindest einem Stützsteg und einer Seitenwand der Einlegekavität erstreckender Freiraum. Ebenso kann es sich um einen durch eine Unterbrechung des Tragbodens definierten Freiraum handeln. Ein solcher Freiraum gewährleistet eine gute Wärmeisolierung zwischen dem Druckbett und dem Tragboden beziehungsweise der Tragstruktur, sodass eine unerwünschte Erwärmung des Druckbetts möglichst vermieden oder zumindest weiter verringert werden kann.

Gemäß einer noch weiter bevorzugten Ausgestaltung kann die Tragstruktur gemeinsam mit dem daran befestigten Druckbett zur temporären Positionierung innerhalb einer Druckeinrichtung und/oder zur temporären Befestigung und/oder zum temporären Festklemmen an einem Förderfahrzeug einer 3D-Siebdruckanlage ausgebildet sein. Ein derart ausgebildeter Werkstückträger lässt sich mithin in geeigneter Weise für die Serienfertigung im Wege des 3D-Siebdrucks einsetzen.

In noch weiter bevorzugter Ausgestaltung kann die Tragstruktur vordefinierte Kontaktflächen für die Einspannung in einer Werkstückträgerlagerung eines Förderfahrzeugs, insbesondere eines Förderfahrzeugs einer 3D-Siebdruckanlage, aufweisen. Über vordefinierte Kontaktflächen kann eine hohe Positioniergenauigkeit des Werkstückträgers relativ zu einem Förderfahrzeug einer 3D-Siebdruckanlage erzielt werden, sodass sich insgesamt eine hohe Reproduzierbarkeit erreichen lässt.

In noch weiter bevorzugter Weise kann die Tragstruktur insgesamt mehr als zwei, mehr als drei oder drei vordefinierte Kontaktflächen für die Einspannung in einer Werkstückträgerlagerung eines Förderfahrzeugs aufweisen. Dabei können bevorzugt zumindest zwei Kontaktflächen auf gegenüberliegenden Seiten der Tragstruktur und/oder bevorzugt zumindest zwei Kontaktflächen auf derselben Seite der Tragstruktur ausgebildet sein. Dies ermöglicht eine geeignete Einspannung und mithin eine sichere Fixierung der Tragstruktur in einer Werkstückträgerlagerung eines Förderfahrzeugs.

Gemäß einer weiter bevorzugten Ausgestaltung können die vordefinierten Kontaktflächen abschnittsweise an einer zwischen einer Oberseite und einer Unterseite der Tragstruktur umlaufenden Außenumfangsfläche der Tragstruktur ausgebildet sein. Die Tragstruktur kann mithin seitlich kontaktiert und eingespannt werden, sodass die Gefahr von lateralen beziehungsweise seitlichen Fehlpositionierungen geringgehalten werden kann.

Weiter bevorzugt können die vordefinierten Kontaktflächen gegenüber angrenzenden Abschnitten der Außenumfangsfläche geneigt ausgebildet sein. Durch eine derart geneigt ausgebildete Kontaktfläche der Tragstruktur kann in besonders einfacher und vorteilhafter Weise eine formschlüssige Befestigung der Tragstruktur und damit des gesamten Werkstückträgers innerhalb einer Werkstückträgerlagerung realisiert werden. Insbesondere kann hierdurch bei einem korrespondierend ausgebildeten Schieber beziehungsweise einer korrespondierend ausgebildeten Verriegelung auf einfache Weise eine formschlüssige Fixierung der Tragstruktur realisiert werden.

Die vordefinierten Kontaktflächen können in bevorzugter Weise mit einem angrenzenden Flächenabschnitt einer Oberseite der Tragstruktur einen Winkel von mehr als 90° einschließen. Zusätzlich oder alternativ können die vordefinierten Kontaktflächen mit einem angrenzenden Flächenabschnitt einer Unterseite der Tragstruktur einen Winkel von weniger als 90° einschließen. Durch das Einspannen der Tragstruktur über derartige Kontaktflächen kann mithin eine Niederhaltekraft erzeugt werden, sodass der Werkstückträger nicht nur in seitlichen beziehungsweise horizontalen Richtungen, sondern auch in einer vertikalen Richtung beziehungsweise Höhenrichtung sicher fixiert werden kann.

Ein weiterer unabhängiger Aspekt der vorliegenden Erfindung betrifft einen Werkstückträger, insbesondere für die Herstellung dreidimensionaler Siebdruckwerkstücke, mit wenigstens einem eine zu bedruckenden Druckfläche aufweisenden Druckbett und mit einer das Druckbett tragenden und gesondert von dem Druckbett ausgebildeten Tragstruktur, wobei die Tragstruktur eine Einlegekavität für das Druckbett aufweist, wobei das Druckbett zumindest abschnittsweise in der Einlegekavität der Tragstruktur eingelassen und auf einem Tragboden der Einlegekavität angeordnet ist und wobei das Druckbett an der Tragstruktur befestigt ist.

Ein noch weiterer unabhängiger Aspekt der vorliegenden Erfindung betrifft einen Werkstückträger, insbesondere für die Herstellung dreidimensionaler Siebdruckwerkstücke, mit wenigstens einem Druckbett, das eine zu bedruckende Druckfläche aufweist, und mit einer das Druckbett tragenden und gesondert von dem Druckbett ausgebildeten Tragstruktur, wobei die Tragstruktur einen Tragboden und zumindest eine Seitenbegrenzung für das Druckbett aufweist, wobei das Druckbett auf dem Tragboden angeordnet ist und wobei zumindest eine seitliche Bewegung des Druckbetts in der auf dem Tragboden angeordneten Stellung durch die Seitenbegrenzung begrenzt ist. Durch eine solche Ausgestaltung kann die Positionierung des Druckbetts auf dem Tragboden mit nur geringem Aufwand und hoher Positionsgenauigkeit vorgenommen werden.

Ein noch weiterer unabhängiger Aspekt der vorliegenden Erfindung betrifft einen Werkstückträger, insbesondere für die Herstellung dreidimensionaler Siebdruckwerkstücke, mit wenigstens einem Druckbett, das eine zu bedruckende Druckfläche aufweist, und mit einer das Druckbett tragenden und gesondert von dem Druckbett ausgebildeten Tragstruktur, wobei die Position und/oder Ausrichtung des Druckbetts ausgehend von einer von dem Druckbett abgewandten Seite der Tragstruktur optisch erfassbar ist.

Ein noch weiterer unabhängiger Aspekt der vorliegenden Erfindung betrifft einen Werkstückträger, insbesondere für die Herstellung dreidimensionaler Siebdruckwerkstücke, mit wenigstens einem Druckbett, das eine zu bedruckende Druckfläche aufweist, und mit einer das Druckbett tragenden Tragstruktur, wobei die Tragstruktur zumindest eine Sichtöffnung aufweist, die in Draufsicht durch einen Eckbereich und/oder Kantenbereich des Druckbetts abschnittsweise überdeckt wird, und/oder wobei zumindest eine Ecke und/oder Kante des Druckbetts durch eine Sichtöffnung der Tragstruktur hindurch optisch erfassbar ist.

Ein weiterer unabhängiger Aspekt der vorliegenden Erfindung betrifft eine Tragstruktur, insbesondere für einen voranstehend beschriebenen Werkstückträger, mit einem Tragboden zur Anordnung eines eine zu bedruckendende Druckfläche aufweisenden Druckbetts und mit zumindest einem Anschlag für ein auf dem Tragboden angeordnetes Druckbett, wobei ein auf dem Tragboden angeordnetes Druckbett in zumindest einer seitlichen Richtung an dem Anschlag zu Anlage bringbar ist. Zusätzlich oder alternativ kann bei einer Tragstruktur eine Seitenbegrenzung für das Druckbett vorgesehen sein, wobei ein auf dem Tragboden angeordnetes Druckbett in zumindest einer seitlichen Bewegung durch eine solche Seitenbegrenzung begrenzt ist.

Ein noch weiterer unabhängiger Aspekt der vorliegenden Erfindung betrifft eine Tragstruktur, insbesondere für einen Werkstückträger nach einem der vorstehenden Aspekte, mit einen Tragboden zur Anordnung eines eine zu bedruckende Druckfläche aufweisenden Druckbetts und mit zumindest einem Sichtbereich, durch den die Position und/oder Ausrichtung eines auf dem Tragboden angeordneten Druckbetts hindurch optisch erfassbar ist.

Ein weiterer unabhängiger Aspekt der vorliegenden Erfindung betrifft ein Förderfahrzeug, insbesondere für eine nachfolgend beschriebene Vorrichtung zur Herstellung von dreidimensionalen Siebdruckwerkstücken, mit einer Werkstückträgerlagerung und mit einem voranstehend beschriebenen Werkstückträger, wobei der Werkstückträger in der Werkstückträgerlagerung gelagert und/oder befestigt ist.

Ebenso betrifft die vorliegende Erfindung ein Förderfahrzeug, insbesondere für eine Vorrichtung zur Herstellung von dreidimensionalen Siebdruckwerkstücken, mit einer Werkstückträgerlagerung, in der ein voranstehend beschriebener Werkstückträger lagerbar und/oder befestigbar ist.

Ein weiterer unabhängiger Aspekt der vorliegenden Erfindung betrifft eine Vorrichtung zur Herstellung von dreidimensionalen Siebdruckwerkstücken, insbesondere eine 3D-Siebdruckanlage, mit einer Druckeinrichtung für die schichtweise Erzeugung zumindest eines Siebdruckwerkstücks in mehreren Druckvorgängen und mit einer Transporteinrichtung für den automatisierten Transport zumindest eines voranstehend beschriebenen Werkstückträgers hin zur und/oder weg von der Druckeinrichtung, wobei die Transporteinrichtung bevorzugt wenigstens eine Transportschiene sowie ein auf der Transportschiene beweglich angeordnetes Förderfahrzeug mit dem Werkstückträger aufweist.

Gemäß einer weiter bevorzugten Ausgestaltung kann die Transporteinrichtung für den automatisierten Transport zumindest eines Siebdruckwerkstücks und/oder eines Werkstückträgers hin zu und/oder weg von einem Drucktisch der Druckeinrichtung eingerichtet sein. Ein solcher Drucktisch kann insbesondere eine Drucktischplatte aufweisen.

Ein Drucktisch beziehungsweise eine Drucktischplatte kann in vorteilhafter Weise zur Durchführung eines Druckvorgangs mit einer Unterseite eines Werkstückträgers in Kontakt gebracht werden und diesen während des Druckvorgangs abstützen. Ein Drucktisch beziehungsweise eine Drucktischplatte dient in bevorzugter Weise also nicht dem unmittelbaren Bedrucken beziehungsweise als unmittelbare Druckunterlage oder zur Bereitstellung einer zu bedruckenden Oberfläche. Vielmehr kann ein Drucktisch beziehungsweise eine Drucktischplatte in vorteilhafter Weise zur temporären Kontaktierung, Anhebung und/oder Unterstützung eines Werkstückträgers ausgebildet und/oder angeordnet sein.

Gemäß einer bevorzugten Ausgestaltung der vorliegenden Erfindung kann die Vorrichtung für die Produktion unter Reinraumbedingungen ausgebildet und/oder eingerichtet sein. Insbesondere kann die Vorrichtung für die Produktion unter Reinraumbedingungen gemäß den Reinraumklassen A, B, C und/oder D nach EU-GMP ausgebildet und/oder eingerichtet sein.

Weiter bevorzugt kann eine erfindungsgemäße Vorrichtung zur Herstellung von Siebdruckwerkstücken für die Anwendung in der Medizintechnik, in der Optik- und/oder Lasertechnologie, in der Luft- und Raumfahrtechnik, in der Halbleitertechnik, in der Biotechnologie und/oder in der medizinischen und/oder in der pharmakologischen Forschung ausgebildet und/oder eingerichtet sein.

Ebenso kann die erfindungsgemäße Vorrichtung zur Herstellung von Siebdruckwerkstücken für den Einsatz und/die Anwendung als medizinische und/oder pharmazeutische Produkte, Implantate und/oder sterile Produkte und/oder Medikamente und/oder für den Einsatz und/die Anwendung als Tabletten zur Wirkstoffverabreichung ausgebildet und/oder eingerichtet sein.

Ein weiter unabhängiger Aspekt der vorliegenden Erfindung betrifft eine Vorrichtung zur Herstellung von dreidimensionalen Siebdruckwerkstücken, insbesondere 3D-Siebdruckanlage, mit einer Druckeinrichtung für die schichtweise Erzeugung zumindest eines Siebdruckwerkstücks in mehreren Druckvorgängen und mit wenigstens einem Werkstückträger nach einem der vorstehenden Aspekte, wobei der Werkstückträger zur Durchführung eines Druckvorgangs temporär innerhalb der Druckeinrichtung positionierbar ist und wobei die Druckeinrichtung eine Lageerfassungseinrichtung für das Druckbett des Werkstückträgers aufweist.

Ein noch weiterer unabhängiger Aspekt der vorliegenden Erfindung betrifft eine Druckeinrichtung, insbesondere für eine voranstehend beschriebene Vorrichtung, mit einem ein Drucksieb aufweisenden Druckoberwerk, mit einer Drucktischplatte, auf der ein Werkstückträger zur Durchführung eines Druckvorgangs temporär positionierbar und/oder fixierbar ist und/oder durch die ein Werkstückträger unterseitig kontaktierbar ist, und mit einer Lageerfassungseinrichtung zur Lageerfassung des Druckbetts eines auf der Drucktischplatte positionierten Werkstückträgers.

Ein weiter unabhängiger Aspekt der vorliegenden Erfindung betrifft ein Verfahren zur Herstellung eines dreidimensionalen Siebdruckwerkstücks, insbesondere eines pharmazeutischen Erzeugnisses und/oder mit einer Vorrichtung nach einem der vorstehenden Aspekte, bei dem mit einer Druckeinrichtung und/oder mit einer voranstehend beschriebenen Vorrichtung zur Herstellung von dreidimensionalen Siebdruckwerkstücken, zumindest ein Siebdruckwerkstück in mehreren Druckvorgängen schichtweise auf einem voranstehend beschriebenen Werkstückträger erzeugt wird und bei dem mit einer Transporteinrichtung der Werkstückträger mit einem Siebdruckwerkstück automatisiert hin zur und/oder weg von der Druckeinrichtung transportiert wird.

Ein noch weiterer unabhängiger Aspekt der vorliegenden Erfindung betrifft ein Verfahren zur Herstellung eines dreidimensionalen Siebdruckwerkstücks, insbesondere eines pharmazeutischen Erzeugnisses und/oder mit einer Vorrichtung nach einem der vorstehenden Aspekte, bei dem in einer Druckeinrichtung zumindest ein Siebdruckwerkstück in mehreren Druckvorgängen schichtweise erzeugt wird, bei dem zur Durchführung eines Druckvorgangs ein Werkstückträger nach einem der vorstehenden Aspekte temporär innerhalb der Druckeinrichtung angeordnet wird und bei dem eine Lageerfassungseinrichtung der Druckeinrichtung eine Lageerfassung des Druckbetts des Werkstückträgers durchführt.

Ein noch weiterer unabhängiger Aspekt der vorliegenden Erfindung betrifft eine Verwendung eines Werkstückträgers gemäß der voranstehenden Beschreibung zur Herstellung eines pharmazeutischen Erzeugnisses, insbesondere zur Herstellung von Tabletten im Wege des dreidimensionalen Siebdrucks.

Ein noch weiterer unabhängiger Aspekt der vorliegenden Erfindung betrifft ein pharmazeutisches Erzeugnis, insbesondere eine Tablette, hergestellt unter Verwendung eines voranstehend beschriebenen Werkstückträgers und/oder eines voranstehend beschriebenen Förderfahrzeugs und/oder einer voranstehend beschriebenen Vorrichtung zur Herstellung von dreidimensionalen Siebdruckwerkstücken und/oder mit einem voranstehend beschriebenen Verfahren.

Die vorstehend in Bezug auf den Werkstückträger beschriebenen Einzelheiten und unabhängigen Aspekte gelten in gleicher Weise auch für eine vorstehend beschriebene Tragstruktur, für ein vorstehend beschriebenes Förderfahrzeug sowie auch für eine erfindungsgemäße Vorrichtung zur Herstellung von dreidimensionalen Siebdruckwerkstücken. Ebenso gelten die vorstehendend in Bezug auf den Werkstückträger beschriebenen Einzelheiten und unabhängigen Aspekte in gleicher Weise auch für die voranstehend beschriebenen unabhängigen Aspekte betreffend ein Verfahren zur Herstellung eines dreidimensionalen Siebdruckwerkstücks, die Verwendung eines Werkstückträgers sowie auch betreffend ein pharmazeutisches Erzeugnis gemäß der vorliegenden Erfindung.

Nachfolgend wird die Erfindung beispielhaft anhand vorteilhafter Ausführungsformen unter Bezugnahme auf die beigefügten Figuren beschrieben.

Es zeigen jeweils schematisch:
- Figur 1: eine perspektivische Ansicht eines erfindungsgemäßen Werkstückträgers gemäß einer Ausführungsform der vorliegenden Erfindung,
- Figur 2: eine Schnittdarstellung des Werkstückträgers entlang der Schnittlinie A-A von Figur 1,
- Figur 3: eine perspektivische Ansicht eines erfindungsgemäßen Werkstückträgers gemäß einer weiteren Ausführungsform,
- Figur 4: eine perspektivische Ansicht eines erfindungsgemäßen Werkstückträgers gemäß einer noch weiteren Ausführungsform.
- Figur 5: eine Draufsicht auf einen Werkstückträger gemäß Figur 4,
- Figur 6: eine Unteransicht eines Werkstückträgers gemäß Figur 4 und 5,
- Figur 7: eine Schnittdarstellung entlang der Schnittlinie A-A von Figur 6,
- Figur 8: eine Seitenansicht eines Werkstückträgers gemäß Figuren 4 bis 6,
- Figur 9: eine perspektivische Ansicht eines erfindungsgemäßen Werkstückträgers gemäß einer noch weiteren Ausführungsform,
- Figur 10: eine perspektivische Ansicht des Werkstückträgers gemäß Figur 9 mit daran angeordneten Werkzeugen zur Betätigung von Federvorrichtungen zum Festklemmen und/oder Einspannen des Druckbetts,
- Figur 11: eine Draufsicht auf einen Werkstückträger gemäß Figur 9 und 10,
- Figur 12: eine Unteransicht eines Werkstückträgers gemäß Figuren 9 bis 11,
- Figur 13: eine Schnittdarstellung eines Werkstückträgers gemäß Figuren 9 bis 12,
- Figur 14: eine Seitenansicht eines Werkstückträgers gemäß Figur 10 mit daran angeordneten Werkzeugen,
- Figur 15: eine perspektivische Ansicht eines erfindungsgemäßen Werkstückträgers gemäß einer noch weiteren Ausführungsform,
- Figur 16: eine Draufsicht auf einen Werkstückträger gemäß Figur 15,
- Figur 17: eine Unteransicht eines Werkstückträgers gemäß Figuren 15 und 16,
- Figur 18: eine Schnittdarstellung entlang der Schnittlinie A-A von Figur 16,
- Figur 19: eine Seitenansicht eines Werkstückträgers gemäß Figuren 15 bis 18,
- Figur 20: eine Detailansicht eines Werkstückträgers gemäß Figuren 15 bis 19,
- Figur 21: eine perspektivische Ansicht eines erfindungsgemäßen Werkstückträgers gemäß einer noch weiteren Ausführungsform,
- Figur 22: eine Detailansicht eines Werkstückträgers gemäß Figur 21,
- Figur 23: eine perspektivische Ansicht eines erfindungsgemäßen Werkstückträger gemäß einer noch weiteren Ausführungsform
- Figur 24: eine perspektivische Ansicht einer erfindungsgemäßen Vorrichtung zur Herstellung von dreidimensionalen Siebdruckwerkstücken gemäß einer Ausführungsform,
- Figur 25: eine Draufsicht auf die Vorrichtung von Figur 1,
- Figur 26: eine perspektivische Ansicht der Vorrichtung von Figur 1 mit offener Darstellung der Transporteinrichtung ohne Einhausung,
- Figur 27: eine Draufsicht auf die Vorrichtung von Figur 32,
- Figur 28: eine perspektivische Ansicht einer erfindungsgemäßen Vorrichtung mit offener Darstellung der Druck- und Trocknungseinrichtungen ohne Einhausung,
- Figur 29: eine Draufsicht auf die Vorrichtung von Figur 28,
- Figur 30: eine perspektivische Ansicht eines Teils einer Druckeinrichtung gemäß einem Ausführungsbeispiel,
- Figur 31: eine Seitenansicht der Druckeinrichtung gemäß Figur 30,
- Figur 32: eine weitere Seitenansicht der Druckeinrichtung gemäß Figur 30 und 31,
- Figur 33: eine Draufsicht auf die Druckeinrichtung gemäß Figuren 30 bis 32,
- Figur 34: eine perspektivische Ansicht eines Teils einer Druckeinrichtung gemäß Figuren 30 bis 33 mit einem darauf angeordneten Werkstückträger gemäß einer Ausführungsform der vorliegenden Erfindung,
- Figur 35: eine Draufsicht auf die Druckeinrichtung gemäß Figur 34 mit darauf angeordnetem Werkstückträger,
- Figur 36: eine Detailansicht A gemäß Figur 35,
- Figur 37: eine perspektivische Ansicht einer Druckeinrichtung ohne darauf angeordnetem Werkstückträger.

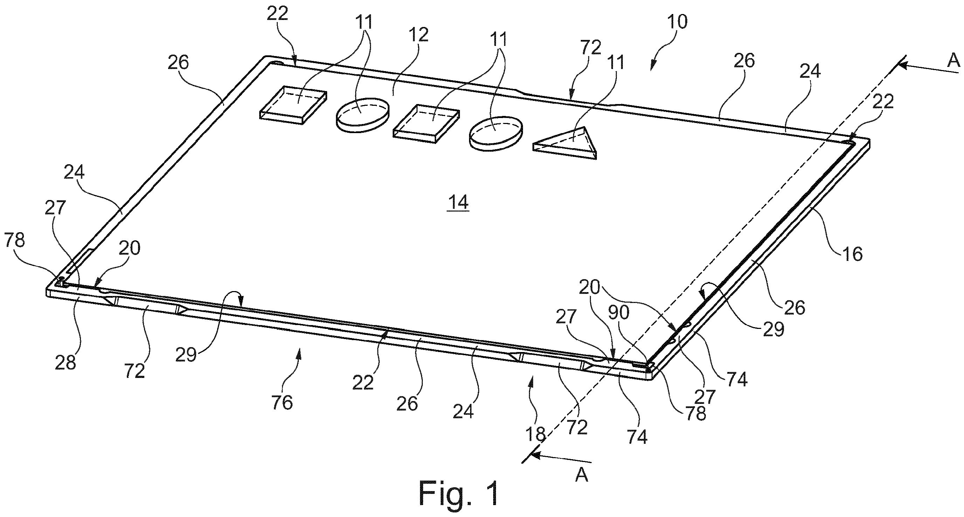

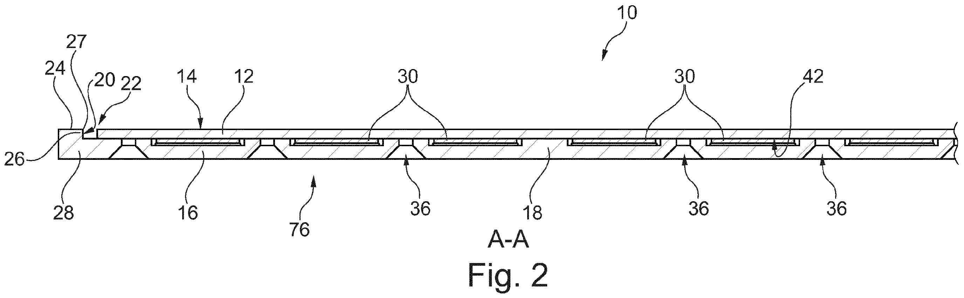

Figur 1 zeigt eine perspektivische Ansicht eines Werkstückträgers 10 gemäß einer Ausführungsform der vorliegenden Erfindung. Der Werkstückträger 10 ist insbesondere für die Herstellung dreidimensionaler Siebdruckwerkstücke 11, welche hier exemplarisch in schematischen Formen dargestellt sind, ausgebildet. Ein Werkstückträger 10 eignet sich insbesondere für die Herstellung von pharmazeutischen Erzeugnissen, insbesondere Arzneimitteln beziehungsweise Tabletten, im Wege des 3D-Siebdrucks. Figur 2 zeigt eine Schnittdarstellung des Werkstückträgers 10 von Figur 1 entlang der Schnittlinie A-A.

Der Werkstückträger 10 weist wenigstens ein Druckbett 12 auf, das eine zu bedrucken Druckfläche 14 bildet. Mithin kann es sich bei der oberseitigen Oberfläche des Druckbetts 12 um eine zu bedruckende Druckfläche 14 handeln. Auf der Druckfläche 14 können im Wege des 3D-Siebdrucks dreidimensionale Siebdruckwerkstücke 11 schichtweise in mehreren Druckvorgängen hergestellt werden.

Ferner weist der Werkstückträger 10 eine das Druckbett 12 tragende und gesondert von dem Druckbett 12 ausgebildete Tragstruktur 16 auf. Die Tragstruktur 16 weist einen Tragboden 18 auf, auf dem das Druckbett 12 angeordnet ist. Das Druckbett 12 kann auf dem Tragboden 18 aufliegen.

Ferner weist die Tragstruktur 16 zumindest einen Anschlag 20 für das Druckbett 12 auf, wobei das Druckbett 12 in der auf dem Tragboden 18 angeordneten Stellungen in zumindest einer seitlichen Richtung an dem Anschlag 20 zur Anlage bringbar ist. In der in Figur 2 gezeigten Darstellung ist zur besseren Sichtbarkeit das Druckbett 12 in seitlicher Richtung von dem Anschlag 20 beabstandet, kann jedoch an dem Anschlag 20 zur Anlage bringbar sein. In einer an dem Anschlag 20 zur Anlage gebrachten Stellung des Druckbetts 12 kann dessen Position mit verhältnismäßig hoher Genauigkeit relativ zur Tragstruktur 16 festgelegt sein, zumindest in einer seitlichen Richtung.

Wie in den Figuren 1 und 2 dargestellt ist, kann die Tragstruktur 16 eine Einlegekavität 22 für das Druckbett 12 aufweisen. Das Druckbett 12 kann zumindest abschnittsweise in der Einlegekavität 22 eingelassen sein, bevorzugt vollständig in der Einlegekavität 22 eingelassen sein. Insbesondere kann die Druckfläche 14 des Druckbetts 12 bündig mit Flächenabschnitten 24 der Oberseite der Tragstruktur 14 ausgerichtet sein, wobei die Flächenabschnitte 24 die Einlegekavität 22 umgeben.

Die Einlegekavität 22 kann zumindest abschnittsweise durch den Tragboden 18, durch eine oder mehrere Seitenwände 26 beziehungsweise durch den zumindest einen Anschlag 20 begrenzt sein. Insbesondere kann bei einer Ausgestaltung mit Einlegekavität 22 der zumindest eine Anschlag 20 durch eine beziehungsweise an einer Seitenwand 26 der Einlegekavität 22 gebildet sein. Der zumindest eine Anschlag 20 kann bevorzugt durch einen Seitenvorsprung 27 einer Seitenwand 26 der Einlegekavität 22 gebildet sein.

Die Tragstruktur 14 kann insgesamt eine Mehrzahl von Anschlägen 20 für das Druckbett 12 aufweisen. Die Tragstruktur 14 kann insgesamt mehrere als Seitenvorsprünge 27 einer Seitenwand 26 oder mehrerer Seitenwände 26 ausgebildete Anschläge 20 aufweisen. Das Druckbett 12 kann in der auf dem Tragboden 18 angeordneten Stellung in mehreren seitlichen Richtungen an mehreren Anschlägen 20 zur Anlage bringbar sein. Bevorzugt kann die Tragstruktur genau drei Anschläge 20 oder genau drei als Seitenvorsprünge 27 mehrerer Seitenwände 26 ausgebildete Anschläge 20 aufweisen

Wie dem Ausführungsbeispiel in den Figuren 1 und 2 zu entnehmen ist, kann einer der Anschläge 20 an einer Seitenwand 26 der Einlegekavität 22 gebildet sein und zwei weitere Anschläge 20 können an einer benachbarten Seitenwand 26 der Einlegekavität gebildet sein. Ebenso kann jeweils ein Anschlag 20 an jeweils einer Seitenwand 26 der Einlegekavität 22 gebildet sein. Benachbarte und/oder gegenüberliegende Seitenwände 26 der Einlegekavität 22 können mithin unterschiedliche Anschläge 20 bilden.

Zwischen dem Druckbett 12 und einer Seitenwand 26 der Einlegekavität 22 kann ferner ein Freistellungsabschnitt 29 ausgebildet sein. Ein solcher Freistellungsabschnitt 29 kann insbesondere als Spalt zwischen dem Druckbett 12 und einer Seitenwand 26 der Einlegekavität 22 ausgebildet sein. Entlang eines Freistellungsabschnitts 29 kann das Druckbett 12 frei von einer Kontaktierung der jeweiligen Seitenwand 26 der Einlegekavität 22 sein.

Ein Freistellungsabschnitt 29 kann sich dabei zwischen zwei Anschlägen 20 einer Seitenwand 26 der Einlegekavität 22 erstrecken beziehungsweise zwischen zwei Seitenvorsprüngen 27 einer Seitenwand 26 der Einlegekavität 22. Ebenso kann sich ein Freistellungsabschnitt 29 angrenzend an einen Anschlag 20 beziehungsweise angrenzend an einen Seitenvorsprung 27 einer Seitenwand 26 der Einlegekavität 22 erstrecken. Der Freistellungsabschnitt ist bei einer solchen Erstreckung ebenso zwischen der Seitenfläche des Druckbetts 12 und der jeweiligen Seitenwand 26 der Einlegekavität 22 ausgebildet.

Mehrere Anschläge 20 können in bevorzugter Weise durch einen einzigen Formkörper gebildet sein. Ein solcher Formkörper kann beispielsweise mehrere Seitenwände 26 der Einlegekavität 22 bilden. In einer solchen Ausgestaltung können mehrere Seitenwände 26 einstückig miteinander ausgebildet sein.

Die Tragstruktur 16 kann in bevorzugter Weise einen Rahmenabschnitt 28 aufweisen, der mit dem Tragboden 18 verbunden ist. Der Rahmenabschnitt 28 kann eine größere Dicke aufweisen als der Tragboden 18. Der zumindest eine Anschlag 20 kann hierbei an dem Rahmenabschnitt 28 ausgebildet und/oder angeordnet sein. Insbesondere kann der Rahmenabschnitt 28 zumindest eine Seitenwand 26 der Einlegekavität 22 aufweisen oder diese bilden. Dementsprechend kann die Einlegekavität 22 zumindest abschnittsweise durch den Rahmenabschnitt 28 und den Tragboden 18 begrenzt sein. Sämtliche Seitenwände 26 der Einlegekavität 22 können in bevorzugter Weise an dem Rahmenabschnitt 28 ausgebildet sein. Folglich können auch die an den jeweiligen Seitenwänden 26 ausgebildeten Seitenvorsprünge 27 an dem Rahmenabschnitt 28 ausgebildet sein.

In noch weiter bevorzugter Weise können der Rahmenabschnitt 28 und der Tragboden 18 einstückig miteinander verbunden ausgebildet sein.

Alternativ kann der Tragboden 18 auch gesondert von dem Rahmenabschnitt 28 ausgebildet und an diesem befestigt sein, was hier nicht näher dargestellt ist. Bei einer solchen Befestigung kann der Tragboden 18 schwimmend lagernd an dem Rahmenabschnitt 28 befestigt sein, insbesondere zum Ausgleich von temperaturbedingtem Ausdehnungsverhalten des Tragbodens 18 relativ zum Rahmenabschnitt 28.

Der zumindest eine Anschlag 20 beziehungsweise der als Seitenvorsprung 27 einer Seitenwand 26 ausgebildete Anschlag 20 kann in bevorzugter Weise als Seitenbegrenzung für das Druckbett 12 ausgebildet sein. Insbesondere können mehrere Anschläge 20 mehrere Seitenbegrenzungen für unterschiedliche Seiten des Druckbetts 12 bilden. Der zumindest eine Anschlag 20 kann dabei zur flächigen Anlage des Druckbetts 12 in einer seitlichen Richtung ausgebildet sein, insbesondere an einer Anlagefläche des Anschlags 20. Ein als Seitenbegrenzung ausgebildeter Anschlag 20 kann in besonders bevorzugter Weise eine gesamte Seite des Druckbetts 12 oder einen Seitenabschnitt des Druckbetts 12 begrenzen und somit eine besonders sichere Anlage des Druckbetts 12 in seitlicher Richtung ermöglichen.

Der Anschlag 20 kann sich relativ zum Tragboden 18 entlang einer Dickenrichtung der Tragstruktur 16 und/oder entlang einer Dickenrichtung des Druckbetts 12 erstrecken. Die Höhe des Anschlags 20 relativ zum Tragboden 18 in einer Dickenrichtung der Tragstruktur 16 und/oder einer Dickenrichtung des Druckbetts 12 kann kleiner oder gleich der Dicke des Druckbetts 12 bemessen sein. Mithin kann die Druckfläche 14 des Druckbetts 12 bündig mit Flächenabschnitten 24 der Oberseite der Tragstruktur 16 ausgerichtet sein, wie voranstehend in Bezug auf das vollständige Einlassen des Druckbetts 12 in der Einlegekavität 22 beschrieben worden ist.

In weiter bevorzugter Weise kann das Druckbett 12 an der Tragstruktur 16 befestigt sein. Das Druckbett 12 kann insbesondere kraftschlüssig und/oder formschlüssig und/oder stoffschlüssig an der Tragstruktur 16 und/oder innerhalb der Einlegekavität 22 der Tragstruktur 16 befestigt sein. Die Befestigung des Druckbetts 12 an der Tragstruktur 16 kann insbesondere an einer in seitlicher Richtung an zumindest einem Anschlag 20 oder mehreren Anschlägen 20 anliegenden Stellungen gegeben beziehungsweise erfolgt sein.

In der Ausführungsform gemäß den Figuren 1 und 2 kann das Druckbett 12 magnetisch an der Tragstruktur 16 beziehungsweise innerhalb der Einlegekavität 22 befestigt sein. Das Druckbett 12 kann zumindest durch eine Magnetfolie 30 an der Tragstruktur 16 und/oder innerhalb der Einlegekavität 22 befestigt sein. Eine Magnetfolie 30 kann beispielsweise an dem Tragboden 18 festgeklebt und/oder in dem Tragboden 18 eingelassen und/oder festgeklebt sein, wie sich insbesondere aus Figur 2 ergibt.

Soweit das Druckbett 12 aus einem magnetischen Material besteht, kann über die Magnetfolien 30 eine kraftschlüssige Befestigung des Druckbetts 12 an der Tragstruktur 16 erfolgen. Ebenso ist es möglich, dass an der Unterseite des Druckbetts 12 wiederum Magnetfolien 30 angeordnet beziehungsweise festgeklebt sind. Derartige an der Unterseite des Druckbetts 12 befestigte Magnetfolien 30 können mit einem magnetischen Werkstoff der Tragstruktur 18 zusammenwirken und/oder mit Magnetfolien 30, die an der Tragstruktur 16 angeordnet beziehungsweise festgeklebt sind.

Anstelle von Magnetfolien 30 können für die Befestigung des Druckbetts 12 an der Tragstruktur 16 auch sogenannte Neodym-Magnete eingesetzt werden, die eine besonders hohe Haltekraft sicherstellen können.

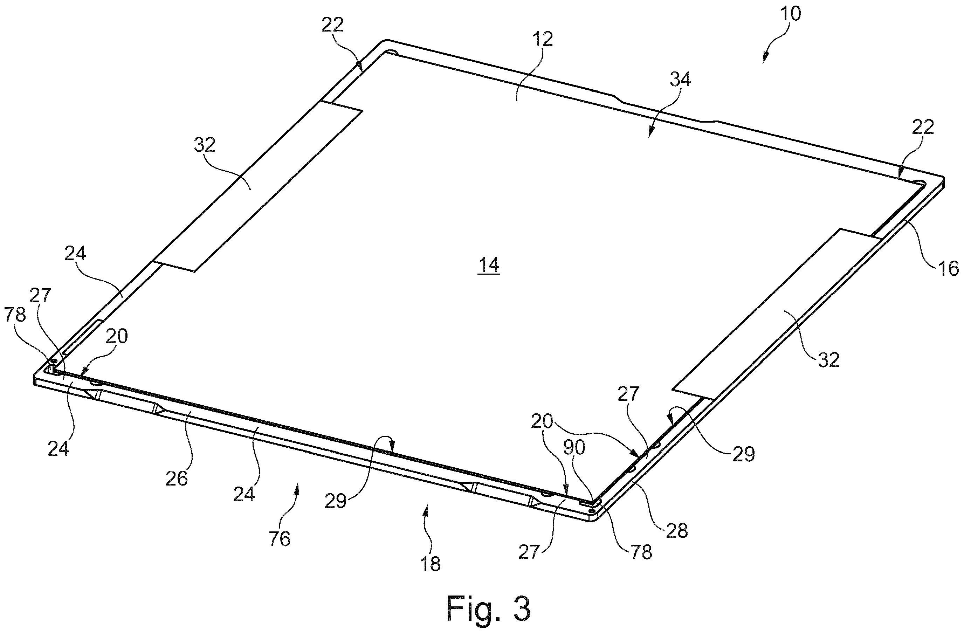

Figur 3 zeigt eine perspektivische Ansicht eines Werkstückträgers 10 gemäß einer weiteren Ausführungsform der vorliegenden Erfindung. In der Ausführungsform gemäß Figur 3 ist das Druckbett 12 ebenfalls in einer Einlegekavität 22 der Tragstruktur 16 eingelassen. Dabei ist das Druckbett 12 an der Tragstruktur 16 und/oder innerhalb der Einlegekavität 22 festgeklebt. Eine solche Befestigung kann insbesondere durch ein Klebeband 32 erfolgen. Insbesondere kann an gegenüberliegenden Enden des Druckbetts 12 eine Befestigung mittels Klebeband 32 vorgesehen sein. Das Klebeband 32 kann hierzu auf einer von dem Tragboden 18 abgewandten Oberseite 34 des Druckbetts 12 überlappend auf dem Druckbett 12 und der Tragstruktur 16 festgeklebt sein. Das Klebeband 32 kann sich mithin über einen Abschnitt der Druckfläche 14 beziehungsweise der Oberseite 34 des Druckbetts 12 und auch über Flächenabschnitte 24 der Oberseite der Tragstruktur 16 erstrecken und hierdurch eine einfache und robuste Fixierung des Druckbetts 12 an der Tragstruktur 16 sicherstellen.

Zusätzlich oder alternativ kann auch zwischen dem Druckbett 12 und dem Tragboden 18 der Tragstruktur 16 ein Klebeband zur Festklebung des Druckbetts 12 an der Tragstruktur 16 vorgesehen sein, was hier nicht näher dargestellt ist.

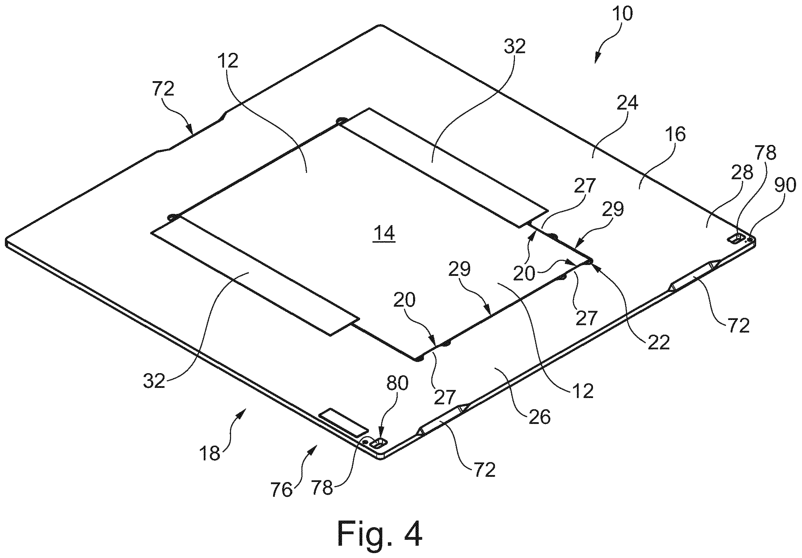

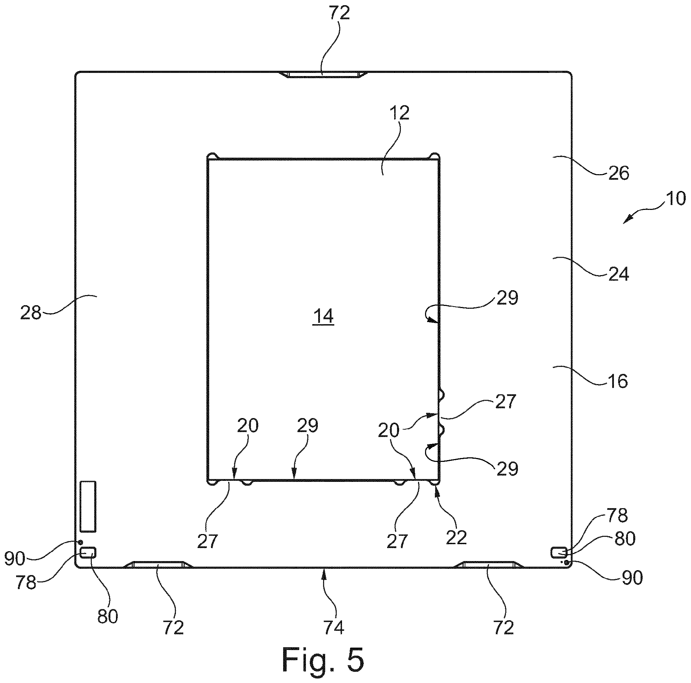

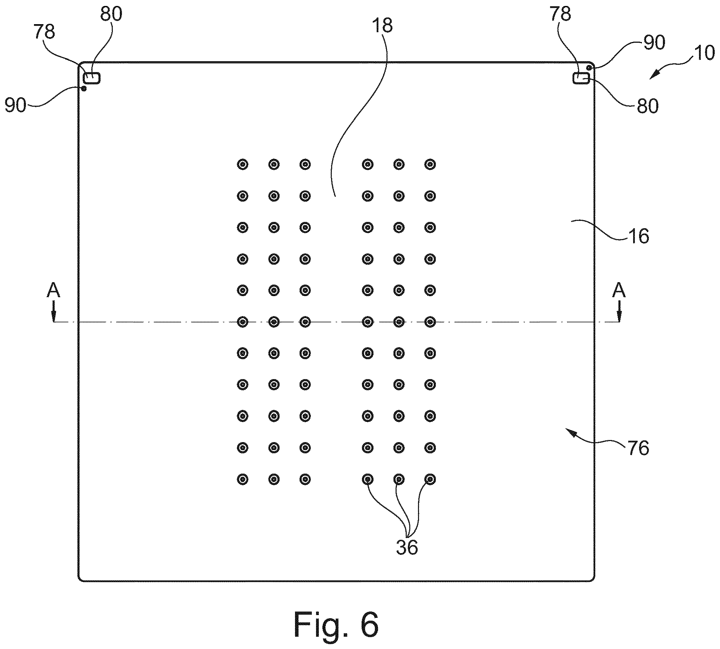

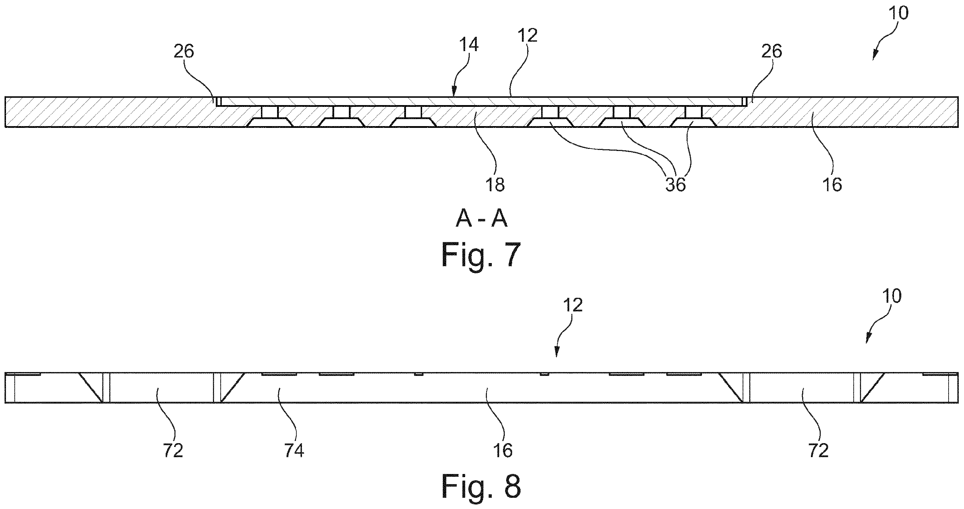

Die Figuren 4 bis 8 zeigen einen Werkstückträger 10 gemäß einem noch weiteren Ausführungsbeispiel der vorliegenden Erfindung. Bei dem Ausführungsbeispiel gemäß Figuren 4 bis 8 ist eine Befestigung des Druckbetts 12 an der Tragstruktur 16 ebenfalls mittels Klebebändern 32 realisiert. Im Unterschied zu der Ausführungsform in Figur 3 ist in dem Ausführungsbeispiel gemäß Figuren 4 bis 8 das Druckbett 12 relativ zur Tragstruktur 16 deutlich kleiner ausgebildet. Der Rahmenabschnitt 28 der Tragstruktur 16 weist damit breitere Seitenwände 26 auf als in dem Ausführungsbeispiel gemäß Figur 3. Dementsprechend ist der Tragboden 18 in dem Ausführungsbeispiel gemäß Figuren 4 bis 8 im Verhältnis kleiner bemessen als in dem Ausführungsbeispiel gemäß Figur 3.

Wie in Figuren 2, 6 sowie 7 dargestellt, kann der Tragboden 18 zumindest eine durchgehende Ansaugöffnung 36 aufweisen, insbesondere eine Mehrzahl von Ansaugöffnungen 36. Durch die Ansaugöffnungen 36 kann das Druckbett 12 mit einem Unterdruck beaufschlagt werden beziehungsweise kann über eine solche Ansaugöffnung 36 ein unterseitiges Ansaugen des Druckbetts 12 für die temporäre Fixierung innerhalb einer nachfolgend noch näher zu beschreibenden Druckeinrichtung einer 3D-Siebdruckanlage erfolgen.

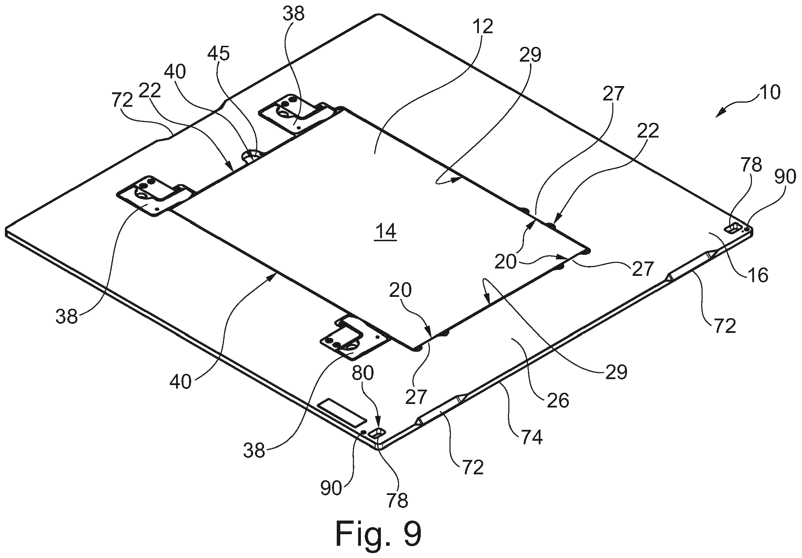

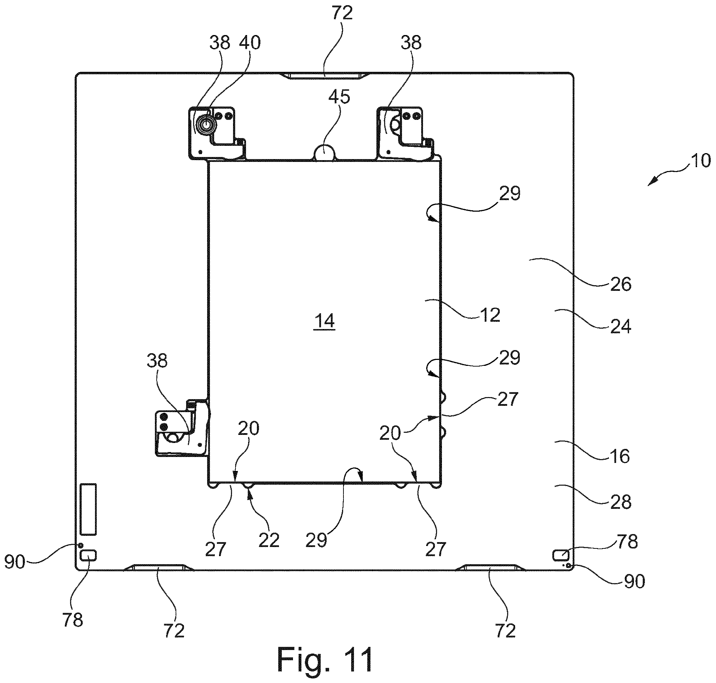

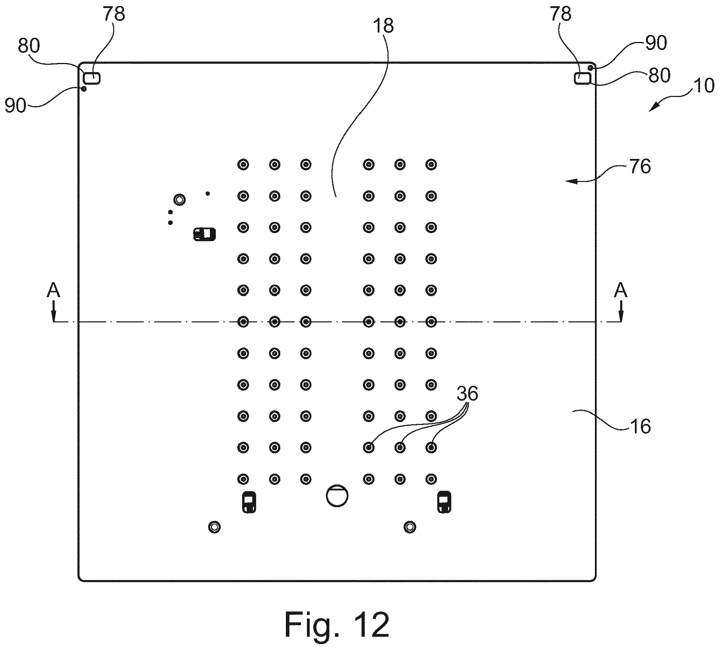

Die Figuren 9 bis 14 zeigen eine weitere Ausführungsform eines Werkstückträgers 10 gemäß der vorliegenden Erfindung. In der Ausführungsform gemäß den Figuren 9 bis 14 ist das Druckbett 12 durch wenigstens eine Federvorrichtung 38 an der Tragstruktur 16 und/oder innerhalb der Einlegekavität 22 festgeklemmt. Durch die wenigstens eine Federvorrichtung 38 kann das Druckbett 12 seitlich gegen zumindest einen Anschlag 20 beziehungsweise gegen wenigstens eine Seitenwand 26 und/oder gegen einen Seitenvorsprung 27 einer Seitenwand 26 der Einlegekavität 22 geklemmt und/oder gespannt sein. Insbesondere können mehrere Federvorrichtungen 38 vorgesehen sein, durch die das Druckbett 12 an der Tragstruktur und/oder innerhalb der Einlegekavität 22 und/oder gegen zumindest einen Anschlag 20 oder gegen mehrere Anschläge 20 beziehungswese gegen mehrere Seitenwände 26 der Einlegekavität 22 oder gegen mehrere Seitenvorsprünge 27 festgeklemmt ist.

Hierzu kann die wenigstens eine Federvorrichtung 38 seitlich auf das Druckbett 12 wirken, insbesondere auf eine Seitenfläche 40 des Druckbetts 12, die zwischen der dem Tragboden 18 abgewandten Oberseite 34 des Druckbetts 12 und der dem Tragboden 18 zugewandten Unterseite 42 des Druckbetts 12 verläuft. In besonders vorteilhafter Weise können mehrere Federvorrichtungen 38 seitlich auf das Druckbett 12 wirken, nämlich auf mehrere zueinander angrenzende Seitenflächen 40 des Druckbetts 12.

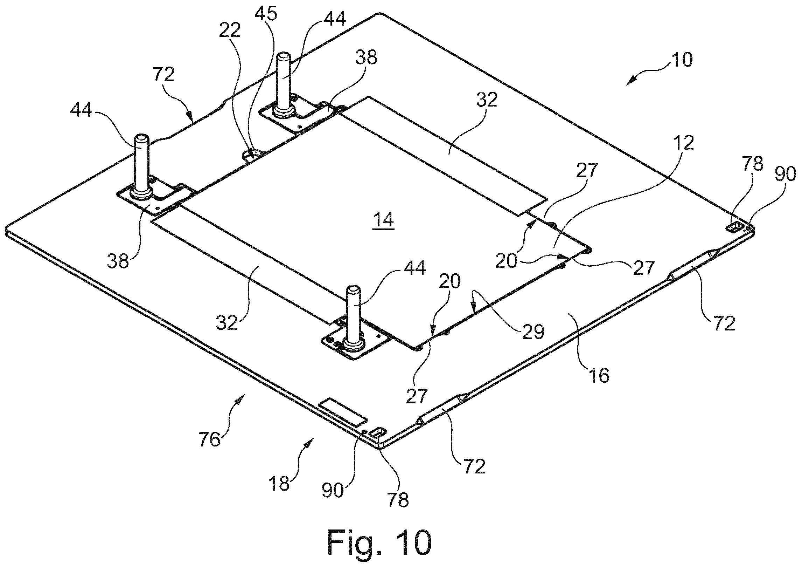

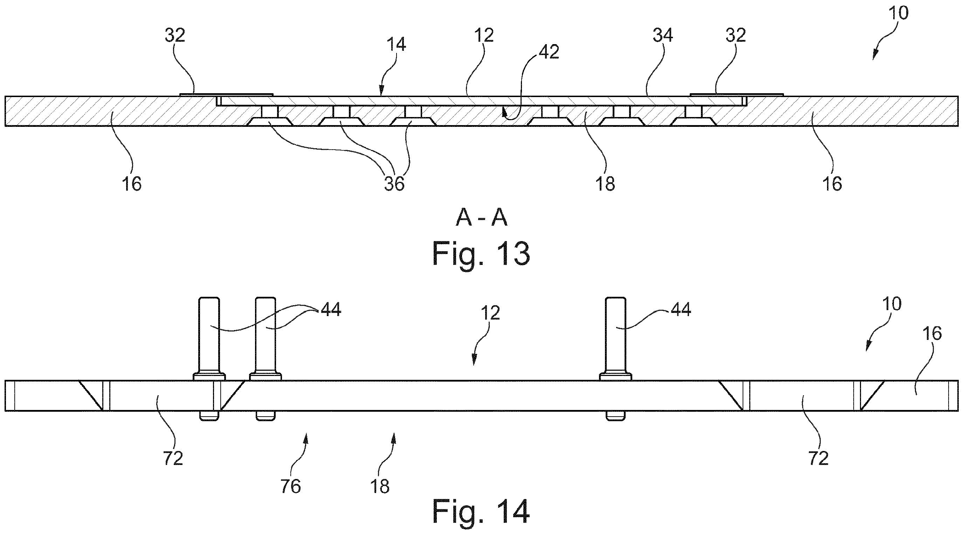

Die Federvorrichtungen 38 können insbesondere werkzeugbasiert spannbar und/oder lösbar sein. Insbesondere können die Federvorrichtungen 38 ausschließlich werkzeugbasiert spannbar und/oder lösbar sein. Eine schematische Darstellung der zum Spannen und/oder Lösen einzusetzenden Werkzeuge 44 ist den Figuren 10 sowie 14 zu entnehmen.

Ferner kann die Tragstruktur 16 eine Griffmulde 45 aufweisen, über die eine Seitenfläche 40 des Druckbetts in einer in der Einlegekavität 22 positionierten Stellung manuell kontaktierbar ist. Die Griffmulde 45 kann dazu dimensioniert sein, dass eine Bedienperson zumindest durch einen Finger eine seitliche Kontaktierung des Druckbetts 12 in einer in der Einlegekavität 22 positionierten Stellung des Druckbetts vornehmen kann. Eine solche Griffmulde 45 vereinfacht damit die manuelle Handhabung des Druckbetts 12, insbesondere zum Einlegen oder Entfernen des Druckbetts 12 in die oder aus der Einlegekavität 22. Die Griffmulde 45 kann in vorteilhafter Weise als Einbuchtung in einer Seitenwand 26 der Einlegekavität 22 ausgebildet sein.

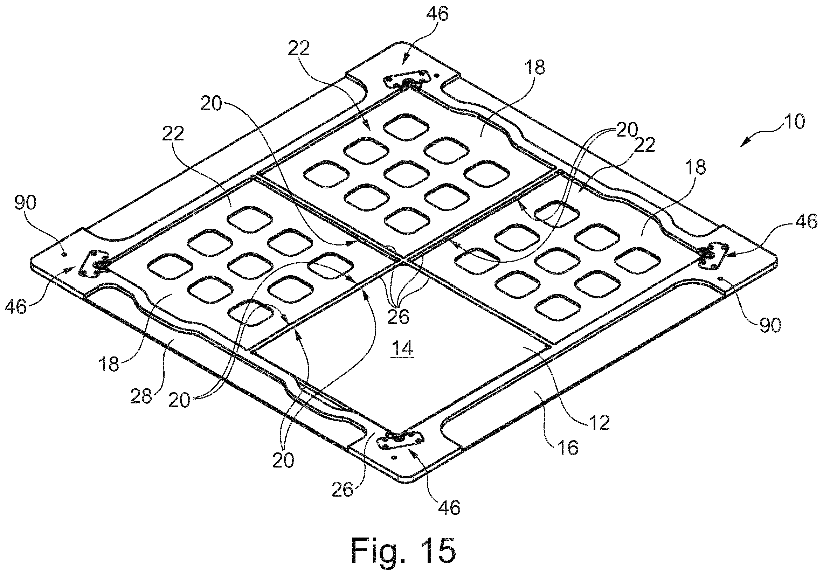

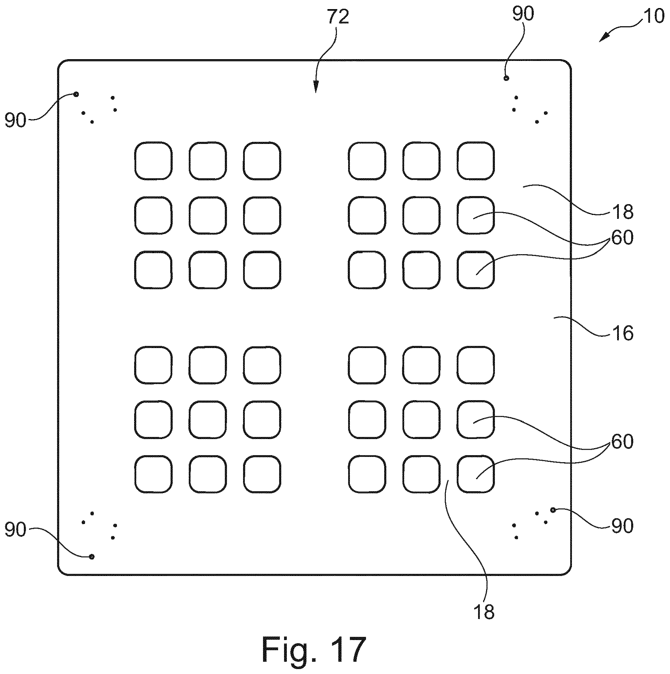

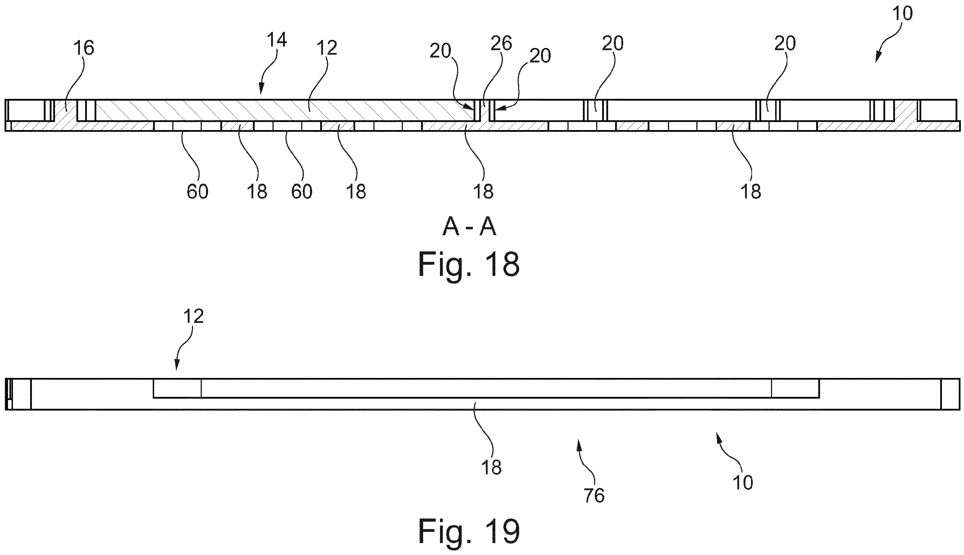

Die Figuren 15 bis 20 zeigen einen Werkstückträger 10 gemäß einem noch weiteren Ausführungsbeispiel der vorliegenden Erfindung. In dem Ausführungsbeispiel gemäß Figuren 15 bis 20 ist die Tragstruktur 16 zur Aufnahme mehrerer Druckbetten 12 ausgebildet. Insbesondere weist die Tragstruktur 16 mehrere Einlegekavitäten 22 für mehrere Druckbetten 12 auf, wobei in jeder Einlegekavität 22 ein Druckbett 12 eingelassen und/oder befestigt sein kann.

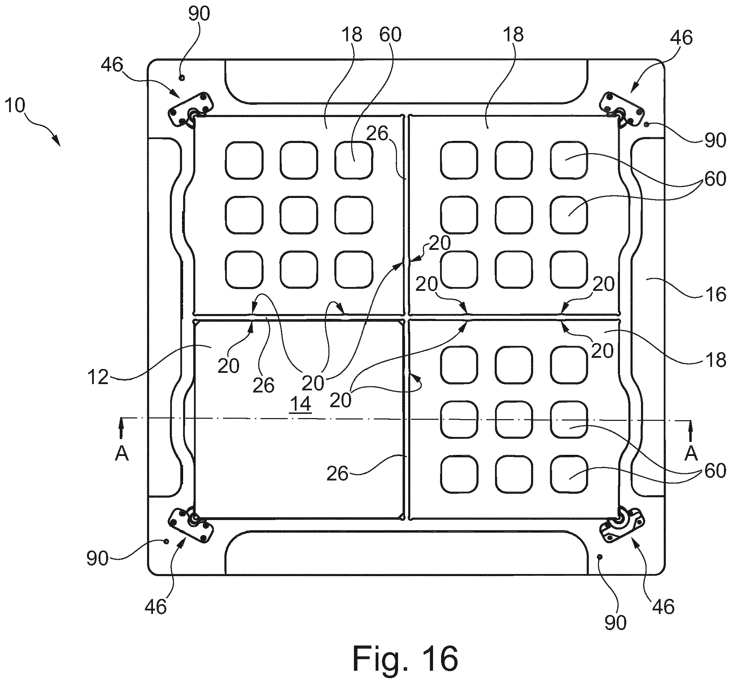

In den Figuren 15 und 16 ist jeweils nur ein Druckbett 12 dargestellt, wobei die drei weiteren Einlegekavitäten 22 ohne darin angeordnetem Druckbett 12 dargestellt sind. Es versteht sich, dass in jeder Einlegekavität 22 ein einzelnes Druckbett 12 angeordnet und befestigt werden kann, sodass an der Tragstruktur 16 insgesamt mehrere voneinander gesondert ausgebildete Druckbetten 12 angeordnet und/oder befestigt werden können, insbesondere insgesamt vier gesondert ausgebildete Druckbetten 12. Jede der Einlegekavitäten 22 ist zumindest abschnittsweise durch einen Tragboden 18 der Tragstruktur 16 begrenzt. Ebenso sind Seitenwände 26 vorgesehen, durch die die Einlegekavitäten 22 begrenzt werden. Die durch die Mitte der Tragstruktur 16 verlaufenden Seitenwände 26 können jeweils zwei benachbarte Einlegekavitäten 22 zueinander begrenzen.

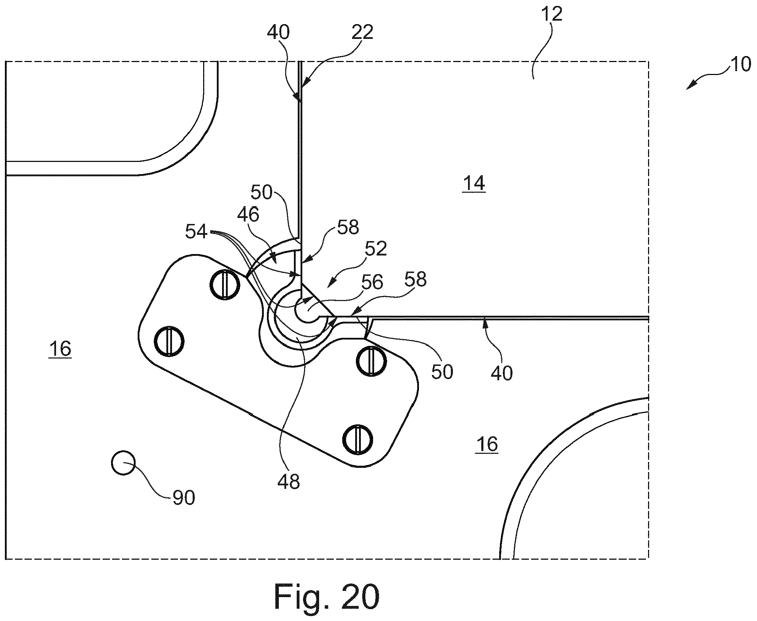

Auch in der Ausführungsform gemäß Figuren 15 bis 20 ist das jeweilige Druckbett 12 durch wenigstens eine Federvorrichtung 46 an der Tragstruktur 16 und/oder innerhalb der Einlegekavität 22 festgeklemmt, insbesondere seitlich gegen zumindest einen Anschlag 20 beziehungsweise gegen eine Seitenwand 26 der jeweiligen Einlegekavität 22 und/oder gegen einen Seitenvorsprung 27 einer Seitenwand 26 der Einlegekavität 22 geklemmt und/oder gespannt. Die Federvorrichtung 46 kann dabei werkzeugfrei spannbar und/oder lösbar sein. Insbesondere kann die Federvorrichtung 46 ein Betätigungselement 48 aufweisen, wie in Figur 20 näher dargestellt, über das eine Bedienperson den eingespannten Zustand des Druckbetts 12 in der Einlegekavität 22 lösen kann. Hierzu kann das Betätigungselement 48 von dem Druckbett 12 wegbewegt und damit ein Eingriff an dem Druckbett 12 aufgehoben werden.

In einer Draufsicht auf das Druckbett 12 kann eine Spannkraft der Federvorrichtung 48 diagonal beziehungsweise schräg auf das jeweilige Druckbett 12 wirken und/oder diagonal beziehungsweise schräg durch das jeweilige Druckbett 12 hindurch verlaufen. Ein solcher in Draufsicht schräger Kraftverlauf durch das jeweilige Druckbett 12 kann insbesondere unter einem Winkel von mehr als 90° oder weniger als 90° relativ zu einer - in Draufsicht auf das Druckbett 12 - Seitenkante 50 des Druckbetts 12 verlaufen.

Hierzu kann, wie in den Figuren 15, 16 sowie 20 näher dargestellt, die jeweilige Federvorrichtung 46 seitlich auf einen Eckbereich 52 und/oder auf eine Eckfläche 54 des Druckbetts 12 wirken. Das Druckbett 12 kann zumindest einen abgeflachten Eckbereich 52 aufweisen, wie beispielhaft der Figur 20 entnommen werden kann. Ebenso kann die Federvorrichtung 46 beziehungsweise das Betätigungselement 48 eine Aussparung 56 für die kontaktfreie und/oder belastungsfreie Aufnahme einer - in Figur 20 nicht näher dargestellten - Ecke beziehungsweise Kante beziehungsweise Eckkante des Druckbetts 12 aufweisen.

Ferner kann die Federvorrichtung 46 gemäß Figur 20 zur Aufnahme eines abgeflachten Eckbereichs 52 beziehungsweise zur Aufnahme einer abgeflachten Ecckante des Druckbetts 12 ausgebildet sein. Hierzu kann die Federvorrichtung 46 beziehungsweise das Betätigungselement 48 eine zu einem abgeflachten Eckbereich 52 und/oder zu einer abgeflachten Eckkante korrespondierend geformte Kontaktfläche 58 aufweisen.

Im Sinne der vorliegenden Erfindung können Eckflächen 54 des Druckbetts 12 ecknahe Seitenflächenabschnitte des Druckbetts 12 sein, die zwischen der Oberseite 34 und der Unterseite 42 des Druckbetts 12 verlaufen und an eine Ecke oder Eckkante angrenzen. Abgeflachte Eckkanten beziehungsweise abgeflachten Kanten eines Eckbereichs 52 können ihrerseits eine Eckfläche 54 bilden, die zwischen zwei Seitenflächen 40 beziehungsweise zwischen zwei weiteren Eckflächen 54 des Druckbetts 12 und gleichzeitig zwischen einer Oberseite 34 und Unterseite 42 des Druckbetts 12 verlaufen.

Den Figuren 15, 16 sowie 17 kann ferner entnommen werden, dass der jeweilige Tragboden 18 Unterbrechungen 60 aufweisen kann. Unterhalb der jeweiligen Unterbrechungen 60 kann sich mithin ein Freiraum bilden. Bei einer Ausgestaltung mit derartigen Unterbrechungen liegt das jeweilige Druckbett 12 mithin nicht vollflächig auf, sondern zumindest im Bereich der jeweiligen Unterbrechungen 60 ist unterhalb des Druckbetts 12 ein Freiraum gebildet.

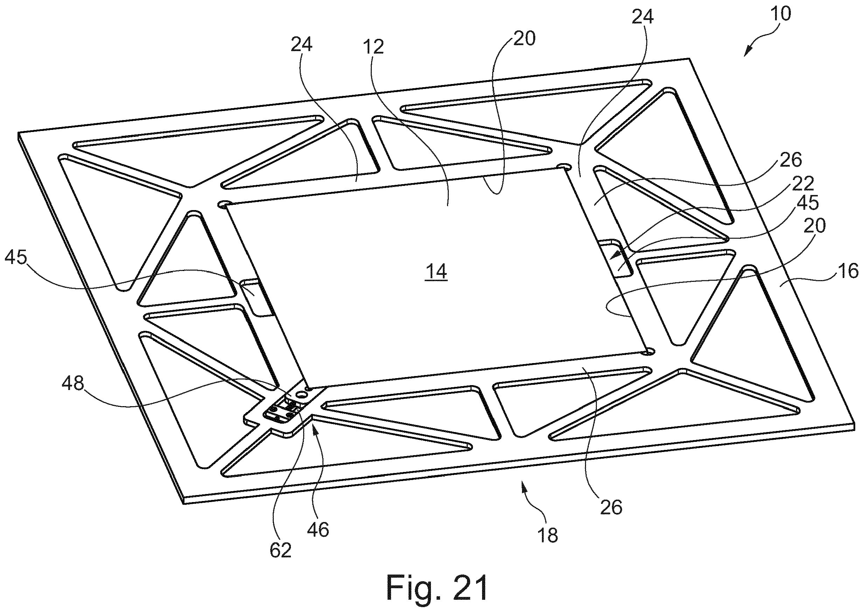

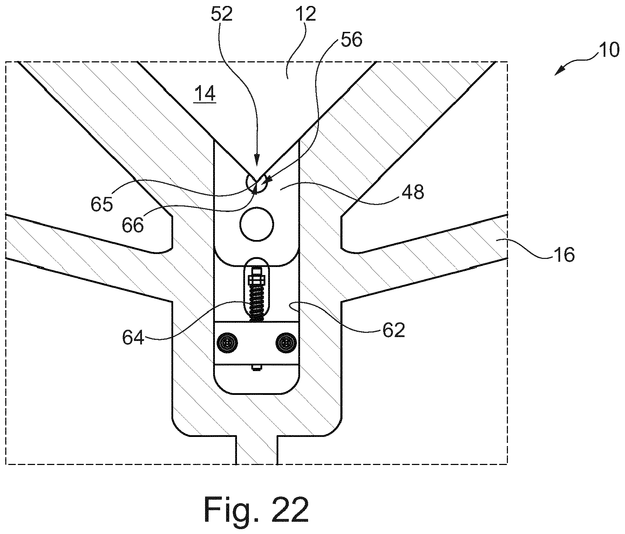

Die Figuren 21 und 22 zeigen eine weitere Ausführungsform eines Werkstückträgers 10 gemäß einem Ausführungsbeispiel der vorliegenden Erfindung. In dem Ausführungsbeispiel gemäß Figuren 21 und 22 ist die Tragstruktur 16 zur Aufnahme nur eines Druckbetts 12 ausgebildet. Mithin ist gemäß Figur 21 und 22 auch nur eine Einlegekavität 22 vorgesehen. In der Ausgestaltung gemäß Figuren 21 und 22 ist ebenfalls eine Federvorrichtung 46 vorgesehen, durch die das Druckbett 12 an der Tragstruktur 16 und/oder innerhalb der Einlegekavität 22 festgeklemmt werden kann.

Die Federvorrichtung 46 weist wiederum ein Betätigungselement 48 auf, welches als Eckschieber innerhalb einer Führung 62 der Tragstruktur 16 geführt ist. Das Betätigungselement 48 kann unter Vorspannung stehen. Eine derartige Vorspannung kann beispielsweise durch eine Schraubenfeder 64 erzeugt werden. Auch in dem Ausführungsbeispiel gemäß Figuren 21 und 22 kann die Federvorrichtung 46 beziehungsweise das Betätigungselement 48 der Federvorrichtung 46 mit einer Aussparung 56 versehen sein. Die Aussparung 56 kann wiederum zur kontaktfreien beziehungsweise belastungsfreien Aufnahme einer in Figur 22 näher dargestellten Ecke 65 beziehungsweise Kante 66 des Druckbetts 12 ausgebildet sein. Bei der Kante 66 kann es sich insbesondere um eine Eckkante oder Kante eines Eckbereichs 52 des Druckbetts 12 handeln.

Auch in der Ausgestaltung gemäß Figuren 22 und 21 kann die Federvorrichtung 46 werkzeugfrei spannbar und/oder lösbar sein. Mithin kann eine Bedienperson die Federvorrichtung 46 ohne Werkzeuge betätigen und somit das Druckbett 12 innerhalb der Einlegekavität 22 einspannen beziehungsweise festklemmen und auch wieder frei von Werkzeugeinsatz aus der Einlegekavität 22 der Tragstruktur 16 entnehmen.

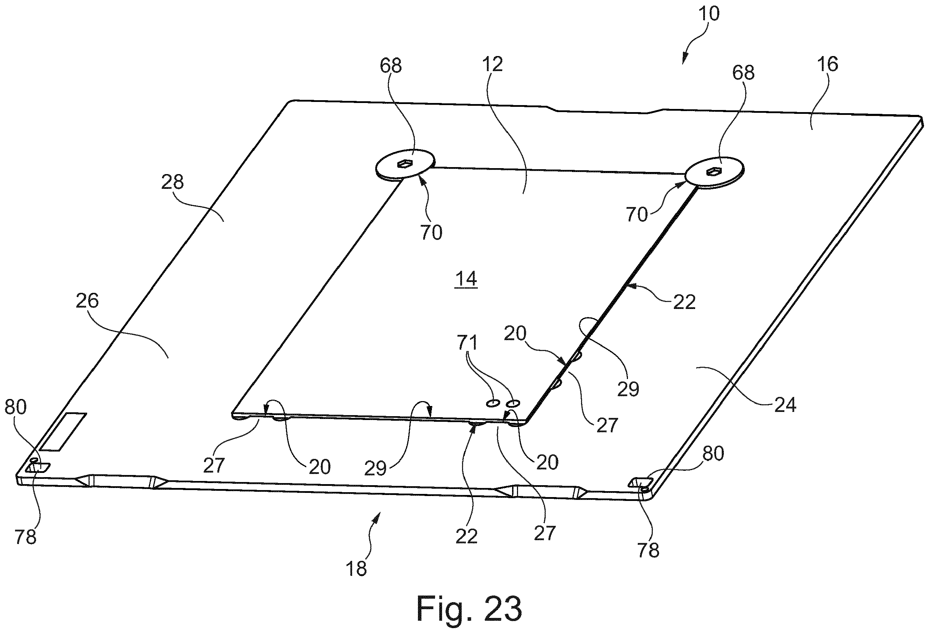

Figur 23 zeigt ein weiteres Ausführungsbeispiel eines Werkstückträgers gemäß der vorliegenden Erfindung. In dem Ausführungsbeispiel gemäß Figur 23 ist das Druckbett 12 durch wenigstens eine Niederhaltevorrichtung 68 an der Tragstruktur 16 und/oder innerhalb der Einlegekavität 22 niedergehalten und/oder festgeklemmt. Die Niederhaltevorrichtung 68 kann bevorzugt an der Tragstruktur 16 festgeschraubt sein. Dabei kann die Niederhaltevorrichtung 68 in einen korrespondierend zur Niederhaltevorrichtung 68 geformten Formabschnitt 70 des Druckbetts 12 eingreifen. Die Oberseite der Niederhaltevorrichtung 68 kann mithin bündig mit der Druckfläche 14 des Druckbetts 12 abschließen. Ebenso kann die Oberseite der Niederhaltevorrichtung 68 bündig mit Flächenabschnitten 24 auf der Oberseite der Tragstruktur 16 abschließen.

Die Niederhaltevorrichtung 68 kann beispielsweise als Niederhaltescheibe ausgebildet sein. Für das Spannen und/oder Lösen des Druckbetts 12 bei einer Ausgestaltung gemäß Figur 23 kann mithin ein Werkzeugeinsatz erforderlich sein. Das Einspannen und/oder Entnehmen des Druckbetts 12 aus der Einlegekavität 22 erfolgt bei dieser Ausgestaltung mithin werkzeugbasiert.

Die Niederhaltevorrichtung 68 kann in seitlichen Richtungen des Druckbetts 12 ein Loslager bilden.

Weiterhin kann das Druckbett 12 über eine Schraubverbindung 71 oder über mehrere Schraubverbindungen 71 an der Tragstruktur 16 befestigt sein. Die Schraubverbindung 71 kann in seitlichen Richtungen des Druckbetts ein Festlager bilden. Mithin kann das Druckbett 12 durch eine Fest-Loslager-Anordnung an der Tragstruktur 16 befestigt sein.

In den voranstehend beschrieben Ausführungsformen gemäß 1 bis 23 kann das Druckbett 12 zumindest abschnittsweise aus einem Werkstoff gebildet sein, der sich von einem Werkstoff der Tragstruktur 16 unterscheidet. Die Tragstruktur 16 kann zumindest abstandsweise aus einem Metallwerkstoff, insbesondere einem Leichtmetallwerkstoff, gebildet sein. Besonders bevorzugt kann die Tragstruktur 16 aus einem Aluminiumwerkstoff gebildet sein. Es kann sich bei der Tragstruktur 16 gemäß den voranstehend beschriebenen Ausführungsbeispielen insbesondere um ein Fräsbauteil handeln, besonders bevorzugt um ein Fräsbauteil aus einem Aluminiumwerkstoff.

Alternativ kann die Tragstruktur 16 auch aus einem Titanwerkstoff und/oder aus einem Stahlwerkstoff gebildet sein. Ferner besteht die Möglichkeit, dass die Tragstruktur 16 selbst aus mehreren Werkstoffen hergestellt ist. Beispielsweise kann der Tragboden 18 der Tragstruktur 16 zumindest abschnittsweise aus einem Werkstoff gebildet sein, der sich von einem Werkstoff zumindest eines weiteren Abschnitts der Tragstruktur 16, insbesondere von einem Werkstoff des Rahmenabschnitts 28 der Tragstruktur 16, unterscheidet.

Ebenso ist es möglich, dass zumindest ein Abschnitt des Tragbodens 18 und ein weiterer Abschnitt der Tragstruktur 16, insbesondere der Rahmenabschnitt 28 Tragstruktur 16, aus einem identischen Werkstoff gebildet sind.

Der Tragboden 18 kann zunächst abschnittsweise aus einem Stahlblech gebildet sein. Ein solcher Tragboden 18 aus Stahlblech kann in bevorzugter Weise mit einem Rahmenabschnitt 28 aus einem Aluminiumwerkstoff verbunden sein. Ebenso ist es möglich, dass der Tragboden 18 zumindest abschnittsweise aus einem Leichtmetallwerkstoff, insbesondere aus einem Aluminiumwerkstoff und/oder aus einem Titanwerkstoff, gebildet ist. In diesem Fall kann der Tragboden 18 in vorteilhafter Weise aus einem identischen Werkstoff gebildet sein wie der Rahmenabschnitt 28 und/oder einstückig mit dem Rahmenabschnitt 28 ausgebildet sein.

Das Druckbett 12 kann zumindest abschnittweise aus einem Titanwerkstoff und/oder aus einem Glaswerkstoff und/oder aus einem Stahlwerkstoff, insbesondere einem Stahlblech und/oder aus einem magnetischen Stahl, gebildet sein. Ebenso ist es möglich, dass das Druckbett 12 zumindest abschnittsweise aus einem keramischen Werkstoff und/oder aus einem gesinterten Werkstoff gebildet ist.

Bei den voranstehend beschriebenen Ausführungsformen gemäß Figuren 1 bis 23 kann das Druckbett 12 zerstörungsfrei von der Tragstruktur 16 lösbar sein beziehungsweise aus der jeweiligen Einlegekavität 22 entfernbar sein. In den Ausführungsformen gemäß Figuren 1 bis 8 sowie 15 bis 22 ist das Druckbett 12 zudem werkzeugfrei von der Tragstruktur 16 lösbar beziehungsweise aus der jeweiligen Einlegekavität 22 heraus entfernbar. Eine solche werkzeugfreie Entfernung beziehungsweise ein solches werkzeugfreies Lösen kann ausschließlich durch manuelle Handhabung und/oder Betätigung erfolgen. Demgegenüber ist bei den Ausführungsformen gemäß Figuren 9 bis 14 sowie 23 eine werkzeugbasierte Lösbarkeit beziehungsweise Entfernbarkeit des Druckbetts 12 von der Tragstruktur 16 gegeben.

Die Befestigung des Druckbetts 12 an der Tragstruktur 16 kann durch eine schwimmende Lagerung an der Tragstruktur 16 und/oder innerhalb der Einlegekavität 22 vorgesehen sein. Eine solche schwimmende Lagerung kann insbesondere zum Ausgleich von temperaturbedingtem Ausdehnungsverhalten relativ zur Tragstruktur 16 vorgesehen sein. Alternativ kann das Druckbett 12 auch spielfrei oder im Wesentlichen spielfrei lagernd an der jeweiligen Tragstruktur 16 und/oder innerhalb der Einlegekavität 22 befestigt sein.

Soweit hier von einem Ausgleich von temperaturbedingtem Ausdehnungsverhalten die Rede ist, soll das Ausdehnungsverhalten in seitlichen Richtungen gemeint sein, also entlang einer durch die Druckfläche 14 gebildete Ebene.

Die voranstehend beschriebenen Werkstückträger 10 gemäß den Figuren 1 bis 23, insbesondere die Tragstruktur 16 gemeinsam mit dem daran befestigten Druckbett 12, können zur temporären Positionierung innerhalb einer nachfolgend noch näher zu beschreibenden Druckeinrichtung beziehungsweise auch zur temporären Befestigung und/oder zum temporären Festklemmen an einem ebenfalls nachfolgend noch näher zu beschreibenden Förderfahrzeug einer 3D-Siebdruckanlage ausgebildet sein.

Die Tragstruktur 16 kann für die Fixierung und/oder für das Festklemmen innerhalb eines Förderfahrzeugs vordefinierte Kontaktflächen 72 aufweisen. Die vordefinierten Kontaktflächen 72 eignen sich insbesondere für die Einspannung in einer Werkstückträgerlagerung eines Förderfahrzeugs. In besonders bevorzugter Weise kann die Tragstruktur 16 mehr als zwei beziehungsweise mehr als drei oder drei vordefinierte Kontaktflächen 72 für die Einspannung in einer Werkstückträgerlagerung aufweisen. Die Kontaktflächen 72 können an einer Außenumfangsfläche der Tragstruktur 16 beziehungsweise des Rahmenabschnitts 28 der Tragstruktur 16 ausgebildet sein. Bevorzugt können zumindest zwei Kontaktflächen 72 auf gegenüberliegenden Seiten der Tragstruktur 16 ausgebildet sein. Ebenso können bevorzugt zumindest zwei Kontaktflächen 72 auf derselben Seite der Tragstruktur 16 ausgebildet sein. Dabei können die vordefinierten Kontaktflächen 72 gegenüber angrenzenden Abschnitten der Außenumfangsfläche 74 geneigt ausgebildet sein. An derart geneigte Kontaktflächen 72 können korrespondierend geformte Kontaktflächen der Werkstückträgerlagerung des jeweiligen Förderfahrzeugs zur Anlage gebracht werden und eine sichere Fixierung des Werkstückträgers 10 gewährleisten.

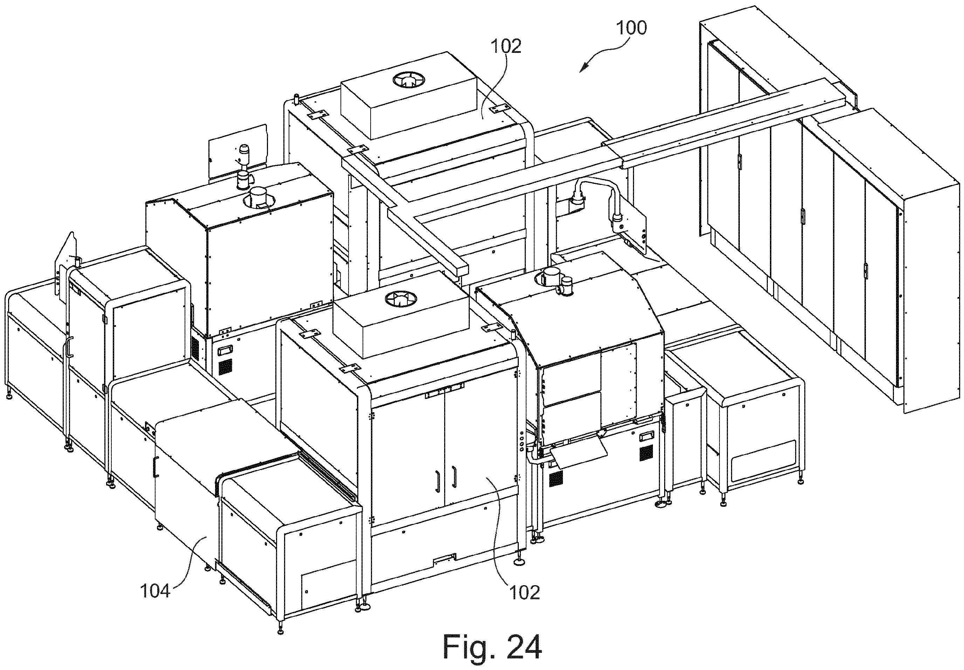

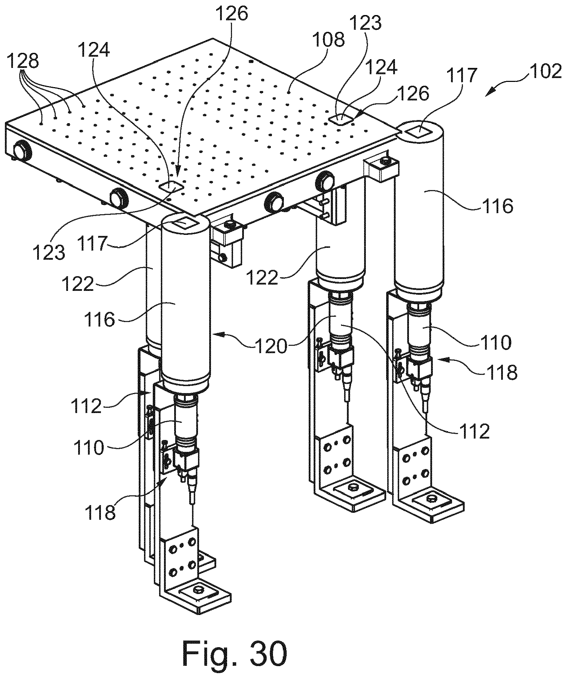

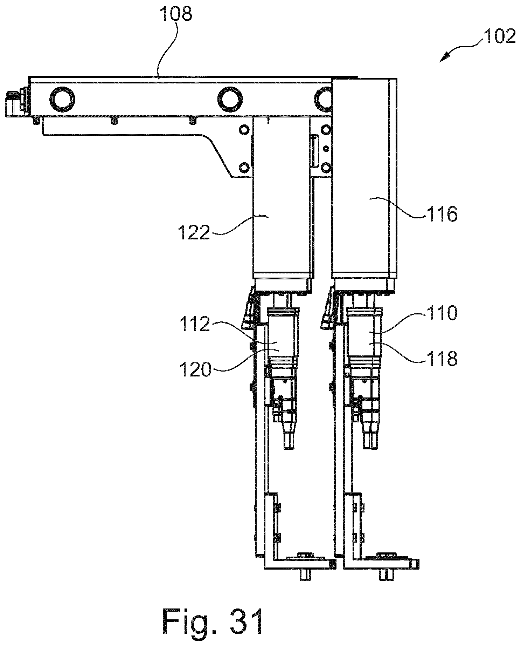

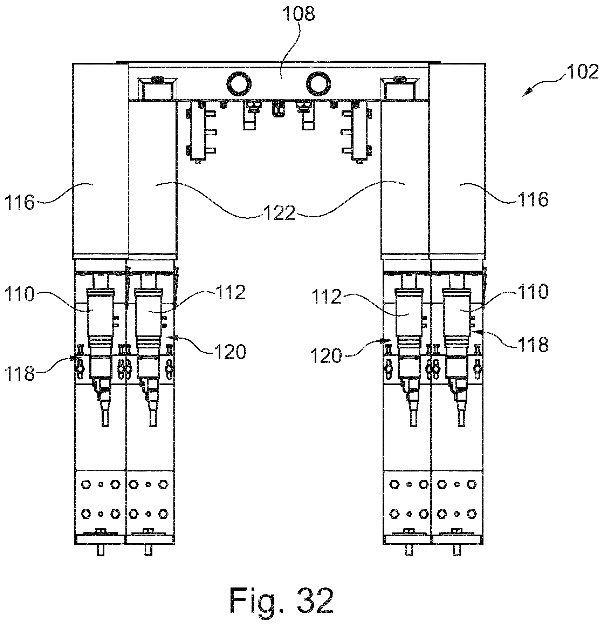

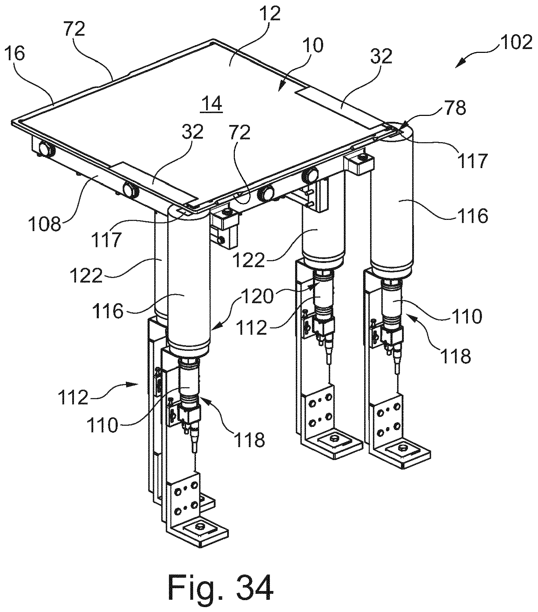

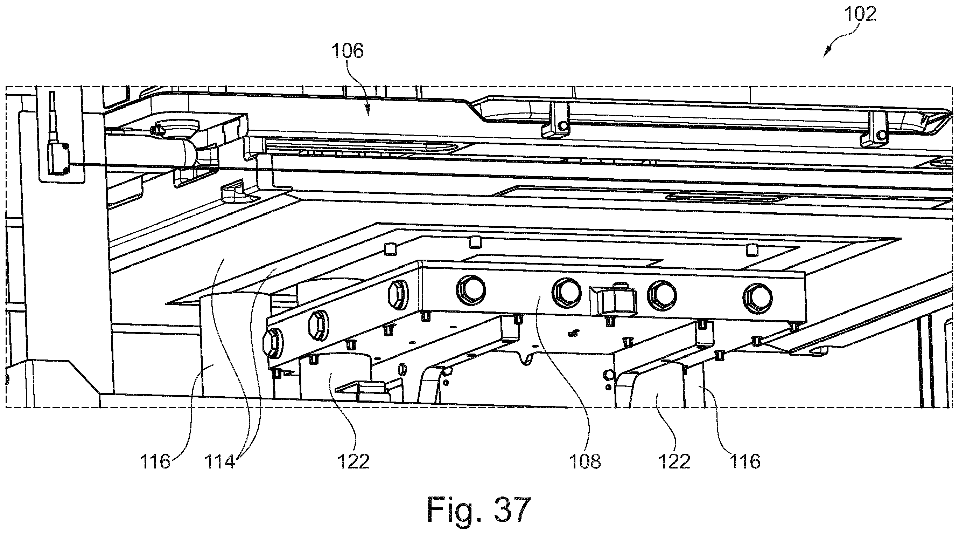

Es wird nachfolgend Bezug genommen auf die Figuren 24 bis 37. Die Figuren 24 bis 29 zeigen verschiedene Ansichten einer erfindungsgemäßen Vorrichtung 100 zur Herstellung von hier nicht näher dargestellten dreidimensionalen Siebdruckwerkstücken. In den Figuren 30 bis 36 ist in unterschiedlichen Ansichten ein Teil einer Druckeinrichtung 102 einer Vorrichtung 100 zur Herstellung von dreidimensionalen Siebdruckwerkstücken dargestellt. Dabei ist in den Figuren 30 bis 33 die Druckeinrichtung 102 ohne darauf beziehungsweise darin angeordnetem Werkstückträger 10 gezeigt. In den Figuren 34 bis 36 ist die Druckeinrichtung 102 gemäß den Figuren 30 bis 33 mit darauf angeordnetem Werkstückträger 10 dargestellt. Figur 37 zeigt eine weitere perspektivische Ansicht einer Druckeinrichtung 102 ohne darauf angeordnetem Werkstückträger.

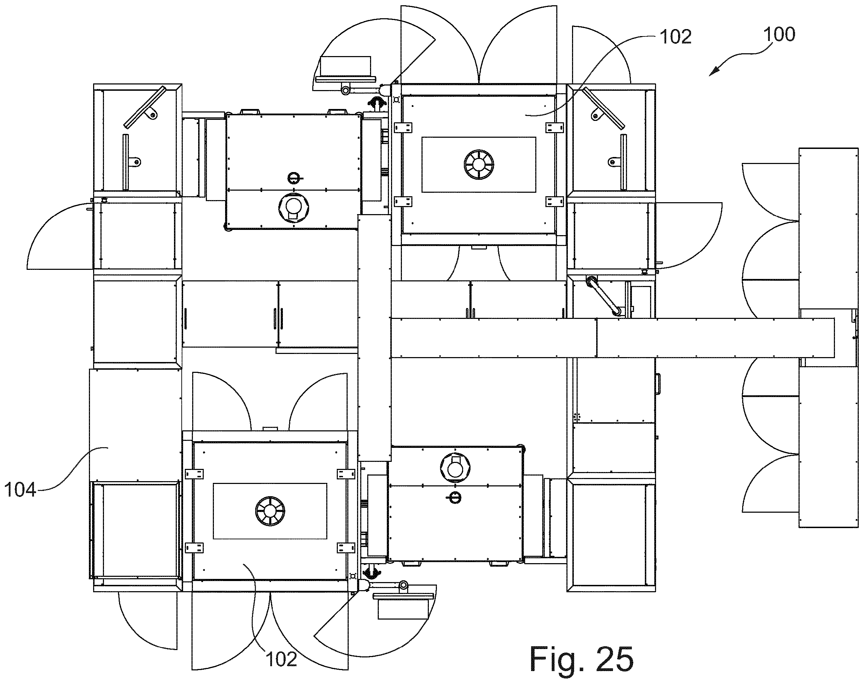

Im Einzelnen zeigt Figur 24 eine perspektivische Ansicht einer Vorrichtung 100 zur Herstellung von dreidimensionalen Siebdruckwerkstücken gemäß einer Ausführungsform der vorliegenden Erfindung. Figur 25 zeigt eine Draufsicht auf die Vorrichtung 100 von Figur 24. Bei der Vorrichtung 100 kann es sich insbesondere um eine 3D-Siebdruckanlage handeln, besonders bevorzugt um eine 3D-Siebdruckanlage für die Herstellung von Arzneimitteln beziehungsweise pharmazeutischen Erzeugnissen, insbesondere in Form von Tabletten.

Die Vorrichtung 100 weist wenigstens einer Druckeinrichtung 102 für die schichtweise Erzeugung zumindest eines hier nicht näher dargestellten Siebdruckwerkstücks in zumindest einem Druckvorgang oder mehreren Druckvorgängen auf. In den Ausführungsformen gemäß Figuren 24 und 25 weist die Vorrichtung 100 zwei Druckeinrichtungen 102 auf. Ferner weist die Vorrichtung 100 wenigstens eine Transporteinrichtung 104 für den automatisierten Transport zumindest eines Siebdruckwerkstücks und/oder eines Werkstückträgers 10 hin zur und/oder weg von der Druckeinrichtung 102 auf.

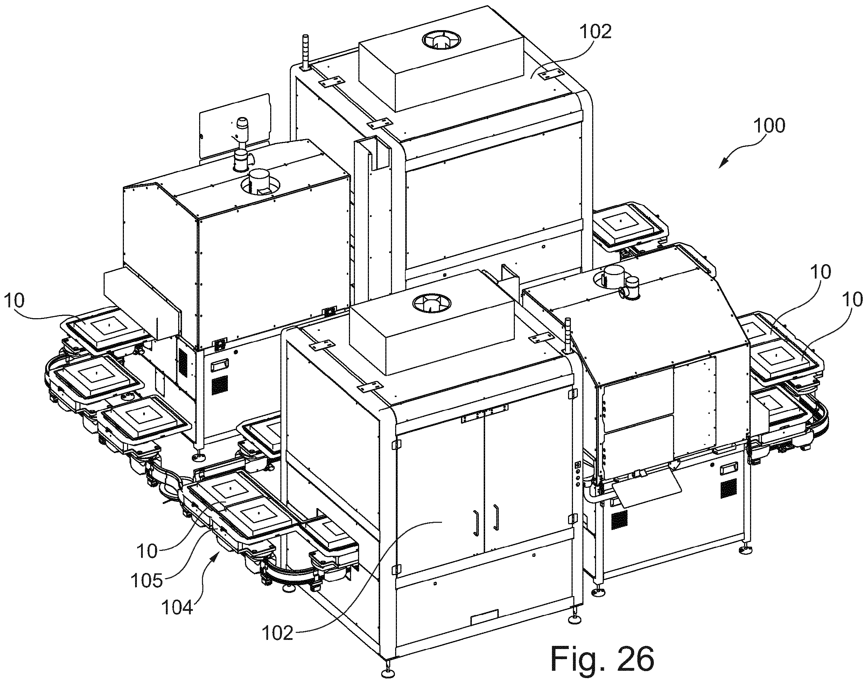

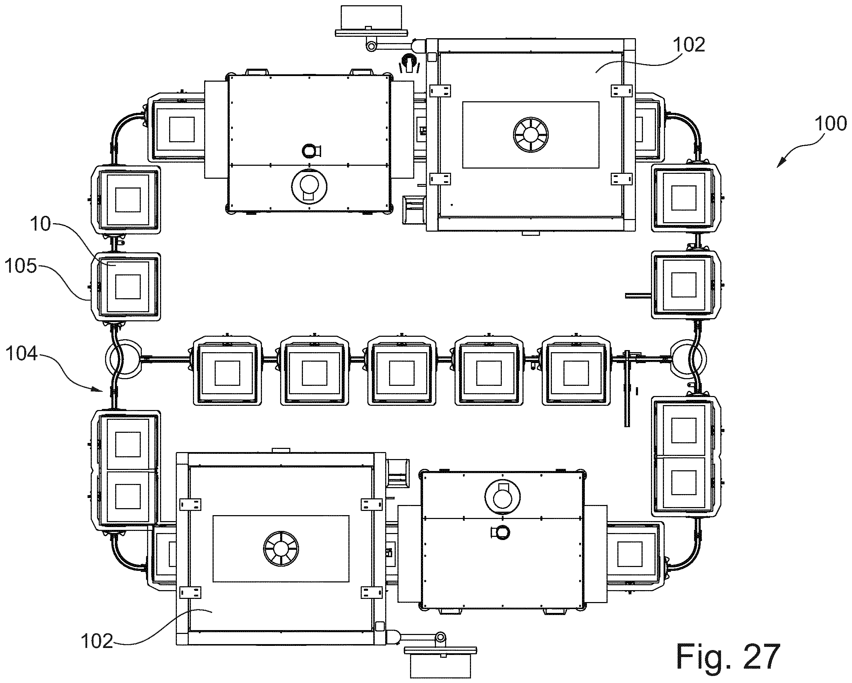

Figur 26 ist eine perspektivische Ansicht der Vorrichtung 100 gemäß Figur 24. Zur besseren Übersichtlichkeit und Veranschaulichung ist die Transporteinrichtung 104 in offenem Zustand, insbesondere ohne Einhausungen und ohne Gestelle, dargestellt. Figur 27 zeigt eine Draufsicht auf die Vorrichtung 100 gemäß Figur 3.

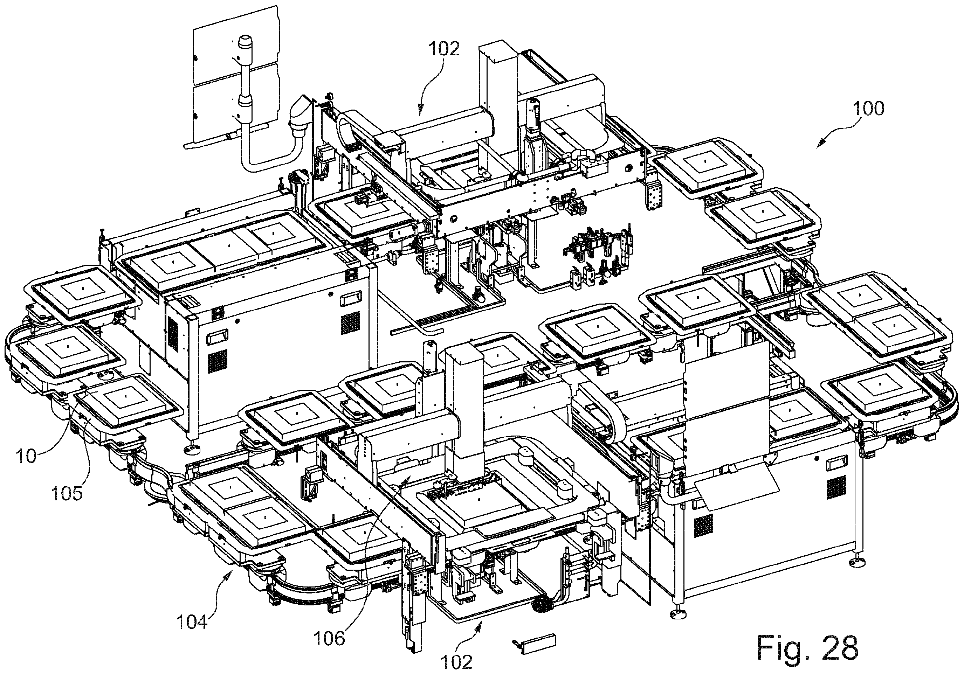

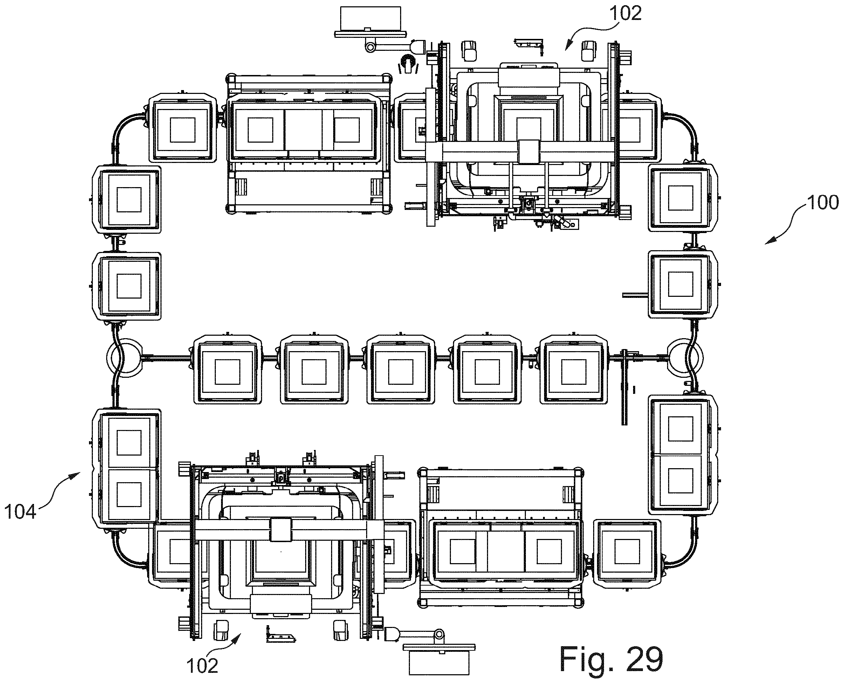

In Figur 28 ist eine perspektivische Ansicht der Vorrichtung 100 gemäß Figuren 24 bis 27 gezeigt, wobei zur besseren Übersichtlichkeit und Veranschaulichung die Druckeinrichtungen 102 in offenem Zustand, insbesondere ohne Einhausungen, dargestellt sind. Figur 29 zeigt eine Draufsicht auf die Vorrichtung 100 gemäß Figur 28.

Die Transporteinrichtung 104 kann wenigstens eine Transportschiene sowie ein auf der Transportschiene beweglich angeordnetes Förderfahrzeug 105 für zumindest einen Werkstückträger 10 gemäß der vorliegenden Erfindung aufweisen.

In den Figuren 30 bis 36 ist lediglich ein Teil der Druckeinrichtung 102 aus den Figuren 24 bis 29 gezeigt. Die Druckeinrichtung 102 weist ein Druckoberwerk 106 - wie in Figuren 28 und 37 gezeigt - sowie auch eine Drucktischplatte 108 auf, auf der ein Werkstückträger 10 zur Durchführung eines Druckvorgangs temporär positionierbar ist. Das Druckoberwerk kann ein Drucksieb 114 aufweisen, wie in Figur 37 zu sehen.

Die Anordnung eines Werkstückträgers 10 auf der Drucktischplatte 108 kann der Figur 34 entnommen werden. Ferner ist in den Figuren 30 bis 35 auch eine Lageerfassungseinrichtung 110 gezeigt. Die Lageerfassungseinrichtung 110 kann ausgebildet und/oder eingerichtet sein für die Lageerfassung des Druckbetts 12 eines auf der Drucktischplatte 108 positionierten beziehungsweise durch die Drucktischplatte 108 unterseitig kontaktierten Werkstückträgers 10, worauf nachfolgend noch im Einzelnen eingegangen wird.

Gemäß der Darstellung in den Figuren 30 bis 34 kann die Druckeinrichtung 102 auch mit einer Lageerfassungseinrichtung 112 für ein Drucksieb 114 ausgestattet sein. Die Lageerfassungseinrichtung 112 kann darüber hinaus auch zur Lageerfassung eines Druckbetts 12 eines auf dem Drucktisch 108 angeordneten Werkstückträgers 10 ausgebildet und/oder eingerichtet sein.

Weitere Bestandteile der Druckeinrichtung 102 sind in den Figuren 30 bis 35 aus Gründen der Übersichtlichkeit nicht näher dargestellt.

Für eine hier in Rede stehende Lageerfassung durch eine Lageerfassungseinrichtung 110 und/oder 112 kann bei einem Werkstückträger 10 gemäß der vorliegenden Erfindung die Position und/oder Ausrichtung des Druckbetts 12 ausgehend von einer von dem Druckbett 12 abgewandten Seite 76 der Tragstruktur 18 erfassbar sein. Bei der von dem Druckbett 12 abgewandten Seite 76 der Tragstruktur 18 handelt es sich um eine Unterseite der Tragstruktur 18.

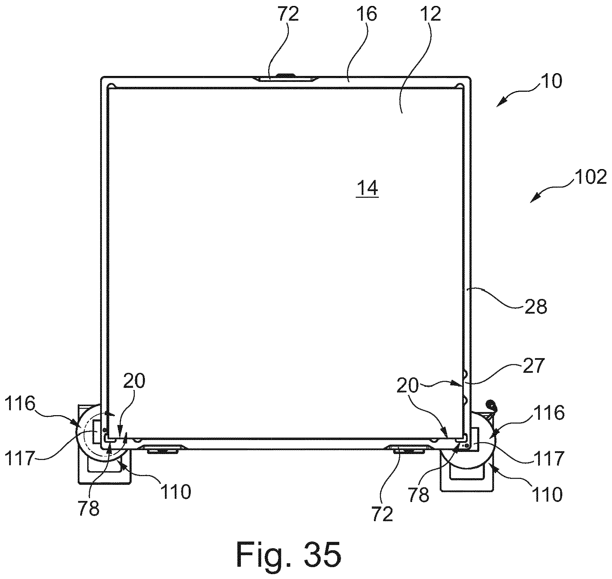

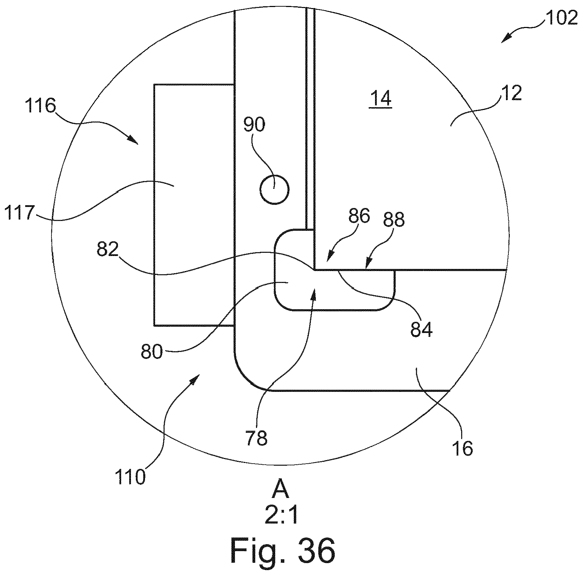

Wie in den Ausführungsbeispielen des Werkstückträgers 10 gemäß den Figuren 1 und 3 kann die Tragstruktur 16 hierzu zumindest einen Sichtbereich 78 aufweisen. Die Position und/oder Ausrichtung des Druckbetts 12 kann zumindest durch einen Sichtbereich 78 der Tragstruktur 16 hindurch optisch erfassbar sein. Ein solcher Sichtbereich 78 der Tragstruktur 16 kann ferner der Figur 35 sowie auch der Detailansicht in Figur 36 näher entnommen werden.

Der Sichtbereich 78 kann in besonders bevorzugter Weise als Sichtöffnung 80 ausgebildet sein. Ebenso ist es möglich, dass der Sichtbereich 78 zumindest abschnittsweise aus einem transparenten und/oder transluzenten Werkstoff gebildet ist. Angrenzend an den Sichtbereich 78 kann die Tragstruktur 16 zumindest abschnittsweise durch einen lichtundurchlässigen Werkstoff gebildet sein. Bei einem Werkstückträger 10, wie beispielsweise in den Figuren 1, 3 sowie 35 und 36 gezeigt, kann die Tragstruktur 16 eine Mehrzahl voneinander unabhängig ausgebildeter Sichtbereiche 78 aufweisen, insbesondere zwei Sichtbereiche 78, zwischen denen die Tragstruktur 16 zumindest abschnittsweise aus einem lichtundurchlässigen Werkstoff ausgebildet ist.

Zumindest eine Ecke 82 und/oder Kante 84 des Druckbetts 12 kann durch einen Sichtbereich 78 der Tragstruktur 16 hindurch optisch erfassbar sein. Dabei kann der zumindest eine Sichtbereich 78 der Tragstruktur 16 in Draufsicht - wie in den Figuren 35 und 36 gezeigt - durch einen Eckbereich 86 und/oder Kantenbereich 88 des Druckbetts 12 abschnittsweise überdeckt sein. Durch eine derartige abschnittsweise Überdeckung kann eine optische Erfassung der jeweiligen Ecke 82 beziehungsweise Kante 84 oder des Konturverlaufs des Druckbetts 12 gut erfasst werden. Zu einer abschnittsweisen beziehungsweise unvollständigen Überdeckung des Sichtbereichs 78 kann bei optischer Erfassung nämlich differenziert werden zwischen Bereichen, die durch das Druckbett 12 überdeckt sind und solchen Bereichen, die freibleibend und damit nicht überdeckt sind. Es ergibt sich somit eine hohe Erfassungsgüte und damit eine genaue Lageerfassung des Druckbetts 12.

Eine unmittelbare optische Erfassung des Druckbetts 12 durch eine Lageerfassungseinrichtung 110 und/oder 112 ist insbesondere bei einer schwimmenden Lagerung des Druckbetts 12 auf der Tragstruktur 16 von Vorteil. Verschiebungen beziehungsweise temperaturbedingte Ausdehnungen des Druckbetts 12 relativ zur Tragstruktur 16 haben bei einer unmittelbaren optischen Erfassung des Druckbetts 12 keinen Einfluss auf die Erfassungsgenauigkeit.

Gemäß einer noch weiter bevorzugten Ausgestaltung kann die Tragstruktur 16 und/oder das Druckbett 12 des Werkstückträgers 10 mit wenigstens einer Markierung 90 zur Lageerfassung versehen sein. Insbesondere kann die Tragstruktur 16 und/oder das Druckbett 12 eine Mehrzahl von Markierungen 90 zur Lageerfassung aufweisen. Bei einer solchen Markierung 90 kann es sich um eine optisch detektierbare Markierung und/oder Referenzbohrungen handeln. In den Ausführungsbeispielen gemäß Figuren 1 bis 23 ist jeweils eine Mehrzahl von Markierungen 90 in Form einer Referenzbohrungen in der Tragstruktur 16 vorgesehen. Ebenso kann eine solche als Referenzbohrung vorgesehene Markierung auch in dem Druckbett 12 vorgesehen sein, was hier jedoch nicht näher dargestellt ist.

Über die Markierung 90 kann die Position und/oder Ausrichtung der Tragstruktur 16 detektierbar sein. Die Markierung 90 kann in besonders bevorzugter Weise durch eine durchgehende Referenzbohrung in der Tragstruktur 16 vorgesehen sein. Auf diese Weise kann die Markierung 90 der Tragstruktur 16 auch auf einer von dem Druckbett 12 abgewandten Seite 76 der Tragstruktur 16 angeordnet und ausgehend von dieser Seite 76 detektierbar sein. Durch die Lageerfassung der Tragstruktur 16, insbesondere über eine Markierung 90, kann eine weiter verbesserte Prozesssicherheit erzielt werden. Insbesondere besteht die Möglichkeit, dass bei einer spielfreien Lagerung des Druckbetts 12 relativ zur Tragstruktur 16 über eine Lageerfassung der Tragstruktur 16 ein Rückschluss auf die Lage beziehungsweise Position und/oder Ausrichtung des Druckbetts 12 gezogen werden kann. In diesem Fall ist eine unmittelbare optische Erfassung des jeweiligen Druckbetts 12 zumindest nicht zwingend erforderlich, sondern eine Lageerfassung der Tragstruktur 16 und hierüber ein Rückschluss auf die Lage des Druckbetts 12 kann mit ausreichend hoher Genauigkeit erfolgen.

Gemäß einer weiter bevorzugten Ausgestaltung - hier nicht näher dargestellt - kann zumindest eine Markierung des Druckbetts 12 ausgehend von einer von dem Druckbett 12 abgewandten Seite 76 der Tragstruktur 16 optisch erfassbar sein. Beispielsweise kann eine Markierung des Druckbetts 12 auf einer der Tragstruktur 16 zugewandten Seite 76 des Druckbetts 12 angeordnet sein. Insbesondere kann eine Markierung des Druckbetts 12 in einem Sichtfeld 78 der Tragstruktur 16 beziehungsweise oberhalb eines Sichtfelds 78 der Tragstruktur 16 angeordnet sein, sodass diese ausgehend von einer von dem Druckbett 12 abgewandten Seite 76 der Tragstruktur 16 optisch erfassbar ist. Auf diese Weise lässt sich die unmittelbare optische Erfassung des Druckbetts 12 von einer von dem Druckbett 12 abgewandten Seite 76 der Tragstruktur 16 weiter verbessern.

Zusätzlich oder alternativ kann die Tragstruktur 16 zumindest abschnittsweise oder vollständig aus einem transparenten und/oder transluzenten Werkstoff gebildet sein. Beispielsweise kann die Tragstruktur 16 zumindest abschnittsweise aus einem Glas- und/oder Kunststoffwerkstoff bestehen. Dabei kann die Position und/oder Ausrichtung des Druckbetts 12 zumindest durch einen transparenten und/oder transluzenten Abschnitt der Tragstruktur 16 hindurch optisch erfassbar sein.

Nachfolgend wird unter Bezugnahme auf die Figuren 30 bis 37 näher auf die Funktionsweise der Lageerfassungseinrichtungen 110 sowie 112 eingegangen. Wie voranstehend bereits erwähnt, ist in den Figuren 30 bis 33 ein Teil einer Druckeinrichtung 102 dargestellt, nämlich die Drucktischplatte 108 sowie die Lageerfassungseinrichtungen 110 und 112. Die übrigen Komponenten der Druckeinrichtung 102 sind in den Figuren 30 bis 36 aus Gründen der Übersichtlichkeit nicht näher dargestellt.

In den Fluren 30 bis 33 ist auf der Drucktischplatte 108 kein Werkstückträger angeordnet. Es versteht sich jedoch, dass ein Werkstückträger 10 gemäß einem Ausführungsbeispiel der vorliegenden Erfindung zur Durchführung eines Druckvorgangs temporär innerhalb der Druckeinrichtung 102, insbesondere auf der Drucktischplatte 108, positionierbar ist. Insbesondere kann der jeweilige Werkstückträger 10 unterseitig von der Drucktischplatte 108 kontaktierbar sein.

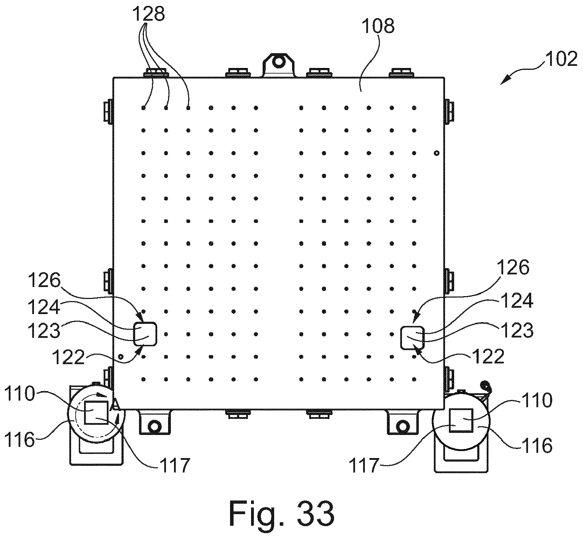

In den Figuren 33 bis 36 befindet sich auf der Drucktischplatte 108 ein Werkstückträger 10 gemäß einer Ausführungsform der vorliegenden Erfindung. Insbesondere ist in der perspektivischen Darstellung gemäß Figur 34 ein Werkstückträger 10 gemäß der Ausführungsform in Figur 3 vorgesehen, nämlich mit einer Fixierung des Druckbetts 12 mittels Klebebändern 32. In der Darstellung gemäß den Figuren 35 und 36 kann der Werkstückträger gemäß Figuren 1 und 2 ausgebildet sein.

Die Drucktischplatte 108 kann dazu ausgebildet sein, den Werkstückträger 10 zur Durchführung eines Druckvorgangs bei unterseitiger Kontaktierung zu fixieren.

Ferner ist die Lageerfassungseinrichtung 110 dazu eingerichtet, die Position und/oder Ausrichtung des Druckbetts 12 und/oder der Tragstruktur 16 des auf der Drucktischplatte 108 angeordneten Werkstückträgers 10 im Raum und/oder relativ zu einem Druckoberwerk 106 der Druckeinrichtung 102 - wie in Figur 28 gezeigt - und/oder relativ zu einem Drucksieb 114 - wie in Figur 37 näher dargestellt - zu erfassen. Zusätzlich oder alternativ kann die Lageerfassungseinrichtung 110 dazu eingerichtet sein, die Position und/oder Ausrichtung des Druckbetts 12 und/oder der Tragstruktur 16 eines auf der Drucktischplatte 108 angeordneten Werkstückträgers 10 relativ zu der darunter angeordneten Drucktischplatte 108 der Druckeinrichtung 102 zu erfassen. Ferner kann die Lageerfassungseinrichtung 110 auch dazu eingerichtet sein, die Position und/oder Ausrichtung des jeweiligen Druckbetts 12 relativ zu der darunter angeordneten Tragstruktur 16 des jeweiligen Werkstückträgers 10 zu erfassen.

Wie den Figuren 30 bis 36 zu entnehmen ist, kann bei einer Anordnung des Werkstückträgers 10 auf der Drucktischplatte 108 der Sichtbereich 78 innerhalb des hier zylindrisch angedeuteten Beleuchtungsfeldes 116 der Lageerfassungseinrichtung 110 angeordnet sein. Innerhalb des Beleuchtungsfeldes 116 kann ferner das Sichtfeld 117 der Lageerfassungseinrichtung 110 angeordnet sein.

Die Lageerfassungseinrichtung 110 kann wenigstens eine Kamera 118 beziehungsweise eine Mehrzahl von Kameras 118 aufweisen. Die wenigstens eine Kamera 118 kann bevorzugt unterhalb der Drucktischplatte 108 angeordnet sein. Bei dem Sichtfeld 117 kann es sich insbesondere um das Sichtfeld 117 der jeweiligen Kamera 118 handeln. Es können mehrere Kameras 118 gemeinsam eine Lageerfassungseinrichtung 110 bilden oder mehrere Lageerfassungseinrichtungen 110 werden jeweils durch eine Kamera 118 gebildet.

Wie den Figuren 35 bis 36 ferner entnommen werden kann, sind die Kameras 118 nicht nur unterhalb der Drucktischplatte 108 angeordnet, sondern auch seitlich an der Drucktischplatte 108 vorbei ausgerichtet. Auf diese Weise kann auf besonders platzsparende Weise das jeweilige Beleuchtungsfeld 116 und auch das jeweilige Sichtfeld 117 der Kamera 118 auf den korrespondierenden Sichtbereich 78 des Werkstückträgers 10 ausgerichtet sein.

Mithin kann bei einer Anordnung gemäß den Figuren 34 bis 36 über die jeweilige Kamera 118 im Sichtbereich 78 durch die Tragstruktur 16 unmittelbar das Druckbett 12 des Werkstückträgers 10 erfasst werden. Aufgrund der abschnittsweisen Überdeckung des Sichtbereichs 78 durch das Druckbett 12 lässt sich der jeweilige Eckbereich 86 des Druckbetts 12 durch die jeweilige Kamera 118 detektieren.

Wie der Figur 37 ferner entnommen werden kann, eignet sich eine Lageerfassungseinrichtung 110 auch zur Erfassung eines Drucksiebs 114 und/oder des Druckoberwerks 106. Das Beleuchtungsfeld 116 der Lageerfassungseinrichtung 110 beziehungsweise der Kamera 118 ist auch in der Figur 37 schematisch angedeutet.

Dabei kann mittels der Lageerfassungseinrichtung 110 auch durch die Tragstruktur 16 eines Werkstückträgers 10 hindurch eine optische Erfassung eines Drucksiebs 114 und/oder des Druckoberwerks 106 erfolgen. Insbesondere kann mittels der Lageerfassungseinrichtung 110 durch einen Sichtbereich 78 beziehungsweise durch ein Sichtfenster 80 der Tragstruktur 16 hindurch eine optische Erfassung eines Drucksiebs 114 und/oder des Druckoberwerks 106 vorgenommen werden. Dies gilt insbesondere für Ausführungsformen eines Werkstückträgers 10, gemäß denen der jeweilige Sichtbereich 78 der Tragstruktur 16 nicht durch das Druckbett 12 abgedeckt ist, wie beispielsweise in Figuren 4 bis 14.

Weiterhin kann auch die Lageerfassungseinrichtung 112 durch eine Kamera 120 gebildet sein. Ebenso kann die Lageerfassungseinrichtung 112 durch mehrere Kameras 120 gebildet sein beziehungsweise können mehrere Lageerfassungseinrichtungen 112 vorgesehen sein, die jeweils eine Kamera 120 aufweisen. Das Beleuchtungsfeld der Lageerfassungseinrichtung 112 beziehungsweise der Kamera 120 ist mit 122 gekennzeichnet. Zudem weist die Lageerfassungseinrichtung 112 beziehungsweise die Kamera 120 ein Sichtfeld 123 auf.

Die Kameras 120 sind unterhalb der Drucktischplatte 108 angeordnet und der Beleuchtungsfeld 122 sowie auch der Sichtbereich 123 der jeweiligen Lageerfassungseinrichtung 112 beziehungsweise Kamera 120 ist auf eine Sichtöffnung 124 in der Drucktischplatte 108 gerichtet. Mithin ist die Lageerfassungseinrichtung 112 zur Lageerfassung durch die Drucktischplatte 108 hindurch ausgebildet beziehungsweise angeordnet.

Die Lageerfassungseinrichtung 112 beziehungsweise die Kamera 120 ist mithin für eine Lageerfassung eines Druckbetts 12 geeignet, soweit die jeweilige Tragstruktur 16 bei Anordnung des Werkstückträgers 10 auf der Drucktischplatte 108 im Bereich der Sichtöffnungen 124 der Drucktischplatte 108 beispielsweise mit Sichtbereichen 78 oder zumindest einem Sichtbereich 78 ausgestattet ist. Dies kann beispielsweise dann von Vorteil sein, wenn es sich um ein verhältnismäßig kleines Druckbett 12 handelt, wie beispielsweise bei der Ausführungsform gemäß den Figuren 4 bis 14 gezeigt.

Ebenso ist es möglich, dass durch die Sichtöffnung 124 eine Markierung eines Druckbetts 12 durch die Lageerfassungseinrichtung 112 erfasst wird, was auch bei größeren Druckbetten 12 von Vorteil sein kann. Es ist mithin nicht zwingend erforderlich, dass die Sichtöffnung 124 der Drucktischplatte 108 abschnittsweise durch einen Eckbereich 86 und/oder Kantenbereich 88 eines Druckbetts 12 überdeckt wird. Vielmehr kann die Sichtöffnung 124 auch vollständig durch ein Druckbett 12 überdeckt sein und durch die Sichtöffnung 124 lässt sich eine hier nicht näher dargestellte Markierung eines Druckbetts 12 unterseitig erfassen.

Wie der Figur 37 ferner entnommen werden kann, eignet sich die Lageerfassungseinrichtung 112 beziehungsweise die Kamera 120 auch zur Lageerfassung eines Drucksiebs 114 beziehungsweise eines Druckoberwerks 106. Das Beleuchtungsfeld 122 der Lageerfassungseinrichtung 112 ist auch in Figur 37 gezeigt und verläuft im Bereich der Sichtöffnungen 124 durch die Drucktischplatte 108 hindurch.

Innerhalb des Beleuchtungsfelds 122 ist auch das jeweilige Sichtfeld 123 angeordnet. Durch die Lageerfassungseinrichtung 112 lassen sich insbesondere kleinere Drucksiebe 114 erfassen.

Bei der Sichtöffnung 124 der Drucktischplatte 108 kann es sich im Allgemeinen um einen Sichtbereich 126 der Drucktischplatte 108 handeln. Es versteht sich, dass auch der Sichtbereich 126 der Drucktischplatte 108 in Draufsicht durch einen Eckbereich 86 und/oder Kantenbereich 88 des Druckbetts 12 - hier nicht näher dargestellt - eines auf der Drucktischplatte 108 positionierten Werkstückträgers 10 abschnittsweise überdeckt sein kann.

Die Lageerfassungseinrichtung 112 kann dabei dazu eingerichtet sein, die Überdeckung zumindest eines Sichtbereichs 126 in der Drucktischplatte 108 durch das Druckbett 12 und/oder durch eine Tragstruktur 16 eines innerhalb der Druckeinrichtung 102 positionierten Werkstückträgers 10 zu erfassen.

Die Drucktischplatte kann ferner zur Fixierung eines Werkstückträgers 10 mittels Unterdrucks ausgebildet sein. Die Drucktischplatte 108 kann hierzu zumindest eine Ansaugöffnung 128 beziehungsweise eine Mehrzahl von Ansaugöffnungen 128 aufweisen. Durch die Ansaugöffnungen kann die Unterseite 76 eines Werkstückträgers 10 mit Unterdruck beaufschlagt werden. Insbesondere kann über die Ansaugöffnungen 128 eine Unterseite 42 eines Druckbetts 12 des Werkstückträgers 10 mit einem Unterdruck über zumindest eine Ansaugöffnung 36 der Tragstruktur 16 des Werkstückträgers 10 beaufschlagt werden. Eine Fixierung des Werkstückträgers 10 beziehungsweise des Druckbetts 12 über Unterdruck gewährleistet eine hohe Befestigungssicherheit und damit einen sicheren und präzisen Druckvorgang in fixierter Stellung des Werkstückträgers 10 beziehungsweise des Druckbetts 12.

In weiter bevorzugter Weise kann eine hier nicht näher dargestellte Stelleinrichtung der Drucktischplatte 108 und/oder eine hier ebenfalls nicht näher dargestellte Stelleinrichtung des Druckoberwerks 106 und/oder des Drucksiebs 114 dazu eingerichtet sein, eine Positions- und/oder Ausrichtungseinstellungen in Abhängigkeit einer Lageerfassung durch eine Lageerfassungseinrichtung 110 und/oder 112 vorzunehmen.

Ferner kann die Druckeinrichtung 102 zur Einstellung der Relativposition und/oder Relativausrichtung zwischen dem Druckbett 12 des jeweils auf der Drucktischplatte 108 positionierten Werkstückträgers 10 und dem Druckoberwerk 106 der Druckeinrichtung 102 und/oder dem Drucksieb 114 der Druckeinrichtung 102 in Abhängigkeit einer Lageerfassung des Druckbetts 12 durch die Lageerfassungseinrichtung 110 und/oder 112 eingerichtet sein.

Zusätzlich oder alternativ kann die Druckeinrichtung 102 zur Einstellung der Relativposition und/oder Relativausrichtung zwischen der Tragstruktur 16 des Werkstückträgers 10 und dem Drucksieb 114 in Abhängigkeit einer Lageerfassung des Druckbetts 12 und/oder der Tragstruktur 16 eines innerhalb der Druckeinrichtung 102 beziehungsweise auf der Drucktischplatte 108 positionierten Werkstückträgers 10 durch die Lageerfassungseinrichtung 110 und/oder 112 eingerichtet sein.

Die Druckeinrichtung 108 kann ferner zur Einstellung der Relativposition und/oder Relativausrichtung zwischen Drucktischplatte 108 und dem Druckoberwerk 106 und/oder zwischen der Drucktischplatte 108 und dem Drucksieb 114 eingerichtet sein, insbesondere in Abhängigkeit der Lageerfassung des Druckbetts 12 und/oder der Tragstruktur 16 eines innerhalb der Druckeinrichtung 102 positionierten Werkstückträgers 10 und/oder in Abhängigkeit der Lageerfassung des Drucksiebs 114 und/oder der Drucktischplatte 108 durch die Lageerfassungseinrichtung 110 und/oder 112.

Es versteht sich dabei, dass die Lageerfassungseinrichtung 110 und/oder 112 auch zur Lageerfassung der Drucktischplatte 108 ausgebildet sein kann. Weiterhin kann die Druckeinrichtung 102 dazu eingerichtet sein, im Anschluss an die Lageerfassung des Druckbetts 12 und/oder im Anschluss an die Einstellung der Relativposition und/oder der Relativausrichtung zwischen dem Druckbett 12 und dem Drucksieb 114 beziehungsweise dem Druckoberwerk 108 unmittelbar einen Druckvorgang vorzunehmen, insbesondere ohne weiteren Transport des jeweiligen Werkstückträgers 10.

Ein voranstehend beschriebener Werkstückträger 10 beziehungsweise auch eine Vorrichtung 100 zur Herstellung von dreidimensionalen Siebdruckwerkstücken 11 eignet sich insbesondere zur Durchführung eines Verfahrens zur Herstellung von dreidimensionalen Siebdruckwerkstücken 11. Hierzu wird in der Druckeinrichtung 102 zumindest ein Siebdruckwerkstück 11 in mehreren Druckvorgängen schichtweise erzeugt. Dabei wird zur Durchführung eines Druckvorgangs ein Werkstückträger 10 gemäß der voranstehenden Beschreibung temporär innerhalb der Druckeinrichtung 102 angeordnet und über eine Lageerfassungseinrichtung 110 und/oder 112 der Druckeinrichtung 102 wird eine Lageerfassung des Druckbetts 12 des Werkstückträgers 10 vorgenommen.

Durch ein solches Verfahren lassen sich insbesondere pharmazeutische Erzeugnisse beziehungsweise Arzneimittel, bevorzugt in Tablettenform, mit geringem Aufwand und einem hohen Maß an Flexibilität herstellen.

### BEZUGSZEICHENLISTE

- 10: Werkstückträger
- 11: Siebdruckwerkstück
- 12: Druckbett
- 14: Druckfläche
- 16: Tragstruktur
- 18: Tragboden
- 20: Anschlag
- 22: Einlegekavität
- 24: Flächenabschnitt
- 26: Seitenwand
- 27: Seitenvorsprung
- 28: Rahmenabschnitt
- 29: Freistellungsabschnitt
- 30: Magnetfolie
- 32: Klebeband
- 34: Oberseite des Druckbetts 12
- 36: Ansaugöffnung
- 38: Federvorrichtung
- 40: Seitenfläche des Druckbetts 12
- 42: Unterseite des Druckbetts 12
- 44: Werkzeug
- 45: Griffmulde
- 46: Federvorrichtung
- 48: Betätigungselement
- 50: Seitenkante des Druckbetts 12
- 52: Eckbereich des Druckbetts 12
- 54: Eckfläche
- 56: Ausnehmung
- 58: Kontaktfläche der Federvorrichtung 46
- 60: Unterbrechung des Tragbodens 18
- 62: Führung der Tragstruktur 16
- 64: Schraubenfeder
- 65: Ecke des Druckbetts 12
- 66: Eckkante des Druckbetts 12
- 68: Niederhalteelement
- 70: Formabschnitt
- 71: Schraubverbindung
- 72: Kontaktfläche der Tragstruktur 16
- 74: Außenumfangsfläche der Tragstruktur 16
- 76: Unterseite der Tragstruktur 16
- 78: Sichtbereich
- 80: Sichtöffnung
- 82: Ecke des Druckbetts 12
- 84: Kante des Druckbetts 12
- 86: Eckbereich des Druckbetts 12
- 88: Kantenbereich des Druckbetts 12
- 90: Markierung
- 100: Vorrichtung zur Herstellung von dreidimensionalen Siebdruckwerkstücken
- 102: Druckeinrichtung
- 104: Transporteinrichtung
- 105: Förderfahrzeug
- 106: Druckoberwerk
- 108: Drucktischplatte
- 110: Lageerfassungseinrichtung
- 112: Lageerfassungseinrichtung
- 114: Drucksieb
- 116: Beleuchtungsfeld
- 117: Sichtfeld
- 118: Kamera
- 120: Kamera
- 122: Beleuchtungsfeld
- 123: Sichtfeld
- 124: Sichtöffnung der Drucktischplatte 108
- 126: Sichtbereich der Drucktischplatte 108
- 128: Ansaugöffnung der Drucktischplatte 108

## Patentansprüche

1. Werkstückträger (10), insbesondere für die Herstellung dreidimensionaler Siebdruckwerkstücke, mit wenigstens einem Druckbett (12), das eine zu bedruckende Druckfläche (14) aufweist, und mit einer das Druckbett (12) tragenden und gesondert von dem Druckbett (12) ausgebildeten Tragstruktur (16), wobei die Tragstruktur (16) einen Tragboden (18) und zumindest einen Anschlag (20) für das Druckbett (12) aufweist, wobei das Druckbett (12) auf dem Tragboden (18) angeordnet ist und wobei das Druckbett (12) in der auf dem Tragboden (18) angeordneten Stellung in zumindest einer seitlichen Richtung an dem Anschlag (20) zur Anlage bringbar ist.

2. Werkstückträger (10) nach Anspruch 1, **dadurch gekennzeichnet, dass** das Druckbett (12) an der Tragstruktur (16) befestigt ist und/oder dass das Druckbett (12) in der auf dem Tragboden (18) angeordneten und an der Tragstruktur (16) befestigten Stellung in einer seitlichen Richtung an dem zumindest einen Anschlag (20) der Tragstruktur (16) anliegt.

3. Werkstückträger (10) nach einem der vorstehenden Ansprüche, **dadurch gekennzeichnet, dass** die Höhe des Anschlags (20) relativ zum Tragboden (18) in einer Dickenrichtung der Tragstruktur (16) und/oder in einer Dickenrichtung des Druckbetts (12) kleiner oder gleich der Dicke des Druckbetts (12) bemessen ist.

4. Werkstückträger (10) nach einem der vorstehenden Ansprüche, **dadurch gekennzeichnet, dass** die Tragstruktur (16) eine Einlegekavität (22) für das Druckbett (12) aufweist, wobei das Druckbett (12) zumindest abschnittsweise in der Einlegekavität (22) eingelassen ist.

5. Werkstückträger (10) nach einem der vorstehenden Ansprüche, **dadurch gekennzeichnet, dass** das Druckbett (12) zumindest abschnittsweise aus einem Werkstoff gebildet ist, der sich von einem Werkstoff der Tragstruktur (16) unterscheidet, und/oder dass das Druckbett (12) zumindest abschnittsweise aus einem Werkstoff mit einer Beschaffenheit und/oder Zusammensetzung gebildet ist, die sich unterscheidet von der Beschaffenheit und/oder Zusammensetzung eines Werkstoffs der Tragstruktur (16).

6. Werkstückträger (10) nach einem der vorstehenden Ansprüche, **dadurch gekennzeichnet, dass** das Druckbett (12) zerstörungsfrei und/oder werkzeugfrei von der Tragstruktur (16) lösbar ist und/oder dass das Druckbett (12) zerstörungsfrei und/oder werkzeugfrei, insbesondere ausschließlich durch manuelle Handhabung und/oder Betätigung, aus der Einlegekavität (22) heraus entfernbar ist.

7. Werkstückträger (10) nach einem der vorstehenden Ansprüche, **dadurch gekennzeichnet, dass** das Druckbett (12) schwimmend lagernd an der Tragstruktur (16) und/oder innerhalb der Einlegekavität (22) befestigt ist, insbesondere zum Ausgleich von temperaturbedingtem Ausdehnungsverhalten relativ zur Tragstruktur (16), und/oder dass das Druckbett (12) spielfrei oder im Wesentlichen spielfrei lagernd an der Tragstruktur (16) und/oder innerhalb der Einlegekavität (22) befestigt ist.

8. Werkstückträger (10) nach einem der vorstehenden Ansprüche, **dadurch gekennzeichnet, dass** das Druckbett (12) kraftschlüssig und/oder formschlüssig und/oder stoffschlüssig an der Tragstruktur (16) und/oder innerhalb der Einlegekavität (22) befestigt ist, insbesondere in einer in seitlicher Richtung an zumindest einem Anschlag (20) oder an mehreren Anschlägen (20) anliegenden Stellung.

9. Werkstückträger (10) nach einem der vorstehenden Ansprüche, **dadurch gekennzeichnet, dass** der Tragboden (18) zumindest eine durchgehende Ansaugöffnung (36), insbesondere eine Mehrzahl von Ansaugöffnungen (36), zur Beaufschlagung des Druckbetts (12) mit einem Unterdruck und/oder für das unterseitige Ansaugen des Druckbetts (12) für die temporäre Fixierung innerhalb einer Druckeinrichtung (102) einer 3D-Siebdruckanlage aufweist.

10. Werkstückträger (10) nach einem der vorstehenden Ansprüche, **dadurch gekennzeichnet, dass** zwischen dem Druckbett (12) und der Tragstruktur (16) eine Trennschicht, insbesondere eine als Isolierschicht ausgebildete Trennschicht, angeordnet ist und/oder dass die Trennschicht zur Vermeidung und/oder zur Verringerung der Wärmeübertragung zwischen dem Druckbett (12) und der Tragstruktur (16) angeordnet und/oder ausgebildet ist.

11. Werkstückträger (10) nach einem der vorstehenden Ansprüche, **dadurch gekennzeichnet, dass** der Tragboden (18) Unterbrechungen (60) und/oder Öffnungen aufweist und/oder dass der Tragboden (18) Stützstege für die abschnittsweise Stützung des Druckbetts (12) aufweist und/oder dass zwischen dem Tragboden (18) und dem Druckbett (12) und/oder auf einer dem Tragboden (18) zugewandten Unterseite (42) des Druckbetts (12) zumindest abschnittsweise ein Freiraum ausgebildet ist, insbesondere ein sich zwischen Stützstegen und/oder zwischen zumindest einem Stützsteg und einer Seitenwand26 () der Einlegekavität (22) erstreckender Freiraum und/oder zumindest einen durch eine Unterbrechung (60) des Tragbodens (18) definierten Freiraum.

12. Tragstruktur (16), insbesondere für einen Werkstückträger (10) nach einem der vorstehenden Ansprüche, mit einen Tragboden (18) zur Anordnung eines eine zu bedruckende Druckfläche (14) aufweisenden Druckbetts (12) und mit zumindest einem Anschlag (20) für ein auf dem Tragboden (18) angeordnetes Druckbett (12), wobei ein auf dem Tragboden (18) angeordnetes Druckbett (12) in zumindest einer seitlichen Richtung an dem Anschlag (20) zur Anlage bringbar ist.

13. Vorrichtung (100) zur Herstellung von dreidimensionalen Siebdruckwerkstücken, insbesondere 3D-Siebdruckanlage, mit einer Druckeinrichtung (102) für die schichtweise Erzeugung zumindest eines Siebdruckwerkstücks in mehreren Druckvorgängen und mit einer Transporteinrichtung (104) für den automatisierten Transport zumindest eines Werkstückträgers (10) gemäß einem dem vorstehenden Ansprüche 1 bis 11 hin zur und/oder weg von der Druckeinrichtung (102), wobei die Transporteinrichtung (104) bevorzugt wenigstens eine Transportschiene sowie ein auf der Transportschiene beweglich angeordnetes Förderfahrzeug (105) mit dem Werkstückträger (10) aufweist.

14. Verfahren zur Herstellung eines dreidimensionalen Siebdruckwerkstücks, insbesondere eines pharmazeutischen Erzeugnisses, bei dem mit einer Druckeinrichtung (102) zumindest ein Siebdruckwerkstück in mehreren Druckvorgängen schichtweise auf einem Werkstückträger (10) nach einem der vorstehenden Ansprüche 1 bis 11 erzeugt wird und bei dem mit einer Transporteinrichtung (104) der Werkstückträger (10) mit einem Siebdruckwerkstück automatisiert hin zur und/oder weg von der Druckeinrichtung (102) transportiert wird.

15. Pharmazeutisches Erzeugnis, insbesondere Tablette, hergestellt unter Verwendung eines Werkstückträgers (10) nach einem der vorstehenden Ansprüche 1 bis 11 und/oder mit einer Vorrichtung (100) nach Anspruch 13 und/oder mit einem Verfahren nach Anspruch 14.
